# FASCICULE DE BREVET EUROPEEN

(11) **EP 4 004 276 B1**
(45) Date de publication et mention de la délivrance du brevet: **03.04.2024**
(21) Numéro de dépôt: 20757634.9
(22) Date de dépôt: 22.07.2020
(51) Int. Cl.: D07B 7/02, D07B 3/00, D07B 1/06

(54) **PROCEDE DE SEPARATION ET DE REASSEMBLAGE**
VERFAHREN ZUM TRENNEN UND WIEDERZUSAMMENSETZEN
METHOD FOR SEPARATION AND REASSEMBLY

(30) Priorité: 25.07.2019 FR 1908427
(43) Date de publication de la demande: 01.06.2022
(73) Titulaire: COMPAGNIE GENERALE DES ETABLISSEMENTS MICHELIN, 63000 Clermont-Ferrand (FR)
(72) Inventeur: BARGUET, Henri, 63040 CLERMONT-FERRAND CEDEX 9 (FR); REIX, Olivier, 63040 CLERMONT-FERRAND CEDEX 9 (FR); PATAUT, Gaël, 63040 CLERMONT-FERRAND CEDEX 9 (FR)
(74) Mandataire: M.F.P. Michelin
(86) Numéro de dépôt international: PCT/FR2020/051336
(87) Numéro de publication internationale: WO 2021/014097

(56) Documents cités:
- WO-A1-2016/083265
- CN-A- 102 373 632

## Description

L'invention concerne un procédé et une installation de fabrication d'un assemblage final, un assemblage final obtenu par ce procédé ainsi qu'un pneumatique comprenant un tel assemblage final.

On connait de WO2016083265 et WO2016083267 un procédé et une installation de fabrication de premier et deuxième assemblages finaux. Ce procédé comprend une étape d'assemblage de plusieurs éléments filaires métalliques ensemble en une couche de plusieurs éléments filaires métalliques autour d'un noyau transitoire pour former un assemblage transitoire.

Puis, le procédé comprend une première étape de fractionnement de l'assemblage transitoire en :
- un premier assemblage fractionné constitué d'une couche constituée de plusieurs éléments filaires métalliques enroulés en hélice et issus de la couche de l'assemblage transitoire, et
- un ensemble fractionné comprenant plusieurs éléments filaires métalliques enroulés en hélice autour du noyau transitoire, ces éléments filaires métalliques étant issus de la couche de l'assemblage transitoire.

Puis le procédé comprend, une deuxième étape de fractionnement de l'ensemble fractionné en :
- un deuxième assemblage fractionné constitué d'une couche constituée des éléments filaires métalliques enroulés en hélice issus de la couche de l'ensemble fractionné, et
- le noyau transitoire.

A l'issue de ce procédé, chaque premier et deuxième assemblage fractionné forme un assemblage final duquel on a séparé le noyau transitoire. La séparation du noyau transitoire est rendue possible grâce à la séparation des éléments filaires métalliques de la couche de l'assemblage transitoire qui permet de ménager, lors de la première étape de fractionnement, un passage de sortie de l'ensemble fractionné comprenant le noyau transitoire, et lors de la deuxième étape de fractionnement, un passage de sortie du noyau transitoire.

Grâce au noyau transitoire, le procédé permet de préformer collectivement les éléments filaires métalliques en les appuyant sur le noyau transitoire afin de leur conférer à tous, les mêmes caractéristiques géométriques particulières, par exemple, un rayon de courbure et un diamètre d'hélice. L'utilisation d'un noyau transitoire permet ainsi une préformation sans utilisation d'outils mécaniques. Chaque assemblage final présente des propriétés mécaniques avantageuses, notamment des propriétés d'endurance en compression, ces propriétés pouvant être affinées en modifiant notamment le diamètre du noyau transitoire et l'angle d'hélice de chaque élément filaire métallique.

Néanmoins, lors de ce procédé, afin de ménager les passages de sortie pour le noyau transitoire et pour des caractéristiques géométriques données de chaque élément filaire métallique, on réduit nécessairement le nombre d'éléments filaires métalliques de la couche de chaque assemblage final. Cette réduction du nombre d'éléments filaires métalliques de la couche entraine une baisse de la masse linéique de chaque assemblage final et donc une baisse du renforcement que peut procurer l'assemblage final, notamment au sein d'un pneumatique. A l'inverse, si on souhaite conserver un renforcement élevé, il est nécessaire de partir d'un assemblage transitoire comprenant un nombre élevé d'éléments filaires métalliques ce qui ne permet pas d'obtenir toutes les caractéristiques géométriques souhaitées, ni les propriétés mécaniques désirées pour les assemblages finaux.

L'invention a pour but un procédé de fabrication d'un assemblage final au moyen d'une préformation collective de ces éléments filaires métalliques autour d'un noyau transitoire, n'empêchant pas, d'une part, de maintenir une masse linéique aussi élevée que possible et permettant, d'autre part, d'accéder à l'ensemble des caractéristiques géométriques souhaitées des éléments filaires métalliques.

A cet effet l'invention a pour objet un procédé de fabrication d'un assemblage final comprenant au moins une couche constituée de N'>1 éléments filaires métalliques enroulés en hélice, le procédé comprenant :
- une étape de fourniture d'un assemblage transitoire comprenant au moins une couche constituée de M'>1 éléments filaires métalliques enroulés en hélice autour d'un noyau transitoire,
- une étape de séparation de l'assemblage transitoire entre au moins:
   ∘ un premier assemblage fractionné comprenant au moins une couche constituée de M1'≥1 élément(s) filaire(s) métallique(s) enroulé(s) en hélice, le ou les M1' élément(s) filaire(s) métallique(s) étant issu(s) de la couche constituée de M'>1 éléments filaires métalliques de l'assemblage transitoire,
   ∘ un deuxième assemblage fractionné comprenant au moins une couche constituée de M2'>1 éléments filaires métalliques enroulés en hélice, les M2' éléments filaires métalliques étant issus de la couche constituée de M'>1 éléments filaires métalliques de l'assemblage transitoire,
   ∘ le noyau transitoire ou un ou plusieurs ensembles comprenant le noyau transitoire,
le procédé comprenant une étape de réassemblage d'au moins le premier assemblage fractionné avec le deuxième assemblage fractionné pour former la couche constituée de N' éléments filaires métalliques enroulés en hélice.

Conformément à l'invention M'> 2 car M1'≥1 et M2'>1.

A l'issue l'étape de séparation de l'assemblage transitoire, on obtient, dans une variante, le premier assemblage fractionné, le deuxième assemblage fractionné et le noyau transitoire, le noyau transitoire étant isolé de tout autre élément filaire métallique issu de la couche constituée de M'>1 éléments filaires métalliques. En d'autres termes, à l'issue l'étape de séparation de l'assemblage transitoire, on obtient, dans cette variante, le premier assemblage fractionné, le deuxième assemblage fractionné et un ensemble constitué par le noyau transitoire.

Dans une autre variante, à l'issue l'étape de séparation de l'assemblage transitoire, on obtient le premier assemblage fractionné, le deuxième assemblage fractionné et un ensemble comprenant le noyau transitoire, l'ensemble comprenant le noyau transitoire comprenant également un ou plusieurs éléments filaires métalliques issus de la couche constituée de M'>1 éléments filaires métalliques de l'assemblage transitoire. En d'autres termes, dans cette variante, à l'issue l'étape de séparation de l'assemblage transitoire, on obtient, le premier assemblage fractionné, le deuxième assemblage fractionné et un ensemble constitué par le noyau transitoire et un ou plusieurs éléments filaires métalliques issus de la couche constituée de M'>1 éléments filaires métalliques.

Dans encore une autre variante, à l'issue l'étape de séparation de l'assemblage transitoire, on obtient le premier assemblage fractionné, le deuxième assemblage fractionné et plusieurs ensembles comprenant chacun une partie du noyau transitoire, chaque ensemble comprenant une partie du noyau transitoire comprenant également un ou plusieurs éléments filaires métalliques issus de la couche constituée de M'>1 éléments filaires métalliques de l'assemblage transitoire. Ainsi, les ensembles comprennent l'intégralité du noyau transitoire et les parties du noyau transitoire des ensembles forment le noyau transitoire dans son intégralité. En d'autres termes, on obtient, dans cette variante, le premier assemblage fractionné, le deuxième assemblage fractionné et plusieurs ensembles constitués chacun par une partie du noyau transitoire et un ou plusieurs éléments filaires métalliques issus de la couche constituée de M'>1 éléments filaires métalliques de l'assemblage transitoire, les parties du noyau transitoire constituant le noyau transitoire.

Grâce à l'étape de réassemblage du procédé selon l'invention, il est possible, pour des caractéristiques géométriques données, d'augmenter la masse linéique de l'assemblage final par rapport au procédé de l'état de la technique dans lequel le nombre d'éléments filaires métalliques est nécessairement limité, cela tout en permettant la sortie du noyau transitoire. A l'inverse, pour une masse linéique donnée, il est possible d'obtenir une plus grande plage de caractéristiques géométriques qu'avec le procédé de l'état de la technique.

Un autre avantage du procédé selon l'invention est que chaque élément filaire métallique de l'assemblage final est dépourvu de marques de préformation. De telles marques de préformation comprennent notamment des méplats. Les marques de préformations comprennent également des fissures s'étendant dans des plans de coupe sensiblement perpendiculaires à l'axe principal selon lequel s'étend chaque élément filaire métallique. De telles fissures s'étendent, dans un plan de coupe sensiblement perpendiculaire à l'axe principal, depuis une surface radialement externe de chaque élément filaire métallique radialement vers l'intérieur de chaque élément filaire métallique. Comme décrits ci-dessus, de telles fissures sont initiées par les outils mécaniques de préformation en raison des efforts en flexion, c'est-à-dire perpendiculairement à l'axe principal de chaque élément filaire métallique, ce qui les rend très néfastes pour l'endurance. A l'inverse, dans le procédé utilisé, les éléments filaires métalliques sont préformés collectivement et simultanément sur le noyau transitoire et les efforts de préformations sont exercés en torsion et donc non perpendiculairement à l'axe principal de chaque élément filaire métallique. Les éventuelles fissures créées s'étendent non pas radialement depuis la surface radialement externe de chaque élément filaire métallique radialement vers l'intérieur de chaque élément filaire métallique mais le long de la surface radialement externe de chaque élément filaire métallique ce qui les rend peu néfastes pour l'endurance.

L'étape de réassemblage est telle que N'=M1'+M2'. Lors de cette étape de réassemblage, on réassemble le ou les M1' élément(s) filaire(s) métallique(s) enroulé(s) en hélice formant la couche du premier assemblage fractionné avec les M2' éléments filaires métalliques enroulés en hélice formant la couche du deuxième assemblage fractionné. Le réassemblage des éléments filaires métalliques de ces deux couches permet d'obtenir la couche de l'assemblage final.

Dans le procédé selon l'invention, chaque M1' et M2' éléments filaires métalliques étant issu de la même couche de l'assemblage transitoire, l'étape de réassemblage permet avantageusement de former un assemblage final dans lequel les N' éléments filaires métalliques présentent les mêmes caractéristiques géométriques et forment donc une couche homogène d'éléments filaires métalliques. Ainsi, afin de permettre dans un mode de réalisation avantageux l'obtention d'un assemblage dans lequel les éléments filaires métalliques présentant des caractéristiques géométriques identiques, l'étape de fourniture, l'étape de séparation et l'étape de réassemblage sont réalisées de sorte que tous les N' éléments filaires métalliques présentent un même diamètre d, sont enroulés en hélice selon un même pas p et présentent un même diamètre d'hélice φ. Le diamètre d'hélice φ correspond au diamètre du cercle théorique passant par les centres des éléments filaires métalliques de la couche dans un plan perpendiculaire à l'axe de l'assemblage. On rappelle que le pas p auquel chaque élément filaire métallique est enroulé est la longueur parcourue par cet élément filaire, mesurée parallèlement à l'axe de l'assemblage dans lequel il se trouve, au bout de laquelle l'élément filaire ayant ce pas effectue un tour complet autour dudit axe de l'assemblage.

En outre, comme décrit ci-dessus, suivant les différents modes de réalisation, l'étape de séparation et l'étape de réassemblage sont réalisées de sorte que M'≥M1'+M2'=N'.

L'assemblage transitoire du procédé selon l'invention comprend la couche constituée par les M' éléments filaires métalliques et le noyau transitoire, les M' éléments filaires métalliques étant enroulés en hélice autour du noyau transitoire. De préférence, dans un mode de réalisation permettant de fabriquer un assemblage final constitué d'une couche d'éléments filaires métalliques, l'assemblage transitoire est constitué de la couche constituée par les M' éléments filaires métalliques et du noyau transitoire, les M' éléments filaires métalliques étant enroulés en hélice autour du noyau transitoire.

Le procédé selon l'invention est avantageusement un procédé continu ou en ligne. Ainsi, il n'y a pas d'étape de stockage intermédiaire des différents assemblages et ensembles générés lors du procédé entre l'étape de fourniture de l'assemblage transitoire et l'étape de réassemblage de l'assemblage final.

Dans la présente invention, une étape de fractionnement d'un objet initial en plusieurs objets finaux signifie que, durant cette étape de fractionnement, l'objet initial est divisé en les objets finaux et seulement ces objets finaux de sorte que l'objet initial se retrouve intégralement dans les objets finaux. De plus, dans une étape de fractionnement, l'objet initial est divisé en les objets finaux de façon simultanée, c'est-à-dire que les objets finaux sont séparés en un même point de fractionnement. En particulier, dans le cas d'un objet initial fractionné en au moins trois objets finaux, les trois objets finaux sont, lors d'une étape de fractionnement, séparés simultanément les uns des autres et en un même point.

Dans la présente invention, une étape de séparation d'un objet initial entre plusieurs objets finaux signifie que, pour obtenir ces objets finaux, au moins une étape de fractionnement est nécessaire. Ainsi, pour obtenir les objets finaux, l'étape de séparation comprend une étape de fractionnement de l'objet initial en les objets finaux ou bien comprend une étape de fractionnement de l'objet initial en des objets intermédiaires suivie par une ou plusieurs étapes successives de fractionnement des objets intermédiaires en les objets finaux. Par ailleurs, dans une étape de séparation, l'objet initial ne se retrouve pas nécessairement intégralement dans les objets finaux, des ensembles ou assemblages ayant pu être extraits du procédé lors d'une ou plusieurs étapes de fractionnement et non utilisés lors des étapes de fractionnement ultérieures. Enfin, une étape de séparation peut comprendre une ou plusieurs étapes de réassemblage entre plusieurs objets intermédiaires issus d'une étape de fractionnement de l'étape de séparation pour obtenir d'autres objets intermédiaires ou bien les objets finaux.

Que ce soit dans une étape de séparation ou une étape de fractionnement, les objets finaux sont physiquement séparés les uns des autres, c'est-à-dire non en contact les uns avec les autres en aval de l'étape de séparation ou de fractionnement et en amont de toute étape de réassemblage de deux ou de plusieurs de ces objets finaux.

L'assemblage final est à simple hélice. Par définition, un assemblage à simple hélice est un assemblage dans lequel l'axe de chaque élément filaire métallique décrit une unique hélice, contrairement à un assemblage à double hélice dans lequel l'axe de chaque élément filaire métallique décrit une première hélice autour de l'axe de l'assemblage et une deuxième hélice autour d'une hélice décrite par l'axe de l'assemblage.

En d'autres termes, lorsque l'assemblage s'étend selon une direction sensiblement rectiligne, l'assemblage comprenant une ou plusieurs couches d'éléments filaires enroulés en hélice, chaque élément filaire métallique de la ou chaque couche décrit une trajectoire en forme d'hélice autour d'un axe principal sensiblement parallèle à la direction sensiblement rectiligne de sorte que, dans un plan de coupe sensiblement perpendiculaire à l'axe principal, la distance entre le centre de chaque élément filaire métallique d'une couche donnée et l'axe principal soit sensiblement constante et égale pour tous les éléments filaires métallique de chaque couche donnée. Au contraire, lorsqu'un assemblage à double hélice s'étend selon une direction sensiblement rectiligne, la distance entre le centre de chaque élément filaire métallique d'une couche donnée et la direction sensiblement rectiligne est différente pour tous les éléments filaires métalliques de la couche donnée.

Par élément filaire, on entend tout élément longiligne de grande longueur relativement à sa section transversale, quelle que soit la forme de cette dernière, par exemple circulaire, oblongue, rectangulaire ou carrée, ou même plate. Lorsqu'il est de forme circulaire, son diamètre est de préférence inférieur à 3 mm. Très préférentiellement, chaque élément filaire présente une section circulaire.

Dans un mode de réalisation, chaque élément filaire métallique comprend un unique monofilament élémentaire métallique.

Dans un autre mode de réalisation, chaque élément filaire métallique comprend un assemblage de plusieurs monofilaments élémentaires métalliques. Ainsi, par exemple, chaque élément filaire métallique comprend un toron de plusieurs monofilaments élémentaires métalliques. Chaque toron comprend de préférence une ou plusieurs couches de monofilaments élémentaires métalliques enroulés en hélice.

Par métallique, on entend par définition un monofilament élémentaire constitué majoritairement (c'est-à-dire pour plus de 50% de sa masse) ou intégralement (pour 100% de sa masse) d'un matériau métallique. Chaque monofilament élémentaire métallique est préférentiellement en acier, plus préférentiellement en acier perlitique (ou ferrito-perlitique) au carbone désigné ci-après par "acier au carbone", ou encore en acier inoxydable (par définition, acier comportant au moins 10,5% de chrome).

Un tel monofilament élémentaire métallique comprend préférentiellement une âme en acier, éventuellement revêtue d'une ou plusieurs couches d'un revêtement qui peut être métallique et/ou à base d'une composition adhésive non métallique. Par exemple, le revêtement métallique comprend un métal choisi parmi le zinc, le cuivre, l'étain, le cobalt et les alliages de ces métaux. Comme exemples d'alliages de ces métaux, on citera le laiton et le bronze.

Lorsqu'un acier au carbone est utilisé, sa teneur en carbone (% en masse d'acier) est de préférence comprise entre 0,1% et 1,2%. Chaque monofilament élémentaire métallique présente une résistance mécanique allant de 1000 MPa à 5000 MPa. De telles résistances mécaniques correspondent aux grades d'acier couramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile), l'utilisation de résistances mécaniques élevées permettant éventuellement un renforcement amélioré de la matrice dans laquelle l'élément de renfort est destiné à être noyé et un allègement de la matrice ainsi renforcée.

Dans un mode de réalisation préféré, chaque monofilament élémentaire métallique présente un diamètre allant de 0,05 mm à 0,50 mm, de préférence de 0,10 mm à 0,48 mm et plus préférentiellement de 0,15 mm à 0,45 mm.

Dans une première forme de réalisation permettant un réassemblage partiel des M' éléments filaires métalliques, l'étape de séparation et l'étape de réassemblage sont réalisées de sorte que M1'+M2'<M'.

Dans des première et deuxième variantes de la première forme de réalisation, l'étape de séparation de l'assemblage transitoire entre au moins le premier assemblage fractionné, le deuxième assemblage fractionné et le noyau transitoire ou un ou plusieurs ensembles comprenant le noyau transitoire comprend, en amont de l'étape de réassemblage :
- une étape de séparation de l'assemblage transitoire entre :
   ∘ un ensemble précurseur comprenant au moins une couche constituée de M1">1 éléments filaires métalliques enroulés en hélice, les M1" éléments filaires métalliques étant issus de la couche constituée de M'>1 éléments filaires métalliques de l'assemblage transitoire,
   ∘ le deuxième assemblage fractionné, et
   ∘ le noyau transitoire ou un ou plusieurs ensembles comprenant le noyau transitoire, de préférence le noyau transitoire

- - une étape de séparation de l'ensemble précurseur entre:
   ∘ un ensemble principal comprenant au moins une couche constituée de M3≥1 élément(s) filaire(s) métallique(s) enroulé(s) en hélice, le ou les M3≥1 élément(s) filaire(s) métallique(s) étant issu(s) de la couche constituée des M1">1 éléments filaires métalliques de l'ensemble précurseur, l'ensemble principal formant le premier assemblage fractionné et
   ∘ un ensemble complémentaire comprenant au moins une couche constituée de M3'≥1 élément(s) filaire(s) métallique(s) enroulé(s) en hélice, le ou les M3'≥1 élément(s) filaire(s) métallique(s) étant issu(s) de la couche constituée des M1">1 éléments filaires métalliques de l'ensemble précurseur.

Dans ces première et deuxième variantes de la première forme de réalisation, on a M'>M1"+M2', M1"≥M3+M3' et M1'=M3.

De préférence, dans un mode de réalisation permettant de fabriquer un assemblage final constitué d'une couche d'éléments filaires métalliques, l'ensemble précurseur est constitué d'une couche constituée des M1" éléments filaires métalliques enroulés en hélice, l'ensemble principal est constitué d'une couche constituée du ou des M3 élément(s) filaire(s) métallique(s) enroulé(s) en hélice et l'ensemble complémentaire est constitué d'une couche constituée du ou des M3' élément(s) filaire(s) métallique(s) enroulé(s) en hélice.

Dans ces première et deuxième variantes de réalisation, l'étape de séparation de l'assemblage transitoire entre l'ensemble précurseur, le deuxième assemblage fractionné et le noyau transitoire ou un ou plusieurs ensembles comprenant le noyau transitoire, de préférence le noyau transitoire, a lieu en amont de l'étape de séparation de l'ensemble précurseur entre les ensembles principal et complémentaire.

Avantageusement, l'étape de séparation de l'ensemble précurseur entre l'ensemble principal formant le premier assemblage fractionné et l'ensemble complémentaire comprend une étape de fractionnement de l'ensemble précurseur en :
- l'ensemble principal formant le premier assemblage fractionné, et
- l'ensemble complémentaire.

Ainsi, on a avantageusement M1"=M3+M3' et M3=M1'.

Dans une première variante de la première forme de réalisation dans laquelle le noyau transitoire est séparé avec le premier assemblage fractionné, l'étape de séparation de l'assemblage transitoire entre l'ensemble précurseur, le deuxième assemblage fractionné et le noyau transitoire ou un ou plusieurs ensembles comprenant le noyau transitoire, de préférence le noyau transitoire, comprend :
- une étape de séparation de l'assemblage transitoire entre:
   ∘ un ensemble fractionné comprenant au moins une couche constituée de M4'>1 éléments filaires métalliques enroulés en hélice autour du noyau transitoire, les M4' éléments filaires métalliques étant issus de la couche constituée de M' éléments filaires métalliques de l'assemblage transitoire, et
   ∘ le deuxième assemblage fractionné,

   - - une étape de séparation de l'ensemble fractionné entre:
      ∘ l'ensemble précurseur, et
      ∘ le noyau transitoire ou un ou plusieurs ensembles comprenant le noyau transitoire, de préférence le noyau transitoire.

Dans la première variante de la première forme de réalisation, on a ainsi avantageusement M'≥M4'+M2' et M4'≥M1".

Dans cette première variante, l'ensemble fractionné comprend la couche constituée par les M4' éléments filaires métalliques et le noyau transitoire, les M4' éléments filaires métalliques étant enroulés en hélice autour du noyau transitoire. De préférence, dans un mode de réalisation permettant de fabriquer un assemblage final constitué d'une couche d'éléments filaires métalliques, l'ensemble fractionné est constitué de la couche constituée par les M4' éléments filaires métalliques et du noyau transitoire, les M4' éléments filaires métalliques étant enroulés en hélice autour du noyau transitoire.

Dans cette première variante, l'étape de séparation de l'ensemble fractionné entre l'ensemble précurseur et le noyau transitoire ou un ou plusieurs ensembles comprenant le noyau transitoire, de préférence le noyau transitoire, a lieu en amont de l'étape de séparation de l'ensemble précurseur entre les ensembles principal et complémentaire.

Avantageusement, dans cette première variante, l'étape de séparation de l'assemblage transitoire entre l'ensemble fractionné et le deuxième assemblage fractionné comprend une étape de fractionnement de l'assemblage transitoire en :
- l'ensemble fractionné, et
- le deuxième assemblage fractionné.

Ainsi, on a avantageusement M'=M4'+M2'.

Avantageusement, dans cette première variante, l'étape de séparation de l'ensemble fractionné entre l'ensemble précurseur et le noyau transitoire ou un ou plusieurs ensembles comprenant le noyau transitoire, de préférence le noyau transitoire comprend une étape de fractionnement de l'ensemble fractionné en :
- l'ensemble précurseur, et
- le noyau transitoire ou un ou plusieurs ensembles comprenant le noyau transitoire, de préférence le noyau transitoire.

Ainsi, on a avantageusement M4'=M1" dans le cas d'une étape de fractionnement de l'ensemble fractionné entre l'ensemble précurseur et le noyau transitoire.

Dans une deuxième variante de la première forme de réalisation dans laquelle le noyau transitoire est séparé avec le deuxième assemblage fractionné, l'étape de séparation de l'assemblage transitoire entre l'ensemble précurseur, le deuxième assemblage fractionné et le noyau transitoire ou un ou plusieurs ensembles comprenant le noyau transitoire, de préférence le noyau transitoire, comprend :
- une étape de séparation de l'assemblage transitoire entre:
   ∘ un ensemble fractionné comprenant au moins une couche constituée de M4'>1 éléments filaires métalliques enroulés en hélice autour du noyau transitoire, les M4' éléments filaires métalliques étant issus de la couche constituée de M'>1 éléments filaires métalliques de l'assemblage transitoire, et
   ∘ l'ensemble précurseur, et

   - une étape de séparation de l'ensemble fractionné entre:
      ∘ le deuxième assemblage fractionné, et
      ∘ le noyau transitoire ou un ou plusieurs ensembles comprenant le noyau transitoire, de préférence le noyau transitoire.

Dans la deuxième variante de la première forme de réalisation, on a ainsi avantageusement M'≥M4'+M1" et M4'≥M2'.

Tout comme dans la première variante, dans cette deuxième variante, l'ensemble fractionné comprend la couche constituée par les M4' éléments filaires métalliques et le noyau transitoire, les M4' éléments filaires métalliques étant enroulés en hélice autour du noyau transitoire. De préférence, dans un mode de réalisation permettant de fabriquer un assemblage final constitué d'une couche d'éléments filaires métalliques, l'ensemble fractionné est constitué de la couche constituée par les M4' éléments filaires métalliques et du noyau transitoire, les M4' éléments filaires métalliques étant enroulés en hélice autour du noyau transitoire.

Dans cette deuxième variante, l'étape de séparation de l'assemblage transitoire entre l'ensemble fractionné et l'ensemble précurseur a lieu en amont de l'étape de séparation de l'ensemble fractionné entre le deuxième assemblage fractionné et le noyau transitoire ou un ou plusieurs ensembles comprenant le noyau transitoire, de préférence le noyau transitoire.

Avantageusement, dans cette deuxième variante, l'étape de séparation de l'assemblage transitoire entre l'ensemble fractionné et l'ensemble précurseur comprend une étape de fractionnement de l'assemblage transitoire en :
- l'ensemble fractionné, et
- l'ensemble précurseur.

Ainsi, on a avantageusement M'=M4'+M1".

Avantageusement, dans cette deuxième variante, l'étape de séparation de l'ensemble fractionné entre le deuxième assemblage fractionné et le noyau transitoire ou un ou plusieurs ensembles comprenant le noyau transitoire, de préférence le noyau transitoire, comprend une étape de fractionnement de l'ensemble fractionné en :
- le deuxième assemblage fractionné, et
- le noyau transitoire ou un ou plusieurs ensembles comprenant le noyau transitoire, de préférence le noyau transitoire.

Ainsi, on a avantageusement M4'=M2' dans le cas d'une étape de fractionnement de l'ensemble fractionné en le deuxième assemblage fractionné et le noyau transitoire.

Dans une troisième variante de la première forme de réalisation dans laquelle le noyau transitoire est séparé avec le premier assemblage fractionné, l'étape de séparation de l'assemblage transitoire entre au moins le premier assemblage fractionné, le deuxième assemblage fractionné et le noyau transitoire ou un ou plusieurs ensembles comprenant le noyau transitoire comprend, en amont de l'étape de réassemblage :
- une étape de séparation de l'assemblage transitoire entre:
   ∘ un ensemble fractionné comprenant au moins une couche constituée de M4'>1 éléments filaires métalliques enroulés en hélice autour du noyau transitoire, les M4' éléments filaires métalliques étant issus de la couche constituée de M' éléments filaires métalliques de l'assemblage transitoire, et
   ∘ le deuxième assemblage fractionné.
- une étape de séparation de l'ensemble fractionné entre:
   ∘ le premier assemblage fractionné, et
   ∘ le noyau transitoire ou un ou plusieurs ensembles comprenant le noyau transitoire, de préférence le noyau transitoire.

Dans cette troisième variante de la première forme de réalisation, on a M'≥M4'+M2' et M4'≥M1'.

Tout comme dans les première et deuxième variantes, dans cette troisième variante, l'ensemble fractionné comprend la couche constituée par les M4' éléments filaires métalliques et le noyau transitoire, les M4' éléments filaires métalliques étant enroulés en hélice autour du noyau transitoire. De préférence, dans un mode de réalisation permettant de fabriquer un assemblage final constitué d'une couche d'éléments filaires métalliques, l'ensemble fractionné est constitué de la couche constituée par les M4' éléments filaires métalliques et du noyau transitoire, les M4' éléments filaires métalliques étant enroulés en hélice autour du noyau transitoire.

Dans cette troisième variante, l'étape de séparation de l'assemblage transitoire entre l'ensemble fractionné et le deuxième assemblage fractionné a lieu en amont de l'étape de séparation de l'ensemble fractionné entre le premier assemblage fractionné et le noyau transitoire ou un ou plusieurs ensembles comprenant le noyau transitoire, de préférence le noyau transitoire.

Avantageusement, dans cette troisième variante, l'étape de séparation de l'assemblage transitoire entre l'ensemble fractionné et le deuxième assemblage fractionné comprend une étape de fractionnement de l'assemblage transitoire en :
- l'ensemble fractionné, et
- le deuxième assemblage fractionné.

Ainsi, on a avantageusement, M'=M4'+M2'.

Avantageusement, l'étape de séparation de l'ensemble fractionné entre le premier assemblage fractionné et le noyau transitoire ou un ou plusieurs ensembles comprenant le noyau transitoire, de préférence le noyau transitoire, comprend une étape de séparation de l'ensemble fractionné entre:
∘ un ensemble principal comprenant au moins une couche constituée de M3≥1 élément(s) filaire(s) métallique(s) enroulé(s) en hélice, le ou les M3≥1 élément(s) filaire(s) métallique(s) étant issu(s) de la couche constituée des M4'>1 éléments filaires métalliques de l'ensemble fractionné, l'ensemble principal formant le premier assemblage fractionné,
∘ un ensemble complémentaire comprenant au moins une couche constituée de M3'≥1 élément(s) filaire(s) métallique(s) enroulé(s) en hélice, le ou les M3'≥1 élément(s) filaire(s) métallique(s) étant issu(s) de la couche constituée des M4'>1 éléments filaires métalliques de l'ensemble fractionné, et
∘ le noyau transitoire ou un ou plusieurs ensembles comprenant le noyau transitoire, de préférence le noyau transitoire.

Dans la troisième variante de la première forme de réalisation, on a ainsi avantageusement M4'≥M3+M3' et M3=M1'.

De préférence, dans un mode de réalisation permettant de fabriquer un assemblage final constitué d'une couche d'éléments filaires métalliques, l'ensemble principal est constitué d'une couche constituée du ou des M3 élément(s) filaire(s) métallique(s) enroulé(s) en hélice et l'ensemble complémentaire est constitué d'une couche constituée du ou des M3' élément(s) filaire(s) métallique(s) enroulé(s) en hélice.

Avantageusement, l'étape de séparation de l'ensemble fractionné entre l'ensemble principal formant le premier assemblage fractionné, l'ensemble complémentaire et le noyau transitoire ou un ou plusieurs ensembles comprenant le noyau transitoire, de préférence le noyau transitoire, comprend:
- une étape de séparation de l'ensemble fractionné entre:
   ∘ l'ensemble principal formant le premier assemblage fractionné,
   ∘ un ensemble dérivé comprenant au moins une couche constituée de M5'≥1 élément(s) filaire(s) métallique(s) enroulé(s) en hélice autour du noyau transitoire, le ou les M5'≥1 élément(s) filaire(s) métallique(s) étant issu(s) de la couche constituée des M4'>1 éléments filaires métalliques de l'ensemble fractionné,
- une étape de séparation de l'ensemble dérivé entre:
   ∘ l'ensemble complémentaire,
   ∘ le noyau transitoire ou un ou plusieurs ensembles comprenant le noyau transitoire, de préférence le noyau transitoire.

Dans la troisième variante de la première forme de réalisation, on a ainsi avantageusement M4'≥M3+M5', M3=M1'et M5'≥M3'.

De préférence, l'ensemble dérivé comprend la couche constituée du ou des M5'≥1 élément(s) filaire(s) métallique(s) enroulé(s) et le noyau transitoire, le ou les M5' élément(s) filaire(s) métallique(s) étant enroulé(s) en hélice autour du noyau transitoire. De préférence, dans un mode de réalisation permettant de fabriquer un assemblage final constitué d'une couche d'éléments filaires métalliques, l'ensemble dérivé est constitué de la couche constituée du ou des M5'≥1 élément(s) filaire(s) métallique(s) enroulé(s) et du noyau transitoire, le ou les M5' élément(s) filaire(s) métallique(s) étant enroulé(s) en hélice autour du noyau transitoire.

Dans cette troisième variante, l'étape de séparation de l'ensemble fractionné entre l'ensemble principal et l'ensemble dérivé a lieu en amont de l'étape de séparation de l'ensemble dérivé entre l'ensemble complémentaire et le noyau transitoire ou un ou plusieurs ensembles comprenant le noyau transitoire, de préférence le noyau transitoire.

Avantageusement, dans cette troisième variante, l'étape de séparation de l'ensemble fractionné entre l'ensemble principal formant le premier assemblage fractionné et l'ensemble dérivé comprend une étape de fractionnement de l'ensemble fractionné en :
- l'ensemble principal formant le premier assemblage fractionné, et
- l'ensemble dérivé.

Ainsi, on a avantageusement M4'=M3+M5' et M3=M1'.

Avantageusement, dans cette troisième variante, l'étape de séparation de l'ensemble dérivé entre l'ensemble complémentaire et le noyau transitoire ou un ou plusieurs ensembles comprenant le noyau transitoire, de préférence le noyau transitoire, comprend une étape de fractionnement de l'ensemble dérivé en :
- l'ensemble complémentaire, et
- le noyau transitoire ou un ou plusieurs ensembles comprenant le noyau transitoire, de préférence le noyau transitoire.

Ainsi, on a avantageusement M5'=M3' dans le cas d'une étape de fractionnement de l'ensemble dérivé en l'ensemble complémentaire et le noyau transitoire.

Dans une quatrième variante de la première forme de réalisation dans laquelle le premier assemblage fractionné, le deuxième assemblage fractionné, le noyau transitoire sont séparés simultanément, l'étape de séparation de l'assemblage transitoire entre au moins le premier assemblage fractionné, le deuxième assemblage fractionné et le noyau transitoire ou un ou plusieurs ensembles comprenant le noyau transitoire comprend, en amont de l'étape de réassemblage, une étape de fractionnement de l'assemblage transitoire entre :
- le premier assemblage fractionné,
- le deuxième assemblage fractionné,
- le noyau transitoire ou un ou plusieurs ensembles comprenant le noyau transitoire, de préférence le noyau transitoire et
- un ensemble fractionné comprenant au moins une couche constituée de M4'≥1 élément(s) filaire(s) métallique(s) enroulé(s) en hélice, le ou les M4' élément(s) filaire(s) métallique(s) étant issu(s) de la couche constituée de M' éléments filaires métalliques de l'assemblage transitoire.

De préférence, dans un mode de réalisation permettant de fabriquer un assemblage final constitué d'une couche d'éléments filaires métalliques, l'ensemble fractionné est constitué de la couche constituée par le ou les M4' élément(s) filaire(s) métallique(s).

Dans une configuration de la première forme de réalisation dans laquelle le noyau transitoire est séparé en deux parties allant chacune avec les premier et deuxième assemblages fractionnés, l'étape de séparation de l'assemblage transitoire entre au moins le premier assemblage fractionné, le deuxième assemblage fractionné et le noyau transitoire ou un ou plusieurs ensembles comprenant le noyau transitoire comprend, en amont de l'étape de réassemblage :
- une étape de séparation de l'assemblage transitoire entre:
   ∘ un premier ensemble fractionné comprenant au moins une couche constituée par M6'>1 éléments filaires métalliques enroulés en hélice autour d'une première partie du noyau transitoire, les M6'>1 éléments filaires métalliques étant issus de la couche constituée des M' éléments filaires métalliques de l'assemblage transitoire, et
   ∘ un deuxième ensemble fractionné comprenant au moins une couche constituée par M7'>1 éléments filaires métalliques enroulés en hélice autour d'une deuxième partie du noyau transitoire, les M7'>1 éléments filaires métalliques étant issus de la couche constituée des M' éléments filaires métalliques de l'assemblage transitoire,
   la première partie du noyau transitoire et la deuxième partie du noyau transitoire constituant, préalablement à l'étape de séparation de l'assemblage transitoire, le noyau transitoire,
- une étape de séparation du premier ensemble fractionné entre :
   ∘ le premier assemblage fractionné,
   ∘ la première partie du noyau transitoire ou un ou plusieurs ensembles comprenant la première partie du noyau transitoire, de préférence la première partie du noyau transitoire
- une étape de séparation du deuxième ensemble fractionné entre:
   ∘ le deuxième assemblage fractionné, et
   ∘ la deuxième partie du noyau transitoire ou un ou plusieurs ensembles comprenant la deuxième partie du noyau transitoire, de préférence la deuxième partie du noyau transitoire.

Dans cette configuration de la première forme de réalisation, M'≥M6'+M7', M6'>M1' et M7'≥M2'.

Dans cette configuration de la première forme de réalisation, le premier ensemble fractionné comprend la couche constituée par les M6' éléments filaires métalliques et la première partie du noyau transitoire, les M6' éléments filaires métalliques étant enroulés en hélice autour de la première partie du noyau transitoire. De préférence, dans un mode de réalisation permettant de fabriquer un assemblage final constitué d'une couche d'éléments filaires métalliques, le premier ensemble fractionné est constitué de la couche constituée par les M6' éléments filaires métalliques et de la première partie du noyau transitoire, les M6' éléments filaires métalliques étant enroulés en hélice autour de la première partie du noyau transitoire.

De façon analogue, dans cette configuration de la première forme de réalisation, le deuxième ensemble fractionné comprend la couche constituée par les M7' éléments filaires métalliques et la deuxième partie du noyau transitoire, les M7' éléments filaires métalliques étant enroulés en hélice autour de la deuxième partie du noyau transitoire. De préférence, dans un mode de réalisation permettant de fabriquer un assemblage final constitué d'une couche d'éléments filaires métalliques, le deuxième ensemble fractionné est constitué de la couche constituée par les M7' éléments filaires métalliques et de la deuxième partie du noyau transitoire, les M7' éléments filaires métalliques étant enroulés en hélice autour de la deuxième partie du noyau transitoire.

Dans cette configuration de la première forme de réalisation, l'étape de séparation de l'assemblage transitoire entre le premier ensemble fractionné et le deuxième ensemble fractionné a lieu en amont de l'étape de séparation du premier ensemble fractionné entre le premier assemblage fractionné et la première partie du noyau transitoire ou un ou plusieurs ensembles comprenant la première partie du noyau transitoire, de préférence la première partie du noyau transitoire.

Dans cette configuration de la première forme de réalisation, l'étape de séparation de l'assemblage transitoire entre le premier ensemble fractionné et le deuxième ensemble fractionné a lieu en amont de l'étape de séparation du deuxième ensemble fractionné entre le deuxième assemblage fractionné, et la deuxième partie du noyau transitoire ou un ou plusieurs ensembles comprenant la deuxième partie du noyau transitoire, de préférence la deuxième partie du noyau transitoire.

Avantageusement, dans cette configuration de la première forme de réalisation, l'étape de séparation de l'assemblage transitoire entre le premier ensemble fractionné et le deuxième ensemble fractionné comprend une étape de fractionnement de l'assemblage transitoire en :
- le premier ensemble fractionné, et
- le deuxième ensemble fractionné.

Ainsi, on a avantageusement, M'=M6'+M7'.

Avantageusement, dans cette configuration de la première forme de réalisation, l'étape de séparation du deuxième ensemble fractionné entre le deuxième assemblage fractionné et la deuxième partie du noyau transitoire ou un ou plusieurs ensembles comprenant la deuxième partie du noyau transitoire, de préférence la deuxième partie du noyau transitoire comprend une étape de fractionnement du deuxième ensemble fractionné en :
- le deuxième assemblage fractionné, et
- la deuxième partie du noyau transitoire ou un ou plusieurs ensembles comprenant la deuxième partie du noyau transitoire, de préférence la deuxième partie du noyau transitoire.

Ainsi, on a avantageusement, M7'=M2'.

Avantageusement, dans cette configuration de la première forme de réalisation dans laquelle le noyau transitoire est séparé en deux parties allant chacune avec les premier et deuxième assemblages fractionnés, l'étape de séparation du premier ensemble fractionné entre le premier assemblage fractionné et la première partie du noyau transitoire ou un ou plusieurs ensembles comprenant la première partie du noyau transitoire, de préférence la première partie du noyau transitoire, comprend une étape de séparation du premier ensemble fractionné entre :
- un ensemble principal comprenant au moins une couche constituée de M3≥1 élément(s) filaire(s) métallique(s) enroulé(s) en hélice, le ou les M3≥1 élément(s) filaire(s) métallique(s) étant issu(s) de la couche constituée des M6'>1 éléments filaires métalliques du premier ensemble fractionné, l'ensemble principal formant le premier assemblage fractionné,
- un ensemble complémentaire comprenant au moins une couche constituée de M3'≥1 élément(s) filaire(s) métallique(s) enroulé(s) en hélice, le ou les M3'≥1 élément(s) filaire(s) métallique(s) étant issu(s) de la couche constituée des M6'>1 éléments filaires métalliques du premier ensemble fractionné, et
- la première partie du noyau transitoire ou un ou plusieurs ensembles comprenant la première partie du noyau transitoire, de préférence la première partie du noyau transitoire.

Dans cette configuration de la première forme de réalisation, dans laquelle le noyau transitoire est séparé en deux parties allant chacune avec les premier et deuxième assemblages fractionnés, on a ainsi avantageusement, M6'≥M3+M3' et M3=M1'.

De préférence, dans un mode de réalisation permettant de fabriquer un assemblage final constitué d'une couche d'éléments filaires métalliques, l'ensemble principal est constitué d'une couche constituée du ou des M3 élément(s) filaire(s) métallique(s) enroulé(s) en hélice et l'ensemble complémentaire est constitué d'une couche constituée du ou des M3' élément(s) filaire(s) métallique(s) enroulé(s) en hélice.

Dans une première variante de cette configuration de la première forme de réalisation dans laquelle le noyau transitoire est séparé en deux parties allant chacune avec les premier et deuxième assemblages fractionnés, l'étape de séparation du premier ensemble fractionné entre l'ensemble principal formant le premier assemblage fractionné, l'ensemble complémentaire et la première partie du noyau transitoire ou un ou plusieurs ensembles comprenant la première partie du noyau transitoire, de préférence la première partie du noyau transitoire, comprend:
- une étape de séparation du premier ensemble fractionné entre:
   ∘ un ensemble précurseur comprenant au moins une couche constituée de M1">1 éléments filaires métalliques enroulés en hélice, les M1" éléments filaires métalliques étant issus de la couche constituée de M6'>1 éléments filaires métalliques du premier ensemble fractionné,
   ∘ la première partie du noyau transitoire ou un ou plusieurs ensembles comprenant la première partie du noyau transitoire, de préférence la première partie du noyau transitoire,

   - une étape de séparation de l'ensemble précurseur entre:
      ∘ l'ensemble principal formant le premier assemblage fractionné et
      ∘ l'ensemble complémentaire.

Dans cette première variante de la configuration de la première forme de réalisation dans laquelle le noyau transitoire est séparé en deux parties allant chacune avec les premier et deuxième assemblages fractionnés, M6'≥M1", M1"≥M3+M3' et M3=M1'.

De préférence, dans un mode de réalisation permettant de fabriquer un assemblage final constitué d'une couche d'éléments filaires métalliques, l'ensemble précurseur est constitué d'une couche constituée des M1" éléments filaires métalliques enroulés en hélice.

Dans cette première variante de cette configuration de la première forme de réalisation, l'étape de séparation du premier ensemble fractionné entre l'ensemble précurseur et la première partie du noyau transitoire ou un ou plusieurs ensembles comprenant la première partie du noyau transitoire, de préférence la première partie du noyau transitoire, a lieu en amont de l'étape de séparation de l'ensemble précurseur entre l'ensemble principal formant le premier assemblage fractionné et l'ensemble complémentaire.

Avantageusement, dans cette première variante de cette configuration de la première forme de réalisation, l'étape de séparation du premier ensemble fractionné entre l'ensemble précurseur et la première partie du noyau transitoire ou un ou plusieurs ensembles comprenant la première partie du noyau transitoire, de préférence la première partie du noyau transitoire comprend une étape de fractionnement du premier ensemble fractionné en :
- l'ensemble précurseur, et
- la première partie du noyau transitoire ou un ou plusieurs ensembles comprenant la première partie du noyau transitoire, de préférence la première partie du noyau transitoire.

Ainsi, on a avantageusement M6'=M1" dans le cas d'une étape de fractionnement du premier ensemble fractionné en l'ensemble précurseur et la première partie du noyau transitoire.

Avantageusement, dans cette première variante de cette configuration de la première forme de réalisation, l'étape de séparation de l'ensemble précurseur entre l'ensemble principal formant le premier assemblage fractionné et l'ensemble complémentaire comprend une étape de fractionnement de l'ensemble précurseur en :
- l'ensemble principal formant le premier assemblage fractionné, et
- l'ensemble complémentaire.

Ainsi, on a avantageusement M1"=M3+M3' et M3=M1'.

Dans une deuxième variante de cette configuration de la première forme de réalisation dans laquelle le noyau transitoire est séparé en deux parties allant chacune avec les premier et deuxième assemblages fractionnés, l'étape de séparation du premier ensemble fractionné entre l'ensemble principal formant le premier assemblage fractionné, l'ensemble complémentaire et la première partie du noyau transitoire ou un ou plusieurs ensembles comprenant la première partie du noyau transitoire, de préférence la première partie du noyau transitoire, comprend:
- une étape de séparation du premier ensemble fractionné entre:
   ∘ l'ensemble principal formant le premier assemblage fractionné,
   ∘ un ensemble dérivé comprenant au moins une couche constituée de M5'≥1 élément(s) filaire(s) métallique(s) enroulé(s) en hélice autour de la première partie du noyau transitoire, le ou les M5'≥1 élément(s) filaire(s) métallique(s) étant issu(s) de la couche constituée des M6'>1 éléments filaires métalliques du premier ensemble fractionné,
- une étape de séparation de l'ensemble dérivé entre:
   ∘ l'ensemble complémentaire,
   ∘ la première partie du noyau transitoire ou un ou plusieurs ensembles comprenant le noyau transitoire, de préférence la première partie du noyau transitoire.

Dans cette deuxième variante de la configuration de la première forme de réalisation dans laquelle le noyau transitoire est séparé en deux parties allant chacune avec les premier et deuxième assemblages fractionnés, M6'≥M3+M5', M5'≥M3' et M3=M1'.

Dans cette deuxième variante de cette configuration de la première forme de réalisation, l'ensemble dérivé comprend la couche constituée du ou des M5'≥1 élément(s) filaire(s) métallique(s) et la première partie du noyau transitoire, le ou les M5'≥1 élément(s) filaire(s) métallique(s) étant enroulé(s) en hélice autour de la première partie du noyau transitoire. De préférence, dans un mode de réalisation permettant de fabriquer un assemblage final constitué d'une couche d'éléments filaires métalliques, l'ensemble dérivé est constitué de la couche constituée du ou des M5'≥1 élément(s) filaire(s) métallique(s) et de la première partie du noyau transitoire, le ou les M5'≥1 élément(s) filaire(s) métallique(s) étant enroulé(s) en hélice autour de la première partie du noyau transitoire.

Dans cette deuxième variante de cette configuration de la première forme de réalisation, l'étape de séparation du premier ensemble fractionné entre l'ensemble principal et l'ensemble dérivé a lieu en amont de l'étape de séparation de l'ensemble dérivé entre l'ensemble complémentaire et la première partie du noyau transitoire ou un ou plusieurs ensembles comprenant la première partie du noyau transitoire, de préférence la première partie du noyau transitoire.

Avantageusement, dans cette deuxième variante de cette configuration de la première forme de réalisation, l'étape de séparation du premier ensemble fractionné entre l'ensemble principal formant le premier assemblage fractionné et l'ensemble dérivé comprend une étape de fractionnement du premier ensemble fractionné en :
- l'ensemble principal formant le premier assemblage fractionné, et
- l'ensemble dérivé.

Ainsi, on a avantageusement M6'=M3+M5' et M3=M1'.

Avantageusement, dans cette deuxième variante de cette configuration de la première forme de réalisation, l'étape de séparation de l'ensemble dérivé entre l'ensemble complémentaire et la première partie du noyau transitoire ou un ou plusieurs ensembles comprenant le noyau transitoire, de préférence la première partie du noyau transitoire comprend une étape de fractionnement de l'ensemble dérivé en :
- l'ensemble complémentaire, et
- la première partie du noyau transitoire ou un ou plusieurs ensembles comprenant le noyau transitoire, de préférence la première partie du noyau transitoire.

Ainsi, on a avantageusement M5'=M3' dans le cas d'une étape de fractionnement de l'ensemble dérivé en l'ensemble complémentaire et la première partie du noyau transitoire.

Dans une autre configuration de la première forme de réalisation dans laquelle le noyau transitoire est séparé en deux parties, l'étape de séparation de l'assemblage transitoire entre au moins le premier assemblage fractionné, le deuxième assemblage fractionné et le noyau transitoire ou un ou plusieurs ensembles comprenant le noyau transitoire comprend, en amont de l'étape de réassemblage, une étape de fractionnement de l'assemblage transitoire entre :
- le premier assemblage fractionné,
- le deuxième assemblage fractionné,
- une première partie du noyau transitoire,
- une deuxième partie du noyau transitoire,
   la première partie du noyau transitoire et la deuxième partie du noyau transitoire constituant, préalablement à l'étape de séparation de l'assemblage transitoire, le noyau transitoire,
- un ensemble fractionné comprenant au moins une couche constituée de M4'≥1 élément(s) filaire(s) métallique(s) enroulé(s) en hélice, le ou les M4' élément(s) filaire(s) métallique(s) étant issu(s) de la couche constituée de M' éléments filaires métalliques de l'assemblage transitoire.

De préférence, dans un mode de réalisation permettant de fabriquer un assemblage final constitué d'une couche d'éléments filaires métalliques, l'ensemble fractionné est constitué de la couche constituée par le ou les M4' élément(s) filaire(s) métallique(s).

Dans une deuxième forme de réalisation permettant un réassemblage total des M' éléments filaires métalliques, l'étape de séparation et l'étape de réassemblage sont réalisées de sorte que M1'+M2'=M'.

Dans une première variante de la deuxième forme de réalisation dans laquelle le noyau transitoire est séparé avec le premier assemblage fractionné, l'étape de séparation de l'assemblage transitoire entre au moins le premier assemblage fractionné, le deuxième assemblage fractionné et le noyau transitoire ou un ou plusieurs ensembles comprenant le noyau transitoire comprend, en amont de l'étape de réassemblage:
- une étape de séparation de l'assemblage transitoire entre:
   ∘ un ensemble fractionné comprenant au moins une couche constituée par M4'≥1 élément(s) filaire(s) métallique(s) enroulé(s) en hélice autour du noyau transitoire, le ou les M4'≥1 élément(s) filaire(s) métallique(s) étant issu(s) de la couche constituée des M'>1 éléments filaires métalliques de l'assemblage transitoire et
   ∘ le deuxième assemblage fractionné,

   - une étape de séparation de l'ensemble fractionné entre:
      ∘ le premier assemblage fractionné, et
      ∘ le noyau transitoire.

Dans cette première variante de la deuxième forme de réalisation, M'=M4'+M2' et M4'=M1'.

Dans cette première variante de la deuxième forme de réalisation, l'ensemble fractionné comprend la couche constituée par le ou les M4' élément(s) filaire(s) métallique(s) et le noyau transitoire, le ou les M4' élément(s) filaire(s) métallique(s) étant enroulé(s) en hélice autour du noyau transitoire. De préférence, l'ensemble fractionné est constitué de la couche constituée par le ou les M4' élément(s) filaire(s) métallique(s) et du noyau transitoire, le ou les M4' élément(s) filaire(s) métallique(s) étant enroulés en hélice autour du noyau transitoire.

Dans cette première variante de la deuxième forme de réalisation, l'étape de séparation de l'assemblage transitoire entre l'ensemble fractionné et le deuxième assemblage fractionné a lieu en amont de l'étape de séparation de l'ensemble fractionné entre le premier assemblage fractionné et le noyau transitoire ou un ou plusieurs ensembles comprenant le noyau transitoire, de préférence le noyau transitoire.

Avantageusement, dans cette première variante de la deuxième forme de réalisation, l'étape de séparation de l'assemblage transitoire entre l'ensemble fractionné et le deuxième assemblage fractionné comprend une étape de fractionnement de l'assemblage transitoire en :
- l'ensemble fractionné et
- le deuxième assemblage fractionné.

Avantageusement, dans cette première variante de la deuxième forme de réalisation, l'étape de séparation de l'ensemble fractionné entre le premier assemblage fractionné et le noyau transitoire ou un ou plusieurs ensembles comprenant le noyau transitoire, de préférence le noyau transitoire comprend une étape de fractionnement de l'ensemble fractionné en :
- le premier assemblage fractionné, et
- le noyau transitoire.

Dans une deuxième variante de la deuxième forme de réalisation dans laquelle le noyau transitoire est séparé avec le deuxième assemblage fractionné, l'étape de séparation de l'assemblage transitoire entre au moins le premier assemblage fractionné, le deuxième assemblage fractionné et le noyau transitoire ou un ou plusieurs ensembles comprenant le noyau transitoire comprend, en amont de l'étape de réassemblage:
- une étape de séparation de l'assemblage transitoire entre:
   ∘ un ensemble fractionné comprenant au moins une couche constituée de M4'>1 éléments filaires métalliques enroulés en hélice autour du noyau transitoire, les M4'>1 éléments filaires métalliques étant issus de la couche constituée des M'>1 éléments filaires métalliques de l'assemblage transitoire, et
   ∘ le premier assemblage fractionné
- une étape de séparation de l'ensemble fractionné entre:
   ∘ le deuxième assemblage fractionné, et
   ∘ le noyau transitoire.

Dans cette deuxième variante de la deuxième forme de réalisation, M'=M4'+M1' et M4'=M2'.

Tout comme dans la première variante, dans cette deuxième variante de la deuxième forme de réalisation, l'ensemble fractionné comprend la couche constituée par les M4' éléments filaires métalliques et le noyau transitoire, les M4' éléments filaires métalliques étant enroulés en hélice autour du noyau transitoire. De préférence, l'ensemble fractionné est constitué de la couche constituée par les M4' éléments filaires métalliques et du noyau transitoire, les éléments filaires métalliques étant enroulés en hélice autour du noyau transitoire.

Dans cette deuxième variante de la deuxième forme de réalisation, l'étape de séparation de l'assemblage transitoire entre l'ensemble fractionné et le premier assemblage fractionné a lieu en amont de l'étape de séparation de l'ensemble fractionné entre le deuxième assemblage fractionné et le noyau transitoire ou un ou plusieurs ensembles comprenant le noyau transitoire, de préférence le noyau transitoire.

Avantageusement, dans cette deuxième variante de la deuxième forme de réalisation, l'étape de séparation de l'assemblage transitoire entre l'ensemble fractionné et le premier assemblage fractionné comprend une étape de fractionnement de l'assemblage transitoire en :
- l'ensemble fractionné, et
- le premier assemblage fractionné.

Avantageusement, dans cette deuxième variante de la deuxième forme de réalisation, l'étape de séparation de l'ensemble fractionné entre le deuxième assemblage fractionné et le noyau transitoire ou un ou plusieurs ensembles comprenant le noyau transitoire, de préférence le noyau transitoire, comprend une étape de fractionnement de l'ensemble fractionné en :
- le deuxième assemblage fractionné, et
- le noyau transitoire ou un ou plusieurs ensembles comprenant le noyau transitoire, de préférence le noyau transitoire.

Dans une troisième variante de la deuxième forme de réalisation dans laquelle le noyau transitoire est séparé en deux parties allant chacune avec les premier et deuxième assemblages fractionnés, l'étape de séparation de l'assemblage transitoire entre au moins le premier assemblage fractionné, le deuxième assemblage fractionné et le noyau transitoire ou un ou plusieurs ensembles comprenant le noyau transitoire comprend, en amont de l'étape de réassemblage:
- une étape de séparation de l'assemblage transitoire entre:
   ∘ un premier ensemble fractionné comprenant au moins une couche constituée par M6'≥1 élément(s) filaire(s) métallique(s) enroulé(s) en hélice autour d'une première partie du noyau transitoire, le ou les M6'≥1 élément(s) filaire(s) métallique(s) étant issu(s) de la couche constituée des M' éléments filaires métalliques de l'assemblage transitoire, et
   ∘ un deuxième ensemble fractionné comprenant au moins une couche constituée par M7'>1 éléments filaires métalliques enroulés en hélice autour d'une deuxième partie du noyau transitoire, les M7'>1 éléments filaires métalliques étant issus de la couche constituée des M' éléments filaires métalliques de l'assemblage transitoire,
   la première partie du noyau transitoire et la deuxième partie du noyau transitoire constituant, préalablement à l'étape de séparation de l'assemblage transitoire, le noyau transitoire
- une étape de séparation du premier ensemble fractionné entre:
   ∘ le premier assemblage fractionné, et
   ∘ la première partie du noyau transitoire,
- une étape de séparation du deuxième ensemble fractionné entre:
   ∘ le deuxième assemblage fractionné, et
   ∘ la deuxième partie du noyau transitoire.

Dans cette troisième variante de la deuxième forme de réalisation, M'= M 6'+ M 7', M6'=M1' et M7'=M2'.

Dans cette troisième variante de la deuxième forme de réalisation, le premier ensemble fractionné comprend la couche constituée par le ou les M6' élément(s) filaire(s) métallique(s) et la première partie du noyau transitoire, le ou les M6' élément(s) filaire(s) métallique(s) étant enroulé(s) en hélice autour de la première partie du noyau transitoire. De préférence, le premier ensemble fractionné est constitué de la couche constituée du ou des M6' élément(s) filaire(s) métallique(s) et de la première partie du noyau transitoire, le ou les M6' élément(s) filaire(s) métallique(s) étant enroulé(s) en hélice autour de la première partie du noyau transitoire.

De façon analogue, dans cette troisième variante, le deuxième ensemble fractionné comprend la couche constituée par les M7' éléments filaires métalliques et la deuxième partie du noyau transitoire, les M7' éléments filaires métalliques étant enroulés en hélice autour de la deuxième partie du noyau transitoire. De préférence, le deuxième ensemble fractionné est constitué de la couche constituée des M7' éléments filaires métalliques et de la deuxième partie du noyau transitoire, les M7' éléments filaires métalliques étant enroulés en hélice autour de la deuxième partie du noyau transitoire.

Dans cette troisième variante de la deuxième forme de réalisation, l'étape de séparation de l'assemblage transitoire entre le premier ensemble fractionné et le deuxième ensemble fractionné a lieu en amont de l'étape de séparation du premier ensemble fractionné entre le premier assemblage fractionné et la première partie du noyau transitoire.

Dans cette configuration de la deuxième forme de réalisation, l'étape de séparation de l'assemblage transitoire entre le premier ensemble fractionné et le deuxième ensemble fractionné a lieu en amont de l'étape de séparation du deuxième ensemble fractionné entre le deuxième assemblage fractionné et la deuxième partie du noyau transitoire.

Avantageusement, dans cette troisième variante de la deuxième forme de réalisation, l'étape de séparation de l'assemblage transitoire entre le premier ensemble fractionné et le deuxième ensemble fractionné comprend une étape de fractionnement de l'assemblage transitoire en :
- le premier ensemble fractionné, et
- le deuxième ensemble fractionné.

Avantageusement, dans cette troisième variante de la deuxième forme de réalisation, l'étape de séparation du premier ensemble fractionné entre le premier assemblage fractionné et la première partie du noyau transitoire comprend une étape de fractionnement du premier ensemble fractionné en :
- le premier assemblage fractionné, et
- la première partie du noyau transitoire.

Avantageusement, dans cette troisième variante de la deuxième forme de réalisation, l'étape de séparation du deuxième ensemble fractionné entre le deuxième assemblage fractionné et la deuxième partie du noyau transitoire comprend une étape de fractionnement du deuxième ensemble fractionné en :
- le deuxième assemblage fractionné, et
- la deuxième partie du noyau transitoire.

Dans une quatrième variante de la deuxième forme de réalisation dans laquelle le premier assemblage fractionné, le deuxième assemblage fractionné, le noyau transitoire sont séparés simultanément, l'étape de séparation de l'assemblage transitoire entre au moins le premier assemblage fractionné, le deuxième assemblage fractionné et le noyau transitoire comprend, en amont de l'étape de réassemblage, une étape de fractionnement de l'assemblage transitoire entre :
- le premier assemblage fractionné,
- le deuxième assemblage fractionné, et
- le noyau transitoire.

Dans une cinquième variante de la deuxième forme de réalisation dans laquelle le noyau transitoire est séparé en deux parties, l'étape de séparation de l'assemblage transitoire entre au moins le premier assemblage fractionné, le deuxième assemblage fractionné et le noyau transitoire comprend, en amont de l'étape de réassemblage, une étape de fractionnement de l'assemblage transitoire entre :
- le premier assemblage fractionné,
- le deuxième assemblage fractionné,
- une première partie du noyau transitoire,
- une deuxième partie du noyau transitoire,
la première partie du noyau transitoire et la deuxième partie du noyau transitoire constituant, préalablement à l'étape de séparation de l'assemblage transitoire, le noyau transitoire.

Dans un mode de réalisation particulièrement préféré, l'assemblage final étant constitué de la couche constituée de N' éléments filaires métalliques enroulés en hélice, le procédé comprend :
- une étape de fourniture d'un assemblage transitoire constituée de la couche constituée de M'>1 éléments filaires métalliques enroulés en hélice autour du noyau transitoire,
- une étape de séparation de l'assemblage transitoire entre au moins:
- le premier assemblage fractionné constitué de la couche constituée de M1'≥1 élément(s) filaire(s) métallique(s) enroulé(s) en hélice, le ou les M1' élément(s) filaire(s) métallique(s) étant issu(s) de la couche constituée de M'>1 éléments filaires métalliques de l'assemblage transitoire,
- le deuxième assemblage fractionné constitué de la couche constituée de M2'>1 éléments filaires métalliques enroulés en hélice, les M2' éléments filaires métalliques étant issus de la couche constituée de M'>1 éléments filaires métalliques de l'assemblage transitoire, et
- le noyau transitoire ou un ou plusieurs ensembles comprenant le noyau transitoire, de préférence le noyau transitoire.

Dans ce mode de réalisation particulièrement préféré, l'assemblage final est constitué d'une unique couche de N'>1 éléments filaires métalliques enroulés en hélice et est donc dépourvu d'âme centrale autour de laquelle seraient enroulés les N' éléments filaires métalliques. On parle alors également d'assemblage final de structure 1xN' ou bien encore d'assemblage final à structure ouverte (« open-cord » en anglais).

Avantageusement, M' va de 4 à 18 et de préférence de 6 à 9.

Avantageusement, afin de faciliter la sortie du noyau transitoire dans les modes de réalisation dans lesquels le noyau transitoire est séparé avec le premier assemblage fractionné:
- M1'=1 ou 2 dans les cas où M'=4 ou M'=5 et
- M1' ≤ 0,75 x M' et de préférence M1' ≤ 0,70 x M' dans les cas où M'≥6.

Avantageusement, de façon analogue, afin de faciliter la sortie du noyau transitoire dans les modes de réalisation dans lesquels le noyau transitoire est séparé avec le deuxième assemblage fractionné:
- M2'=1 ou 2 dans les cas où M'=4 ou M'=5 et
- M2' ≤ 0,75 x M' et de préférence M2' ≤ 0,70 x M' dans les cas où M'≥6.

Avantageusement, de façon analogue, afin de faciliter la sortie du noyau transitoire dans les modes de réalisation dans lesquels le noyau transitoire est séparé en deux parties allant chacune avec les premier et deuxième assemblages fractionnés:
- M1 '=1, 2 ou 3 et M2'=1 ,2 ou 3 dans les cas où M'=4 ou M'=5 et
- M1' ≤ 0,75 x M' dans les cas où M'≥6.
- M2' ≤ 0,75 x M' dans les cas où M'≥6.

Afin de faciliter encore davantage la sortie du noyau transitoire dans les modes de réalisation dans lesquels le noyau transitoire est séparé en deux parties allant chacune avec les premier et deuxième assemblages dans les cas où M'≥6, M1' ≤ 0,70 x M' et M2' ≤ 0,70 x M'.

De façon très préférentielle, l'étape de fourniture de l'assemblage transitoire comprend une étape d'assemblage par retordage des M'>1 éléments filaires métalliques enroulés en hélice autour du noyau transitoire.

Avantageusement, l'étape de fourniture de l'assemblage transitoire comprend une étape d'équilibrage de l'assemblage transitoire. Ainsi, l'étape d'équilibrage étant réalisée sur l'assemblage transitoire comprenant les M' éléments filaires métalliques et le noyau transitoire, l'étape d'équilibrage est implicitement réalisée en amont de l'étape de séparation entre les premier et deuxième assemblages fractionnés. On évite d'avoir à gérer la torsion résiduelle imposée lors de l'étape d'assemblage de l'assemblage transitoire lors du trajet des différents assemblages en aval de l'étape d'assemblage, notamment dans les moyens de guidage, par exemple les poulies.

Avantageusement, le procédé comprend une étape d'équilibrage de l'assemblage final en aval de l'étape de réassemblage.

Avantageusement, le procédé comprend une étape d'entretien de la rotation de l'assemblage final autour de sa direction de défilement. On réalise cette étape d'entretien de la rotation en aval de l'étape de séparation de l'assemblage transitoire et en amont de l'étape d'équilibrage de l'assemblage final.

De préférence, le procédé est dépourvu d'étapes de préformation individuelle de chacun des éléments filaires métalliques. Dans les procédés de l'état de la technique utilisant une étape de préformation individuelle de chacun des éléments filaires métalliques, ces derniers se voient imposés une forme par des outils de préformation, par exemple des galets, ces outils créant des défauts à la surface des éléments filaires métalliques. Ces défauts réduisent notablement l'endurance des éléments filaires métalliques et donc de l'assemblage final.

De façon très préférée, le noyau transitoire est un élément filaire métallique. Dans un mode de réalisation préféré, le noyau transitoire est un monofilament métallique. Ainsi, on contrôle très précisément le diamètre de l'espace entre les éléments filaires métalliques et donc les caractéristiques géométriques de l'assemblage final au contraire d'un noyau transitoire réalisé dans un matériau textile, par exemple polymérique, dont la compressibilité peut engendrer des variations des caractéristiques géométriques de l'assemblage final.

Dans d'autres modes de réalisation également avantageux, le noyau transitoire est un élément filaire textile. Un tel élément filaire textile comprend au moins un brin textile multifilamentaires ou, en variante, est constitué d'un monofilament textile. Les filaments textiles pouvant être utilisés sont choisis parmi les polyesters, les polycétones, les polyamides aliphatiques ou aromatiques et les mélanges de filaments textiles de ces matériaux. Ainsi, on réduit les risques de casse du noyau transitoire engendrés par les frottements des éléments filaires métalliques sur le noyau transitoire ainsi que par les torsions imposées au noyau transitoire.

Un objet obtenu par un procédé selon l'invention est un assemblage final d'éléments filaires métalliques obtenu par le procédé tel que défini ci-dessus.

Un autre objet obtenu par un procédé selon l'invention est un pneumatique comprenant un assemblage final tel que défini ci-dessus.

Un tel pneumatique est notamment destiné à équiper des véhicules à moteur de type tourisme, SUV (*"Sport Utility Vehicles"*), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

Avantageusement, le pneumatique comprend un sommet comprenant une bande de roulement et une armature de sommet, le pneumatique comprenant deux flancs, deux bourrelets, chaque flanc reliant chaque bourrelet au sommet, l'armature de sommet s'étendant dans le sommet selon une direction circonférentielle du pneumatique, le pneumatique comprenant une armature de carcasse ancrée dans chacun des bourrelets et s'étendant dans les flancs et dans le sommet, l'armature de sommet étant radialement intercalée entre l'armature de carcasse et la bande de roulement. Dans un mode de réalisation, l'armature de sommet comprend un assemblage final tel que défini ci-dessus.

L'invention a également pour objet une installation de fabrication d'un assemblage final comprenant au moins une couche constituée de N'>1 éléments filaires métalliques enroulés en hélice, l'installation comprenant :
- des moyens de fourniture d'un assemblage transitoire comprenant au moins une couche constituée de M'>1 éléments filaires métalliques enroulés en hélice autour d'un noyau transitoire,
- des moyens de séparation de l'assemblage transitoire entre au moins:
   ∘ un premier assemblage fractionné comprenant au moins une couche constituée de M1'≥1 élément(s) filaire(s) métallique(s) enroulé(s) en hélice, le ou les M1' élément(s) filaire(s) métallique(s) étant issu(s) de la couche constituée de M'>1 éléments filaires métalliques de l'assemblage transitoire,
   ∘ un deuxième assemblage fractionné comprenant au moins une couche constituée de M2'>1 éléments filaires métalliques enroulés en hélice, les M2' éléments filaires métalliques étant issus de la couche constituée de M'>1 éléments filaires métalliques de l'assemblage transitoire,
   ∘ le noyau transitoire ou un ou plusieurs ensembles comprenant le noyau transitoire,
l'installation comprenant des moyens de réassemblage d'au moins le premier assemblage fractionné avec le deuxième assemblage fractionné pour former la couche constituée de N' éléments filaires métalliques enroulés en hélice et dans lequel M'>2.

Afin de permettre dans un mode de réalisation avantageux l'obtention d'un assemblage dans lequel les éléments filaires métalliques présentent des caractéristiques géométriques identiques, les moyens de fourniture, les moyens de séparation et les moyens de réassemblage sont agencés de sorte que tous les N' éléments filaires métalliques présentent un même diamètre d, sont enroulés en hélice selon un même pas p et présentent un même diamètre d'hélice φ.

En outre, comme décrit ci-dessus, suivant les différents modes de réalisation, l'étape de séparation et l'étape de réassemblage sont réalisées de sorte que M'≥M1'+M2'=N'.

Dans la présente invention, des moyens de fractionnement d'un objet initial en plusieurs objets finaux signifient que, en mettant en oeuvre ces moyens de fractionnement, l'objet initial est divisé en les objets finaux et seulement ces objets finaux de sorte que l'objet initial se retrouve intégralement dans les objets finaux. De plus, en utilisant des moyens de fractionnement, l'objet initial est divisé en les objets finaux de façon simultanée, c'est-à-dire que les objets finaux sont séparés en un même point de fractionnement. En particulier, dans le cas d'un objet initial fractionné en au moins trois objets finaux, les trois objets finaux sont, en utilisant des moyens de fractionnement, séparés simultanément les uns des autres et en un même point.

Dans la présente invention, des moyens de séparation d'un objet initial entre plusieurs objets finaux signifient que, pour obtenir ces objets finaux, au moins des moyens de fractionnement sont nécessaires. Ainsi, pour obtenir les objets finaux, les moyens de séparation comprennent des moyens de fractionnement de l'objet initial en les objets finaux ou bien comprennent des moyens de fractionnement de l'objet initial en des objets intermédiaires et des moyens de fractionnement des objets intermédiaires en les objets finaux. En utilisant les moyens de séparation, l'objet initial ne se retrouve pas nécessairement intégralement dans les objets finaux, des ensembles ou assemblages ayant pu être extraits du procédé lors de leur passage dans des moyens de fractionnement et non utilisés lors de leur passage dans des moyens de fractionnement ultérieurs. Enfin, des moyens de séparation peuvent comprendre des moyens de réassemblage entre plusieurs objets intermédiaires issus de moyens de fractionnement des moyens de séparation pour obtenir d'autres objets intermédiaires ou bien les objets finaux.

Dans une première forme de réalisation permettant un réassemblage partiel des M' éléments filaires métalliques, les moyens de séparation et les moyens de réassemblage sont agencés de sorte que M1'+M2'<M'.

Dans des première et deuxième variantes de la première forme de réalisation, les moyens de séparation de l'assemblage transitoire entre au moins le premier assemblage fractionné, le deuxième assemblage fractionné et le noyau transitoire ou un ou plusieurs ensembles comprenant le noyau transitoire comprennent, en amont des moyens de réassemblage :
- des moyens de séparation de l'assemblage transitoire entre :
   ∘ un ensemble précurseur comprenant au moins une couche constituée de M1">1 éléments filaires métalliques enroulés en hélice, les M1" éléments filaires métalliques étant issus de la couche constituée de M'>1 éléments filaires métalliques de l'assemblage transitoire,
   ∘ le deuxième assemblage fractionné, et
   ∘ le noyau transitoire ou un ou plusieurs ensembles comprenant le noyau transitoire, de préférence le noyau transitoire

- - des moyens de séparation de l'ensemble précurseur entre:
   ∘ un ensemble principal comprenant au moins une couche constituée de M3≥1 élément(s) filaire(s) métallique(s) enroulé(s) en hélice, le ou les M3≥1 élément(s) filaire(s) métallique(s) étant issu(s) de la couche constituée des M1">1 éléments filaires métalliques de l'ensemble précurseur, l'ensemble principal formant le premier assemblage fractionné et
   ∘ un ensemble complémentaire comprenant au moins une couche constituée de M3'≥1 élément(s) filaire(s) métallique(s) enroulé(s) en hélice, le ou les M3'≥1 élément(s) filaire(s) métallique(s) étant issu(s) de la couche constituée des M1">1 éléments filaires métalliques de l'ensemble précurseur.

Dans cette première forme de réalisation, les moyens de séparation de l'assemblage transitoire entre l'ensemble précurseur, le deuxième assemblage fractionné et le noyau transitoire ou un ou plusieurs ensembles comprenant le noyau transitoire, de préférence le noyau transitoire, sont agencés en amont des moyens de séparation de l'ensemble précurseur entre les ensembles principal et complémentaire.

Avantageusement, les moyens de séparation de l'ensemble précurseur entre l'ensemble principal formant le premier assemblage fractionné et l'ensemble complémentaire comprennent des moyens de fractionnement de l'ensemble précurseur en :
- l'ensemble principal formant le premier assemblage fractionné, et
- l'ensemble complémentaire.

Dans une première variante de la première forme de réalisation dans laquelle le noyau transitoire est séparé avec le premier assemblage fractionné, les moyens de séparation de l'assemblage transitoire entre l'ensemble précurseur, le deuxième assemblage fractionné et le noyau transitoire ou un ou plusieurs ensembles comprenant le noyau transitoire, de préférence le noyau transitoire, comprennent :
- des moyens de séparation de l'assemblage transitoire entre:
   ∘ un ensemble fractionné comprenant au moins une couche constituée de M4'>1 éléments filaires métalliques enroulés en hélice autour du noyau transitoire, les M4' éléments filaires métalliques étant issus de la couche constituée de M' éléments filaires métalliques de l'assemblage transitoire, et
   ∘ le deuxième assemblage fractionné,

- - des moyens de séparation de l'ensemble fractionné entre:
   ∘ l'ensemble précurseur, et
   ∘ le noyau transitoire ou un ou plusieurs ensembles comprenant le noyau transitoire, de préférence le noyau transitoire.

Dans cette première variante, les moyens de séparation de l'ensemble fractionné entre l'ensemble précurseur et le noyau transitoire ou un ou plusieurs ensembles comprenant le noyau transitoire, de préférence le noyau transitoire, sont agencés en amont des moyens de séparation de l'ensemble précurseur entre les ensembles principal et complémentaire.

Avantageusement, dans cette première variante, les moyens de séparation de l'assemblage transitoire entre l'ensemble fractionné et le deuxième assemblage fractionné comprennent des moyens de fractionnement de l'assemblage transitoire en :
- l'ensemble fractionné, et
- le deuxième assemblage fractionné.

Avantageusement, dans cette première variante, les moyens de séparation de l'ensemble fractionné entre l'ensemble précurseur et le noyau transitoire ou un ou plusieurs ensembles comprenant le noyau transitoire, de préférence le noyau transitoire comprennent des moyens de fractionnement de l'ensemble fractionné en :
- l'ensemble précurseur, et
- le noyau transitoire ou un ou plusieurs ensembles comprenant le noyau transitoire, de préférence le noyau transitoire.

Dans une deuxième variante de la première forme de réalisation dans laquelle le noyau transitoire est séparé avec le deuxième assemblage fractionné, les moyens de séparation de l'assemblage transitoire entre l'ensemble précurseur, le deuxième assemblage fractionné et le noyau transitoire ou un ou plusieurs ensembles comprenant le noyau transitoire, de préférence le noyau transitoire, comprennent :
- des moyens de séparation de l'assemblage transitoire entre:
   ∘ un ensemble fractionné comprenant au moins une couche constituée de M4'>1 éléments filaires métalliques enroulés en hélice autour du noyau transitoire, les M4' éléments filaires métalliques étant issus de la couche constituée de M'>1 éléments filaires métalliques de l'assemblage transitoire, et
   ∘ l'ensemble précurseur, et
      - des moyens de séparation de l'ensemble fractionné entre:
   ∘ le deuxième assemblage fractionné, et
   ∘ le noyau transitoire ou un ou plusieurs ensembles comprenant le noyau transitoire, de préférence le noyau transitoire.

Dans cette deuxième variante, les moyens de séparation de l'assemblage transitoire entre l'ensemble fractionné et l'ensemble précurseur sont agencés en amont des moyens de séparation de l'ensemble fractionné entre le deuxième assemblage fractionné et le noyau transitoire ou un ou plusieurs ensembles comprenant le noyau transitoire, de préférence le noyau transitoire.

Avantageusement, dans cette deuxième variante, les moyens de séparation de l'assemblage transitoire entre l'ensemble fractionné et l'ensemble précurseur comprennent des moyens de fractionnement de l'assemblage transitoire en :
- l'ensemble fractionné, et
- l'ensemble précurseur.

Avantageusement, dans cette deuxième variante, les moyens de séparation de l'ensemble fractionné entre le deuxième assemblage fractionné et le noyau transitoire ou un ou plusieurs ensembles comprenant le noyau transitoire, de préférence le noyau transitoire, comprennent des moyens de fractionnement de l'ensemble fractionné en :
- le deuxième assemblage fractionné, et
- le noyau transitoire ou un ou plusieurs ensembles comprenant le noyau transitoire, de préférence le noyau transitoire.

Dans une troisième variante de la première forme de réalisation dans laquelle le noyau transitoire est séparé avec le premier assemblage fractionné, les moyens de séparation de l'assemblage transitoire entre au moins le premier assemblage fractionné, le deuxième assemblage fractionné et le noyau transitoire ou un ou plusieurs ensembles comprenant le noyau transitoire, de préférence le noyau transitoire, comprennent, en amont des moyens de réassemblage:
- des moyens de séparation de l'assemblage transitoire entre:
   ∘ un ensemble fractionné comprenant au moins une couche constituée de M4'>1 éléments filaires métalliques enroulés en hélice autour du noyau transitoire, les M4' éléments filaires métalliques étant issus de la couche constituée de M' éléments filaires métalliques de l'assemblage transitoire, et
   ∘ le deuxième assemblage fractionné.
- des moyens de séparation de l'ensemble fractionné entre:
   ∘ le premier assemblage fractionné, et
   ∘ le noyau transitoire ou un ou plusieurs ensembles comprenant le noyau transitoire, de préférence le noyau transitoire.

Dans cette troisième variante, les moyens de séparation de l'assemblage transitoire entre l'ensemble fractionné et le deuxième assemblage fractionné sont agencés en amont des moyens de séparation de l'ensemble fractionné entre le premier assemblage fractionné et le noyau transitoire ou un ou plusieurs ensembles comprenant le noyau transitoire, de préférence le noyau transitoire.

Avantageusement, dans cette troisième variante, les moyens de séparation de l'assemblage transitoire entre l'ensemble fractionné et le deuxième assemblage fractionné comprennent des moyens de fractionnement de l'assemblage transitoire en :
- l'ensemble fractionné, et
- le deuxième assemblage fractionné.

|Avantageusement, les moyens de séparation de l'ensemble fractionné entre le premier assemblage fractionné et le noyau transitoire ou un ou plusieurs ensembles comprenant le noyau transitoire, de préférence le noyau transitoire, comprennent des moyens de séparation de l'ensemble fractionné entre:
∘ un ensemble principal comprenant au moins une couche constituée de M3≥1 élément(s) filaire(s) métallique(s) enroulé(s) en hélice, le ou les M3≥1 élément(s) filaire(s) métallique(s) étant issu(s) de la couche constituée des M4'>1 éléments filaires métalliques de l'ensemble fractionné, l'ensemble principal formant le premier assemblage fractionné,
∘ un ensemble complémentaire comprenant au moins une couche constituée de M3'≥1 élément(s) filaire(s) métallique(s) enroulé(s) en hélice, le ou les M3'≥1 élément(s) filaire(s) métallique(s) étant issu(s) de la couche constituée des M4'>1 éléments filaires métalliques de l'ensemble fractionné, et
∘ le noyau transitoire ou un ou plusieurs ensembles comprenant le noyau transitoire, de préférence le noyau transitoire.

Avantageusement, les moyens de séparation de l'ensemble fractionné entre l'ensemble principal formant le premier assemblage fractionné, l'ensemble complémentaire et le noyau transitoire ou un ou plusieurs ensembles comprenant le noyau transitoire, de préférence le noyau transitoire, comprennent:
- des moyens de séparation de l'ensemble fractionné entre:
   ∘ l'ensemble principal formant le premier assemblage fractionné,
   ∘ un ensemble dérivé comprenant au moins une couche constituée de M5'≥1 élément(s) filaire(s) métallique(s) enroulé(s) en hélice autour d'un noyau transitoire, le ou les M5'≥1 élément(s) filaire(s) métallique(s) étant issu(s) de la couche constituée des M4'>1 éléments filaires métalliques de l'ensemble fractionné,
- des moyens de séparation de l'ensemble dérivé entre:
   ∘ l'ensemble complémentaire,
   ∘ le noyau transitoire ou un ou plusieurs ensembles comprenant le noyau transitoire, de préférence le noyau transitoire.

Dans cette troisième variante, les moyens de séparation de l'ensemble fractionné entre l'ensemble principal et l'ensemble dérivé sont agencés en amont des moyens de séparation de l'ensemble dérivé entre l'ensemble complémentaire et le noyau transitoire ou un ou plusieurs ensembles comprenant le noyau transitoire, de préférence le noyau transitoire.

Avantageusement, dans cette troisième variante, les moyens de séparation de l'ensemble fractionné entre l'ensemble principal formant le premier assemblage fractionné et l'ensemble dérivé comprennent des moyens de fractionnement de l'ensemble fractionné en :
- l'ensemble principal formant le premier assemblage fractionné, et
- l'ensemble dérivé.

Avantageusement, dans cette troisième variante, les moyens de séparation de l'ensemble dérivé entre l'ensemble complémentaire et le noyau transitoire ou un ou plusieurs ensembles comprenant le noyau transitoire, de préférence le noyau transitoire comprennent des moyens de fractionnement de l'ensemble dérivé en :
- l'ensemble complémentaire, et
- le noyau transitoire ou un ou plusieurs ensembles comprenant le noyau transitoire, de préférence le noyau transitoire.

Dans une quatrième variante de la première forme de réalisation dans laquelle le premier assemblage fractionné, le deuxième assemblage fractionné, le noyau transitoire sont séparés simultanément, les moyens de séparation de l'assemblage transitoire entre au moins le premier assemblage fractionné, le deuxième assemblage fractionné et le noyau transitoire ou un ou plusieurs ensembles comprenant le noyau transitoire comprennent, en amont des moyens de réassemblage, des moyens de fractionnement de l'assemblage transitoire entre :
- le premier assemblage fractionné,
- le deuxième assemblage fractionné,
- le noyau transitoire ou un ou plusieurs ensembles comprenant le noyau transitoire, de préférence le noyau transitoire, et
- un ensemble fractionné comprenant au moins une couche constituée de M4'≥1 élément(s) filaire(s) métallique(s) enroulé(s) en hélice, le ou les M4' élément(s) filaire(s) métallique(s) étant issu(s) de la couche constituée de M' éléments filaires métalliques de l'assemblage transitoire.

Dans une configuration de la première forme de réalisation dans laquelle le noyau transitoire est séparé en deux parties allant chacune avec les premier et deuxième assemblages fractionnés, les moyens de séparation de l'assemblage transitoire entre au moins le premier assemblage fractionné, le deuxième assemblage fractionné et le noyau transitoire ou un ou plusieurs ensembles comprenant le noyau transitoire comprennent, en amont des moyens de réassemblage :
- des moyens de séparation de l'assemblage transitoire entre:
   ∘ un premier ensemble fractionné comprenant au moins une couche constituée par M6'>1 éléments filaires métalliques enroulés en hélice autour d'une première partie du noyau transitoire, les M6'>1 éléments filaires métalliques étant issus de la couche constituée des M' éléments filaires métalliques de l'assemblage transitoire, et
   ∘ un deuxième ensemble fractionné comprenant au moins une couche constituée par M7'>1 éléments filaires métalliques enroulés en hélice autour d'une deuxième partie du noyau transitoire, les M7'>1 éléments filaires métalliques étant issus de la couche constituée des M' éléments filaires métalliques de l'assemblage transitoire,
   la première partie du noyau transitoire et la deuxième partie du noyau transitoire constituant, en amont des moyens de séparation de l'assemblage transitoire, le noyau transitoire
- des moyens de séparation du premier ensemble fractionné entre :
   ∘ le premier assemblage fractionné,
   ∘ la première partie du noyau transitoire ou un ou plusieurs ensembles comprenant la première partie du noyau transitoire, de préférence la première partie du noyau transitoire
- des moyens de séparation du deuxième ensemble fractionné entre:
   ∘ le deuxième assemblage fractionné, et
   ∘ la deuxième partie du noyau transitoire ou un ou plusieurs ensembles comprenant la deuxième partie du noyau transitoire, de préférence la deuxième partie du noyau transitoire.

Dans cette configuration de la première forme de réalisation, les moyens de séparation de l'assemblage transitoire entre le premier ensemble fractionné et le deuxième ensemble fractionné sont agencés en amont des moyens de séparation du premier ensemble fractionné entre le premier assemblage fractionné et la première partie du noyau transitoire ou un ou plusieurs ensembles comprenant la première partie du noyau transitoire, de préférence la première partie du noyau transitoire.

Dans cette configuration de la première forme de réalisation, les moyens de séparation de l'assemblage transitoire entre le premier ensemble fractionné et le deuxième ensemble fractionné sont agencés en amont des moyens de séparation du deuxième ensemble fractionné entre le deuxième assemblage fractionné, et la deuxième partie du noyau transitoire ou un ou plusieurs ensembles comprenant la deuxième partie du noyau transitoire, de préférence la deuxième partie du noyau transitoire.

Avantageusement, dans cette configuration de la première forme de réalisation, les moyens de séparation de l'assemblage transitoire entre le premier ensemble fractionné et le deuxième ensemble fractionné comprennent des moyens de fractionnement de l'assemblage transitoire en :
- le premier ensemble fractionné, et
- le deuxième ensemble fractionné.

Avantageusement, dans cette configuration de la première forme de réalisation, les moyens de séparation du deuxième ensemble fractionné entre le deuxième assemblage fractionné et la deuxième partie du noyau transitoire ou un ou plusieurs ensembles comprenant la deuxième partie du noyau transitoire, de préférence la deuxième partie du noyau transitoire comprennent des moyens de fractionnement du deuxième ensemble fractionné en :
- le deuxième assemblage fractionné, et
- la deuxième partie du noyau transitoire ou un ou plusieurs ensembles comprenant la deuxième partie du noyau transitoire, de préférence la deuxième partie du noyau transitoire.

Avantageusement, dans cette configuration de la première forme de réalisation dans laquelle le noyau transitoire est séparé en deux parties allant chacune avec les premier et deuxième assemblages fractionnés, les moyens de séparation du premier ensemble fractionné entre le premier assemblage fractionné et la première partie du noyau transitoire ou un ou plusieurs ensembles comprenant la première partie du noyau transitoire, de préférence la première partie du noyau transitoire, comprennent des moyens de séparation du premier ensemble fractionné entre :
- un ensemble principal comprenant au moins une couche constituée de M3≥1 élément(s) filaire(s) métallique(s) enroulé(s) en hélice, le ou les M3≥1 élément(s) filaire(s) métallique(s) étant issu(s) de la couche constituée des M6'>1 éléments filaires métalliques du premier ensemble fractionné, l'ensemble principal formant le premier assemblage fractionné,
- un ensemble complémentaire comprenant au moins une couche constituée de M3'≥1 élément(s) filaire(s) métallique(s) enroulé(s) en hélice, le ou les M3'≥1 élément(s) filaire(s) métallique(s) étant issu(s) de la couche constituée des M6'>1 éléments filaires métalliques du premier ensemble fractionné, et
- la première partie du noyau transitoire ou un ou plusieurs ensembles comprenant la première partie du noyau transitoire, de préférence la première partie du noyau transitoire.

Dans une première variante de cette configuration de la première forme de réalisation dans laquelle le noyau transitoire est séparé en deux parties allant chacune avec les premier et deuxième assemblages fractionnés, les moyens de séparation du premier ensemble fractionné entre l'ensemble principal formant le premier assemblage fractionné, l'ensemble complémentaire et la première partie du noyau transitoire ou un ou plusieurs ensembles comprenant la première partie du noyau transitoire, de préférence la première partie du noyau transitoire, comprennent:
- des moyens de séparation du premier ensemble fractionné entre:
   ∘ un ensemble précurseur comprenant au moins une couche constituée de M1">1 éléments filaires métalliques enroulés en hélice, les M1" éléments filaires métalliques étant issus de la couche constituée de M6'>1 éléments filaires métalliques du premier ensemble fractionné,
   ∘ la première partie du noyau transitoire ou un ou plusieurs ensembles comprenant la première partie du noyau transitoire, de préférence la première partie du noyau transitoire,
      - des moyens de séparation de l'ensemble précurseur entre:
   ∘ l'ensemble principal formant le premier assemblage fractionné et
   ∘ l'ensemble complémentaire.

Dans cette première variante de cette configuration de la première forme de réalisation, les moyens de séparation du premier ensemble fractionné entre l'ensemble précurseur et la première partie du noyau transitoire ou un ou plusieurs ensembles comprenant la première partie du noyau transitoire, de préférence la première partie du noyau transitoire, sont agencés en amont des moyens de séparation de l'ensemble précurseur entre l'ensemble principal formant le premier assemblage fractionné et l'ensemble complémentaire.

Avantageusement, dans cette première variante de cette configuration de la première forme de réalisation, les moyens de séparation du premier ensemble fractionné entre l'ensemble précurseur et la première partie du noyau transitoire ou un ou plusieurs ensembles comprenant la première partie du noyau transitoire, de préférence la première partie du noyau transitoire, comprennent des moyens de fractionnement du premier ensemble fractionné en :
- l'ensemble précurseur, et
- la première partie du noyau transitoire ou un ou plusieurs ensembles comprenant la première partie du noyau transitoire, de préférence la première partie du noyau transitoire.

Avantageusement, dans cette première variante de cette configuration de la première forme de réalisation, les moyens de séparation de l'ensemble précurseur entre l'ensemble principal formant le premier assemblage fractionné et l'ensemble complémentaire comprennent des moyens de fractionnement de l'ensemble précurseur en :
- l'ensemble principal formant le premier assemblage fractionné, et
- l'ensemble complémentaire.

Dans une deuxième variante de cette configuration de la première forme de réalisation dans laquelle le noyau transitoire est séparé en deux parties allant chacune avec les premier et deuxième assemblages fractionnés, les moyens de séparation du premier ensemble fractionné entre l'ensemble principal formant le premier assemblage fractionné, l'ensemble complémentaire et la première partie du noyau transitoire ou un ou plusieurs ensembles comprenant la première partie du noyau transitoire, de préférence la première partie du noyau transitoire, comprennent:
- des moyens de séparation du premier ensemble fractionné entre:
   ∘ l'ensemble principal formant le premier assemblage fractionné,
   ∘ un ensemble dérivé comprenant au moins une couche constituée de M5'≥1 élément(s) filaire(s) métallique(s) enroulé(s) en hélice autour de la première partie du noyau transitoire, le ou les M5'≥1 élément(s) filaire(s) métallique(s) étant issu(s) de la couche constituée des M6'>1 éléments filaires métalliques du premier ensemble fractionné,

- des moyens de séparation de l'ensemble dérivé entre:
   ∘ l'ensemble complémentaire,
   ∘ la première partie du noyau transitoire ou un ou plusieurs ensembles comprenant le noyau transitoire, de préférence la première partie du noyau transitoire.

Dans cette deuxième variante de cette configuration de la première forme de réalisation, les moyens de séparation du premier ensemble fractionné entre l'ensemble principal et l'ensemble dérivé sont agencés en amont des moyens de séparation de l'ensemble dérivé entre l'ensemble complémentaire et la première partie du noyau transitoire ou un ou plusieurs ensembles comprenant la première partie du noyau transitoire, de préférence la première partie du noyau transitoire.

Avantageusement, dans cette deuxième variante de cette configuration de la première forme de réalisation, les moyens de séparation du premier ensemble fractionné entre l'ensemble principal formant le premier assemblage fractionné et l'ensemble dérivé comprennent des moyens de fractionnement du premier ensemble fractionné en :
- l'ensemble principal formant le premier assemblage fractionné, et
- l'ensemble dérivé.

Avantageusement, dans cette deuxième variante de cette configuration de la première forme de réalisation, les moyens de séparation de l'ensemble dérivé entre l'ensemble complémentaire et la première partie du noyau transitoire ou un ou plusieurs ensembles comprenant le noyau transitoire, de préférence la première partie du noyau transitoire comprennent des moyens de fractionnement de l'ensemble dérivé en :
- l'ensemble complémentaire, et
- la première partie du noyau transitoire ou un ou plusieurs ensembles comprenant le noyau transitoire, de préférence la première partie du noyau transitoire.

Dans une autre configuration de la première forme de réalisation dans laquelle le noyau transitoire est séparé en deux parties, les moyens de séparation de l'assemblage transitoire entre au moins le premier assemblage fractionné, le deuxième assemblage fractionné et le noyau transitoire ou un ou plusieurs ensembles comprenant le noyau transitoire comprennent, en amont des moyens de réassemblage, des moyens de fractionnement de l'assemblage transitoire entre :
- le premier assemblage fractionné,
- le deuxième assemblage fractionné,
- une première partie du noyau transitoire,
- une deuxième partie du noyau transitoire,
   la première partie du noyau transitoire et la deuxième partie du noyau transitoire constituant, préalablement à l'étape de séparation de l'assemblage transitoire, le noyau transitoire,
- un ensemble fractionné comprenant au moins une couche constituée de M4'≥1 élément(s) filaire(s) métallique(s) enroulé(s) en hélice, le ou les M4' élément(s) filaire(s) métallique(s) étant issu(s) de la couche constituée de M' éléments filaires métalliques de l'assemblage transitoire.

Dans une deuxième forme de réalisation permettant un réassemblage total des M' éléments filaires métalliques, les moyens de séparation et les moyens de réassemblage sont agencés de sorte que M1'+M2'=M'.

Dans une première variante de la deuxième forme de réalisation dans laquelle le noyau transitoire est séparé avec le premier assemblage fractionné, les moyens de séparation de l'assemblage transitoire entre au moins le premier assemblage fractionné, le deuxième assemblage fractionné et le noyau transitoire ou un ou plusieurs ensembles comprenant le noyau transitoire comprennent, en amont des moyens de réassemblage:
- des moyens de séparation de l'assemblage transitoire entre:
   ∘ un ensemble fractionné comprenant au moins une couche constituée par M4'≥1 élément(s) filaire(s) métallique(s) enroulé(s) en hélice autour du noyau transitoire, le ou les M4'≥1 élément(s) filaire(s) métallique(s) étant issu(s) de la couche constituée des M'>1 éléments filaires métalliques de l'assemblage transitoire et
   ∘ le deuxième assemblage fractionné,
- des moyens de séparation de l'ensemble fractionné entre:
   ∘ le premier assemblage fractionné, et
   ∘ le noyau transitoire.

Dans cette première variante de la deuxième forme de réalisation, les moyens de séparation de l'assemblage transitoire entre l'ensemble fractionné et le deuxième assemblage fractionné sont agencés en amont des moyens de séparation de l'ensemble fractionné entre le premier assemblage fractionné et le noyau transitoire.

Avantageusement, dans cette première variante de la deuxième forme de réalisation, les moyens de séparation de l'assemblage transitoire entre l'ensemble fractionné et le deuxième assemblage fractionné comprennent des moyens de fractionnement de l'assemblage transitoire entre l'ensemble fractionné et le deuxième assemblage fractionné.

Avantageusement, dans cette première variante de la deuxième forme de réalisation, les moyens de séparation de l'ensemble fractionné entre le premier assemblage fractionné et le noyau transitoire comprennent des moyens de fractionnement de l'ensemble fractionné en :
- le premier assemblage fractionné, et
- le noyau transitoire.

Dans une deuxième variante de la deuxième forme de réalisation dans laquelle le noyau transitoire est séparé avec le deuxième assemblage fractionné, les moyens de séparation de l'assemblage transitoire entre au moins le premier assemblage fractionné, le deuxième assemblage fractionné et le noyau transitoire ou un ou plusieurs ensembles comprenant le noyau transitoire comprennent, en amont des moyens de réassemblage:
- des moyens de séparation de l'assemblage transitoire entre:
   ∘ un ensemble fractionné comprenant au moins une couche constituée de M4'>1 éléments filaires métalliques enroulés en hélice autour du noyau transitoire, les M4'>1 éléments filaires métalliques étant issus de la couche constituée des M'>1 éléments filaires métalliques de l'assemblage transitoire et
   ∘ le premier assemblage fractionné

- des moyens de séparation de l'ensemble fractionné entre:
   ∘ le deuxième assemblage fractionné, et
   ∘ le noyau transitoire.

Dans cette deuxième variante de la deuxième forme de réalisation, les moyens de séparation de l'assemblage transitoire entre l'ensemble fractionné et le premier assemblage fractionné sont agencés en amont des moyens de séparation de l'ensemble fractionné entre le deuxième assemblage fractionné et le noyau transitoire.

Avantageusement, dans cette deuxième variante de la deuxième forme de réalisation, les moyens de séparation de l'assemblage transitoire entre l'ensemble fractionné et le premier assemblage fractionné comprennent des moyens de fractionnement de l'assemblage transitoire en :
- l'ensemble fractionné, et
- le premier assemblage fractionné.

Avantageusement, dans cette deuxième variante de la deuxième forme de réalisation, les moyens de séparation de l'ensemble fractionné entre le deuxième assemblage fractionné et le noyau transitoire comprennent des moyens de fractionnement de l'ensemble fractionné en :
- le deuxième assemblage fractionné, et
- le noyau transitoire.

Dans une troisième variante de la deuxième forme de réalisation dans laquelle le noyau transitoire est séparé en deux parties allant chacune avec les premier et deuxième assemblages fractionnés, les moyens de séparation de l'assemblage transitoire entre au moins le premier assemblage fractionné, le deuxième assemblage fractionné et le noyau transitoire ou un ou plusieurs ensembles comprenant le noyau transitoire comprennent, en amont des moyens de réassemblage:
- des moyens de séparation de l'assemblage transitoire entre:
   ∘ un premier ensemble fractionné comprenant au moins une couche constituée par M6'≥1 élément(s) filaire(s) métallique(s) enroulé(s) en hélice autour d'une première partie du noyau transitoire, le ou les M6'≥1 élément(s) filaire(s) métallique(s) étant issu(s) de la couche constituée des M' éléments filaires métalliques de l'assemblage transitoire, et
   ∘ un deuxième ensemble fractionné comprenant au moins une couche constituée par M7'>1 éléments filaires métalliques enroulés en hélice autour d'une deuxième partie du noyau transitoire, les M7'>1 éléments filaires métalliques étant issus de la couche constituée des M' éléments filaires métalliques de l'assemblage transitoire,
   la première partie du noyau transitoire et la deuxième partie du noyau transitoire constituant, en amont des moyens de séparation de l'assemblage transitoire, le noyau transitoire
- des moyens de séparation du premier ensemble fractionné entre:
   ∘ le premier assemblage fractionné, et
   ∘ la première partie du noyau transitoire,
- des moyens de séparation du deuxième ensemble fractionné entre:
   ∘ le deuxième assemblage fractionné, et
   ∘ la deuxième partie du noyau transitoire.

Dans cette troisième variante de la deuxième forme de réalisation, les moyens de séparation de l'assemblage transitoire entre le premier ensemble fractionné et le deuxième ensemble fractionné sont agencés en amont des moyens de séparation du premier ensemble fractionné entre le premier assemblage fractionné et la première partie du noyau transitoire.

Dans cette configuration de la deuxième forme de réalisation, les moyens de séparation de l'assemblage transitoire entre le premier ensemble fractionné et le deuxième ensemble fractionné sont agencés en amont des moyens de séparation du deuxième ensemble fractionné entre le deuxième assemblage fractionné, et la deuxième partie du noyau transitoire.

Avantageusement, dans cette troisième variante de la deuxième formede réalisation, les moyens de séparation de l'assemblage transitoire entre le premier ensemble fractionné et le deuxième ensemble fractionné comprennent des moyens de fractionnement de l'assemblage transitoire en le premier ensemble fractionné et le deuxième ensemble fractionné.

Avantageusement, dans cette troisième variante de la deuxième forme de réalisation, les moyens de séparation du premier ensemble fractionné entre le premier assemblage fractionné et la première partie du noyau transitoire comprennent des moyens de fractionnement du premier ensemble fractionné en :
- le premier assemblage fractionné, et
- la première partie du noyau transitoire.

Avantageusement, dans cette troisième variante de la deuxième forme de réalisation, les moyens de séparation du deuxième ensemble fractionné entre le deuxième assemblage fractionné et la deuxième partie du noyau transitoire comprennent des moyens de fractionnement du deuxième ensemble fractionné en :
- le deuxième assemblage fractionné, et
- la deuxième partie du noyau transitoire.

Dans une quatrième variante de la deuxième forme de réalisation dans laquelle le premier assemblage fractionné, le deuxième assemblage fractionné, le noyau transitoire sont séparés simultanément, les moyens de séparation de l'assemblage transitoire entre au moins le premier assemblage fractionné, le deuxième assemblage fractionné et le noyau transitoire comprennent, en amont des moyens de réassemblage, des moyens de fractionnement de l'assemblage transitoire entre :
- le premier assemblage fractionné,
- le deuxième assemblage fractionné, et
- le noyau transitoire.

Dans une cinquième variante de la deuxième forme de réalisation dans laquelle le noyau transitoire est séparé en deux parties, les moyens de séparation de l'assemblage transitoire entre au moins le premier assemblage fractionné, le deuxième assemblage fractionné et le noyau transitoire comprennent, en amont des moyens de réassemblage, des moyens de fractionnement de l'assemblage transitoire entre :
- le premier assemblage fractionné,
- le deuxième assemblage fractionné,
- une première partie du noyau transitoire,
- une deuxième partie du noyau transitoire,
la première partie du noyau transitoire et la deuxième partie du noyau transitoire constituant, préalablement à l'étape de séparation de l'assemblage transitoire, le noyau transitoire.

De façon très préférentielle, les moyens de fourniture de l'assemblage transitoire comprennent des moyens d'assemblage par retordage des M'>1 éléments filaires métalliques enroulés en hélice autour du noyau transitoire.

Avantageusement, les moyens de fourniture de l'assemblage transitoire comprennent des moyens d'équilibrage de l'assemblage transitoire.

L'invention sera mieux comprise à la lecture de la description qui va suivre, donnée uniquement à titre d'exemple non limitatif et faite en se référant aux dessins dans lesquels:
- la figure 1 est un schéma d'une installation selon un premier mode de réalisation de l'invention permettant de mettre en oeuvre un procédé selon un premier mode de réalisation de l'invention et de fabriquer le câble de la figure 11 ;
- la figure 2 est une représentation schématique de l'installation et du procédé illustrés sur la figure 1 ;
- les figures 3 et 4 sont des schémas de moyens de fractionnement et de réassemblage de l'installation de la figure 1 ;
- la figure 5 est une vue en coupe perpendiculaire à l'axe de l'assemblage (supposé rectiligne et au repos) d'un assemblage transitoire du procédé illustré sur les figures 1 et 2;
- la figure 6 est une vue en coupe perpendiculaire à l'axe de l'assemblage (supposé rectiligne et au repos) d'un ensemble précurseur issu de l'assemblage transitoire de la figure 5;
- la figure 7 est une vue en coupe perpendiculaire à l'axe de l'assemblage (supposé rectiligne et au repos) d'un ensemble fractionné issu de l'assemblage transitoire de la figure 5;
- la figure 8 est une vue en coupe perpendiculaire à l'axe de l'assemblage (supposé rectiligne et au repos) d'un deuxième assemblage fractionné issu de l'ensemble fractionné de la figure 7;
- la figure 9 est une vue en coupe perpendiculaire à l'axe de l'assemblage (supposé rectiligne et au repos) d'un ensemble principal issu de l'ensemble précurseur de la figure 6 et formant un premier assemblage fractionné;
- la figure 10 est une vues en coupe perpendiculaire à l'axe de l'assemblage (supposé rectiligne et au repos) d'un ensemble complémentaire issu de l'ensemble précurseur de la figure 6;
- la figure 11 est une vue en coupe perpendiculaire à l'axe de l'assemblage (supposé rectiligne et au repos) d'un assemblage final issu du réassemblage des premier et deuxième assemblages fractionnés des figures 8 et 9;
- les figures 12 et 13 sont des représentations analogues à celles des figures 1 et 2 d'une installation et d'un procédé selon un deuxième mode de réalisation permettant de fabriquer le câble de la figure 18 ;
- la figure 14 est une vue en coupe perpendiculaire à l'axe de l'assemblage (supposé rectiligne et au repos) d'un assemblage transitoire du procédé illustré sur les figure 12 et 13;
- la figure 15 est une vue en coupe perpendiculaire à l'axe de l'assemblage (supposé rectiligne et au repos) d'un premier assemblage fractionné issu de l'assemblage transitoire de la figure 14;
- la figure 16 est une vue en coupe perpendiculaire à l'axe de l'assemblage (supposé rectiligne et au repos) d'un ensemble fractionné issu de l'assemblage transitoire de la figure 14;
- la figure 17 est une vue en coupe perpendiculaire à l'axe de l'assemblage (supposé rectiligne et au repos) d'un deuxième assemblage fractionné issu de l'ensemble fractionné de la figure 16;
- la figure 18 est une vue en coupe perpendiculaire à l'axe de l'assemblage (supposé rectiligne et au repos) d'un assemblage final issu du réassemblage des premier et deuxième assemblages fractionnés des figures 15 et 17; et
- les figures 19 à 28 sont des représentations schématiques d'installation et de procédé de fabrication analogues à celles des figures 2 et 13 d'autres modes de réalisation de l'invention.

### INSTALLATION ET PROCEDE SELON UN PREMIER MODE DE REALISATION DE L'INVENTION

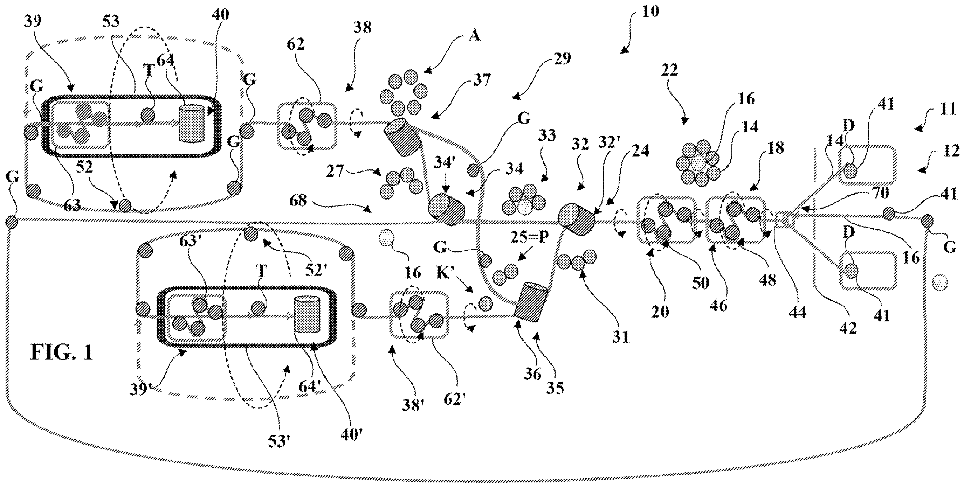

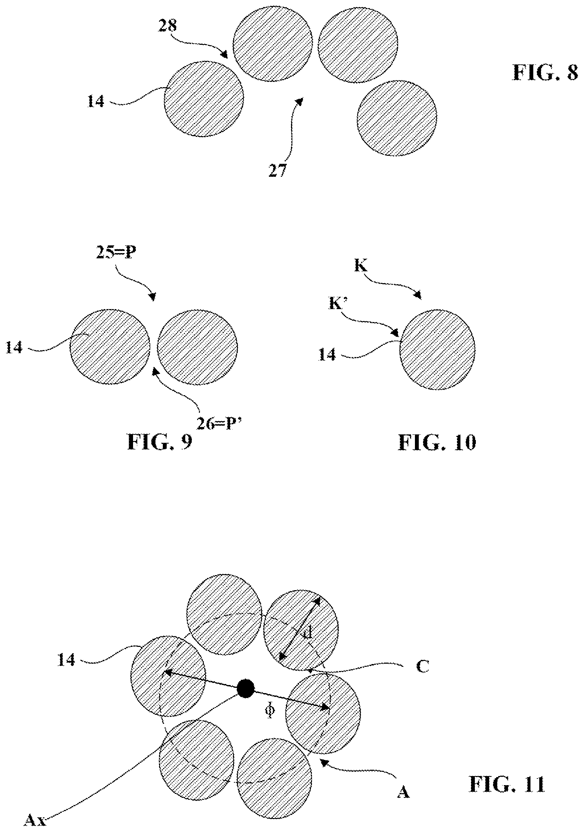

On a représenté sur la figure 1 une installation de fabrication d'un assemblage final A comprenant au moins une couche C de N'>1 éléments filaires métalliques 14 enroulés en hélice. En l'espèce, l'assemblage final A est constitué de la couche C de N'=6 éléments filaires métalliques 14 enroulés en hélice et est représenté sur la figure 11. Ainsi, l'assemblage final A est constitué de l'unique couche C, autrement dit l'assemblage final A ne comprend pas d'autre élément filaire métallique que ceux de la couche C. L'assemblage final A présente un axe principal Ax s'étendant sensiblement parallèlement à la direction selon laquelle l'assemblage final A s'étend selon sa plus grande longueur. Chaque élément filaire métallique 14 de la couche C décrit, lorsque l'assemblage final A, s'étend selon une direction sensiblement rectiligne, une trajectoire en forme d'hélice autour de l'axe principal Ax sensiblement parallèle à la direction sensiblement rectiligne, de sorte que, dans un plan de coupe sensiblement perpendiculaire à l'axe principal Ax, la distance entre le centre de chaque élément filaire métallique 14 de la couche C et l'axe principal Ax est sensiblement constante et égale pour tous les éléments filaires métalliques 14 de la couche C. Cette distance constante entre le centre de chaque élément filaire métallique 14 de la couche C et l'axe principal Ax est égale à la moitié du diamètre d'hélice.

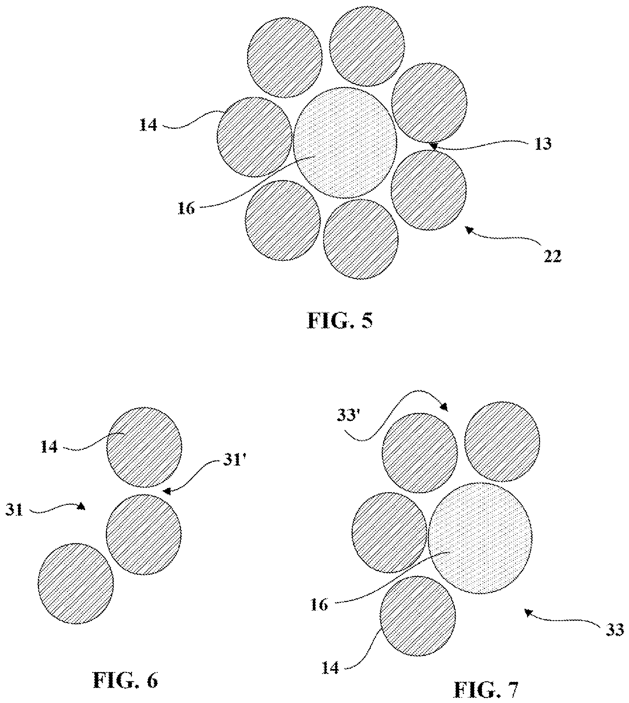

L'installation est désignée par la référence générale 10. L'installation 10 comprend tout d'abord des moyens 11 de fourniture d'un assemblage transitoire 22 comprenant au moins une, et ici constitué d'une couche 13 constituée de M'>1 éléments filaires métalliques 14 enroulés en hélice autour d'un noyau transitoire 16. L'assemblage transitoire 22 illustré sur la figure 5 comprend la couche 13 constituée par les M' éléments filaires métalliques 14 et le noyau transitoire 16, les M' éléments filaires métalliques 14 étant enroulés en hélice autour du noyau transitoire 16. Ici, l'assemblage transitoire 22 est constitué de la couche 13 constituée par les M'=7 éléments filaires métalliques 14 et du noyau transitoire 16, les M' éléments filaires métalliques 14 étant enroulés en hélice autour du noyau transitoire 16. Chaque élément filaire métallique 14 comprend, ici est constitué d'un unique monofilament élémentaire métallique de section circulaire, ici en acier au carbone, présentant un diamètre d allant de 0,05 mm à 0,50 mm, de préférence de 0,10 mm à 0,48 mm et plus préférentiellement de 0,15 mm à 0,45 mm et ici d=0,32 mm. Le noyau transitoire est ici un élément filaire textile, plus particulièrement est ici un brin textile multifilamentaire en polyester présentant un titre de 334 tex et de diamètre égal à 0,60 mm.

Les moyens 11 de fourniture comprennent des moyens 12 d'alimentation des M' éléments filaires métalliques 14 et du noyau transitoire 16. Les moyens de fourniture 11 comprennent également des moyens 18 d'assemblage par retordage des M' éléments filaires métalliques 14 ensemble en la couche 13 de M' éléments filaires métalliques 14 autour du noyau transitoire 16 pour former l'assemblage transitoire 22. En outre, les moyens de fourniture 11 comprennent des moyens 20 d'équilibrage de l'assemblage transitoire 22. En sortie des moyens 20, chaque élément filaire métallique 14 de l'assemblage transitoire 22 est ici assemblé à un pas transitoire égal à 5 mm. Le diamètre d'hélice transitoire de chaque élément filaire métallique 14 de l'assemblage transitoire 22 est ici sensiblement égal à 0,92 mm.

En aval des moyens de fourniture 11 en considérant le sens de défilement des éléments filaires métalliques, l'installation 10 comprend des moyens 24 de séparation de l'assemblage transitoire 22 entre un premier assemblage fractionné 25, un deuxième assemblage fractionné 27 et le noyau transitoire 16 ou un ou plusieurs ensembles comprenant le noyau transitoire 16, ici le noyau transitoire 16.

Le premier assemblage fractionné 25 représenté sur la figure 9 comprend au moins une couche 26, ici est constitué de la couche 26, constituée de M1'≥1 élément(s) filaire(s) métallique(s) 14 enroulé(s) en hélice. Ici M1'=2. Les M1' éléments filaires métalliques sont issus de la couche 13 de l'assemblage transitoire 22.

Le deuxième assemblage fractionné 27 représenté sur la figure 8 comprend au moins une couche 28, ici est constitué de la couche 28, constituée de M2'>1 éléments filaires métalliques 14 enroulés en hélice. Ici M2'=4. Les M2' éléments filaires métalliques sont issus de la couche 13 de l'assemblage transitoire 22.

En aval des moyens de fourniture 11, les moyens de séparation 24 de l'assemblage transitoire 22 entre le premier assemblage fractionné 25, le deuxième assemblage fractionné 27 et le noyau transitoire 16 comprennent des moyens 29 de séparation de l'assemblage transitoire 22 entre un ensemble précurseur 31, le deuxième assemblage fractionné 27 et enfin le noyau transitoire 16. L'ensemble précurseur 31 est illustré sur la figure 6 et comprend au moins une, ici est constitué d'une couche 31' constituée de M1">1 éléments filaires métalliques enroulés en hélice, les M1" éléments filaires métalliques 14 étant issus de la couche 13 de l'assemblage transitoire 22. Ici M1"=3.

Les moyens de séparation 29 de l'assemblage transitoire 22 entre l'ensemble précurseur 31, le deuxième assemblage fractionné 27 et le noyau transitoire 22 comprennent des moyens 32 de séparation de l'assemblage transitoire 22 entre l'ensemble précurseur 31 et un ensemble fractionné 33 comprenant au moins une couche 33' constituée par M4'>1 éléments filaires métalliques 14 enroulés en hélice autour du noyau transitoire 16. Les M4' éléments filaires métalliques 14 sont issus de la couche 13 de l'assemblage transitoire 22. Ici, les moyens de séparation 32 comprennent des moyens de fractionnement 32' de l'assemblage transitoire 22 en l'ensemble précurseur 31 et l'ensemble fractionné 33. Ici M4'=4.

Ainsi, l'ensemble fractionné 33 comprend la couche 33' et le noyau transitoire 16, les M4' éléments métalliques étant enroulés en hélice autour du noyau transitoire 16. L'ensemble fractionné 33 est illustré sur la figure 7 et est constitué de la couche 33' constituée des M4' éléments filaires métalliques enroulés en hélice et du noyau transitoire 16, les M4' éléments métalliques étant enroulés en hélice autour du noyau transitoire 16.

En aval des moyens de séparation 29, les moyens de séparation 24 de l'assemblage transitoire 22 entre le premier assemblage fractionné 25, le deuxième assemblage fractionné 27 et le noyau transitoire 16 comprennent des moyens 34 de séparation de l'ensemble fractionné 33 entre le deuxième assemblage fractionné 27 et le noyau transitoire 16. Ici, les moyens de séparation 34 comprennent des moyens de fractionnement 34' de l'ensemble fractionné 33 en le deuxième assemblage fractionné 27 et le noyau transitoire 16.

En aval des moyens de fourniture 11, les moyens de séparation 24 de l'assemblage transitoire 22 entre le premier assemblage fractionné 25, le deuxième assemblage fractionné 27 et le noyau transitoire 16 comprennent également des moyens 35 de séparation de l'ensemble précurseur 31 entre un ensemble principal P formant le premier assemblage fractionné 25 et un ensemble complémentaire K. Les moyens de séparation 35 de l'ensemble précurseur 31 entre les ensembles principal P et complémentaire K comprennent des moyens 36 de fractionnement de l'ensemble précurseur 31 en l'ensemble principal P et l'ensemble complémentaire K.

L'ensemble principal P comprend une couche P' constituée de M3≥1 élément(s) filaire(s) métallique(s) enroulé(s) en hélice, le ou les M3>1 élément(s) filaire(s) métallique(s) étant issu(s) de la couche 31' constituée des M1" éléments filaires métalliques de l'ensemble précurseur 31. Ici, l'ensemble principal P, illustré sur la figure 9, est constitué de la couche P' constituée de M3=2 éléments filaires métalliques 14 enroulés en hélice.

L'ensemble complémentaire K comprend une couche K' constituée de M3'≥1 élément(s) filaire(s) métallique(s) enroulé(s) en hélice, le ou les M3'≥1 élément(s) filaire(s) métallique(s) étant issu(s) de la couche 31' constituée des M1" éléments filaires métalliques de l'ensemble précurseur 31. Ici, l'ensemble complémentaire K, illustré sur la figure 10, est constitué de la couche K' constituée de M3=1 élément filaire métallique 14 enroulé en hélice et forme le premier assemblage fractionné 25.

On a ici M3=M1' et M3+M3'=M1".

En aval des moyens de séparation 24, 29, 34 et 35, l'installation 10 comprend des moyens 37 de réassemblage du premier assemblage fractionné 25 avec le deuxième assemblage fractionné 27 pour former la couche C constituée de N' éléments filaires métalliques 14 enroulés en hélice. Dans ce premier mode de réalisation, les moyens 37 de réassemblage sont des moyens de réassemblage de l'ensemble principal P formant le premier assemblage fractionné 25 avec le deuxième assemblage fractionné 27 pour former la couche C. En l'espèce, en raison du retour élastique de chaque élément filaire métallique 14 en réponse à l'étape de retordage, le pas de chaque élément filaire métallique 14 de l'assemblage transitoire 22 passe du pas transitoire égal à 5 mm au pas p égal ici à 7,8 mm. L'homme du métier saura déterminer quel pas transitoire appliquer afin d'obtenir le pas p désiré.

Le diamètre d'hélice φ de chaque élément filaire métallique 14 dans l'assemblage final est ici sensiblement supérieur au diamètre d'hélice transitoire de chaque élément filaire 14 dans l'assemblage transitoire 22 et ce en raison du retour élastique. Le diamètre d'hélice φ de chaque élément filaire métallique 14 dans l'assemblage final est d'autant plus supérieur au diamètre d'hélice transitoire de chaque élément filaire 14 dans l'assemblage transitoire 22 que le taux de retordage est important. L'homme du métier saura déterminer quel diamètre d'hélice transitoire appliquer afin d'obtenir le diamètre d'hélice φ désiré, et ce en fonction du taux de retordage et de la nature du noyau transitoire.

Les moyens de fourniture 11, les moyens de séparation 24 et les moyens de réassemblage 37 sont agencés de sorte que tous les N' éléments filaires métalliques 14 présentent un même diamètre d=0,32 mm, sont enroulés en hélice selon un même pas p=7,8 mm et présentent un même diamètre d'hélice φ=0,95 mm.

Sur la figure 1, en aval des moyens de réassemblage 37 en considérant le sens de défilement des éléments filaires métalliques, l'installation 10 comprend des moyens 38, 38' d'entretien de la rotation respectivement de l'assemblage final A et de l'ensemble complémentaire K autour de leur direction de défilement.

En aval des moyens d'entretien de la rotation 38, 38' en considérant le sens de défilement des éléments filaires métalliques 14, l'installation 10 comprend des moyens d'équilibrage 39, 39' respectivement de l'assemblage final A et de l'ensemble complémentaire K.

En aval des moyens d'équilibrage 39, 39' en considérant le sens de défilement des éléments filaires métalliques 14, l'installation 10 comprend des moyens 40, 40' de stockage respectivement de l'assemblage final A et de l'ensemble complémentaire K.

L'installation 10 comprend également des moyens de guidage G, de déroulage D et de traction T des éléments filaires, des ensembles et des assemblages classiquement utilisés par l'homme du métier, par exemple des poulies et des cabestans.

Les moyens d'alimentation 12 comprennent ici sept bobines 41 de stockage de chaque élément filaire 14 ainsi qu'une bobine 41 de stockage du noyau transitoire 16. Sur la figure 1, seules deux des sept bobines 41 sont représentées à des fins de clarté de la figure.

Les moyens d'assemblage 18 comprennent un répartiteur 42 et un grain d'assemblage 44. Les moyens d'assemblage 18 comprennent des moyens 46 de retordage des M' éléments filaires 14 et du noyau transitoire 16. Les moyens de retordage 46 comprennent un retordeur 48, également appelé communément « twister » par l'homme du métier, par exemple un twister à quatre poulies. En aval de ces moyens de retordage 46, les moyens d'équilibrage 20 comprennent un twister 50, par exemple un twister à quatre poulies. Enfin, en aval du retordeur 48, les moyens d'assemblage 18 comprennent une lyre 52 ainsi qu'une nacelle 53 portant les moyens d'équilibrage 39 final et les moyens 40 de stockage. La lyre 52 et la nacelle 53 sont montées mobiles en rotation de façon à conserver le pas d'assemblage de l'assemblage final A. L'installation 10 comprend également une lyre 52' et une nacelle 53' pour l'ensemble complémentaire K.

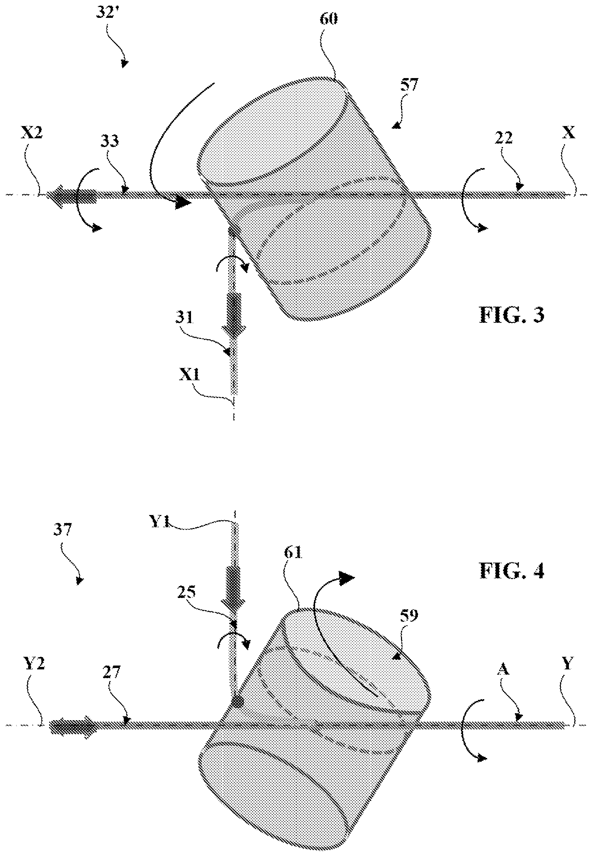

On a représenté sur la figure 3 les moyens de fractionnement 32'. L'assemblage transitoire 22 défile selon une direction de défilement amont X. Après le passage dans les moyens de fractionnement 32', l'ensemble fractionné 33 défile selon une direction de défilement aval X2 et l'ensemble précurseur 31 selon une direction aval X1. Les moyens de fractionnement 32' comprennent des moyens 57 de guidage permettant d'une part, la translation des ensemble fractionné 33 et précurseur 31 respectivement selon les directions avals X2, X1 et d'autre part, la rotation des ensemble fractionné 33 et précurseur 31 respectivement autour des directions avals X2, X1. En l'espèce, les moyens 57 comprennent un rouleau 60 rotatif incliné. Les moyens de fractionnement 34' et 36 sont analogues aux moyens de fractionnement 32' décrits ci-dessus. Lors du procédé, l'ensemble précurseur 31 entre en contact avec le rouleau 60 en aval du point de fractionnement entre les ensembles fractionné 33 et précurseur 31.

On a représenté sur la figure 4 les moyens de réassemblage 37. Le premier assemblage fractionné 25 défile selon une direction de défilement amont Y1. Le deuxième assemblage fractionné 27 défile selon une direction de défilement amont Y2. L'assemblage final A défile selon une direction de défilement aval Y. Les moyens de réassemblage 37 comprennent des moyens 59 de guidage permettant d'une part, la translation des premier et deuxième assemblages fractionnés 25, 27 respectivement selon les directions avals Y1, Y2 et d'autre part, la rotation des premier et deuxième assemblages fractionnés 25, 27 respectivement autour des directions avals Y1, Y2. En l'espèce, les moyens 59 comprennent un rouleau 61 rotatif incliné. Lors du procédé, le premier assemblage fractionné 25 entre en contact avec le rouleau 61 en amont du point de réassemblage des premier et deuxième assemblages fractionnés 25, 27 entre eux.

Les moyens 38, 38' d'entretien de la rotation comprennent des twisters 62, 62', par exemple des twisters à quatre poulies permettant d'entretenir la rotation de l'assemblage final A respectivement autour de la direction aval. Les moyens d'équilibrage 39, 39' final comprennent également des twister 63, 63' par exemple des twisters à quatre poulies. Les moyens de stockage 40, 40' comprennent ici des bobines 64, 64' de stockage respectivement de l'assemblage final A et de l'ensemble complémentaire K.

Afin de recycler le noyau transitoire 16, l'installation 10 comprend des moyens de guidage G du noyau transitoire 16 entre, d'une part, une sortie 68 des moyens de séparation 24, ici en aval des moyens de fractionnement 34, et d'autre part, une entrée 70 dans les moyens d'assemblage 18.

On notera que l'installation 10 est dépourvue de moyens de préformation, en particulier des moyens de préformation individuelle des éléments filaires 14 agencés en amont des moyens d'assemblage 18.

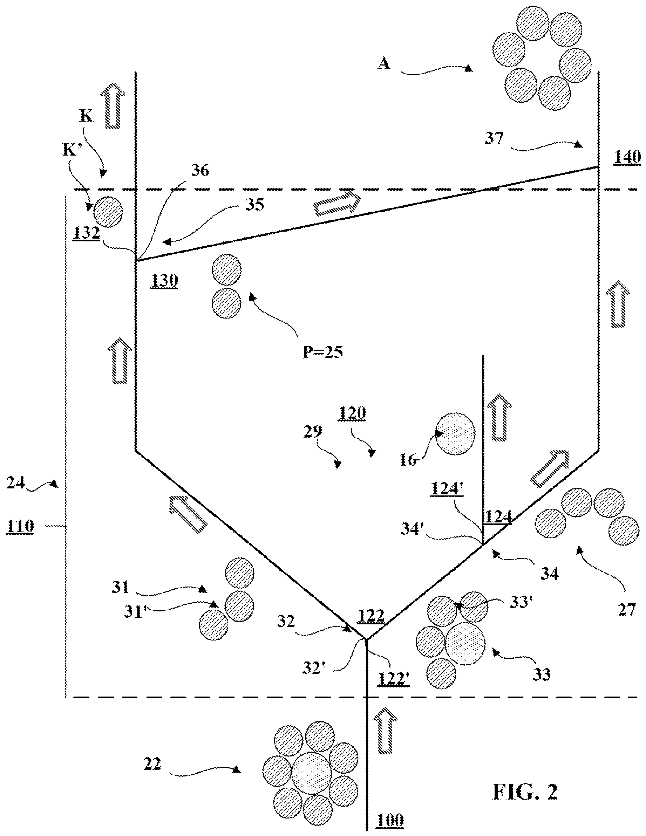

Les différents moyens 24, 29, 32, 32', 34, 34', 35, 36, 37 ainsi que les différents assemblages et ensembles 22, 25, 27, 31, 33, P, K sont représentés de façon schématique sur la figure 2 sur laquelle les flèches indiquent le sens de défilement de ces assemblages et ensembles d'aval vers l'amont.

On va maintenant décrire le procédé selon le premier mode de réalisation permettant de mettre en oeuvre l'installation 10 décrite ci-dessus. Le procédé permet de fabriquer l'assemblage final A décrit ci-dessus.

Tout d'abord, on déroule les éléments filaires 14 et le noyau transitoire 16 depuis les moyens d'alimentation 12, ici les bobines 41.

Puis, le procédé comprend une étape 100 de fourniture de l'assemblage transitoire 22 comprenant d'une part une étape d'assemblage par retordage des M' éléments filaires métalliques 14 en une unique couche de M' éléments filaires métalliques 14 autour du noyau transitoire 16 et d'autre part, une étape d'équilibrage de l'assemblage transitoire 22 réalisée grâce au twister 50.

Le procédé comprend une étape 110 de séparation de l'assemblage transitoire 22 entre le premier assemblage fractionné 25, le deuxième assemblage fractionné 27 et le noyau transitoire 16 ou un ou plusieurs ensembles comprenant le noyau transitoire 16, ici le noyau transitoire 16.

En aval des moyens de fourniture 11, l'étape de séparation 110 de l'assemblage transitoire 22 entre le premier assemblage fractionné 25, le deuxième assemblage fractionné 27 et le noyau transitoire 16 comprend une étape 120 de séparation de l'assemblage transitoire 22 entre l'ensemble précurseur 31, le deuxième assemblage fractionné 27 et enfin le noyau transitoire 16.

L'étape de séparation 120 de l'assemblage transitoire 22 entre l'ensemble précurseur 31, le deuxième assemblage fractionné 27 et le noyau transitoire comprend une étape 122 de séparation de l'assemblage transitoire 22 entre l'ensemble précurseur 31 et l'ensemble fractionné 33. Ici, l'étape de séparation 122 comprend une étape 122' de fractionnement de l'assemblage transitoire 22 en l'ensemble précurseur 31 et l'ensemble fractionné 33.

En aval de l'étape de séparation 122, l'étape de séparation 120 de l'assemblage transitoire entre l'ensemble précurseur 31 et l'ensemble fractionné 33 comprend une étape 124 de séparation de l'ensemble fractionné 33 entre le deuxième assemblage fractionné 27 et le noyau transitoire 16. Ici, l'étape de séparation 124 comprend une étape 124' de fractionnement de l'ensemble fractionné 33 en le deuxième assemblage fractionné 27 et le noyau transitoire 16.

En aval de l'étape de fourniture 100, l'étape de séparation 110 de l'assemblage transitoire entre le premier assemblage fractionné 25, le deuxième assemblage fractionné 27 et le noyau transitoire 16 comprend une étape 130 de séparation de l'ensemble précurseur 31 entre l'ensemble principal P formant le premier assemblage fractionné 25 et l'ensemble complémentaire K. L'étape de séparation 130 de l'ensemble précurseur 31 entre les ensemble principal P et complémentaire K comprend une étape 132 de fractionnement de l'ensemble précurseur 31 en l'ensemble principal P et l'ensemble complémentaire K.

L'étape de séparation 120 de l'assemblage transitoire 22 entre l'ensemble précurseur 31, le deuxième assemblage fractionné 27 et le noyau transitoire 16 a lieu en amont de l'étape de séparation 130 de l'ensemble précurseur 31 entre les ensembles principal P et complémentaire K. De façon analogue, les moyens de séparation 29 sont agencés en amont des moyens de séparation 35.

L'étape de séparation 122 de l'assemblage transitoire entre l'ensemble fractionné 33 et l'ensemble précurseur 31 a lieu en amont de l'étape de séparation 124 de l'ensemble fractionné 33 entre le deuxième assemblage fractionné 27 et le noyau transitoire 16. De façon analogue, les moyens de séparation 32 sont agencés en amont des moyens de séparation 34.

En aval des étapes de séparation 110, 120, 124 et 130, le procédé comprend une étape 140 de réassemblage du premier assemblage fractionné 25 avec le deuxième assemblage fractionné 27 pour former la couche C. Dans ce premier mode de réalisation, l'étape de réassemblage 140 est une étape de réassemblage de l'ensemble principal P formant le premier assemblage fractionné 25 avec le deuxième assemblage fractionné 27 pour former la couche C.

Dans ce mode de réalisation, l'étape de fourniture 100, l'étape de séparation 110 et l'étape de réassemblage 140 sont réalisées de sorte que tous les N' éléments filaires métalliques 14 présentent le même diamètre d, sont enroulés en hélice selon le même pas p et présentent le même diamètre d'hélice φ décrits précédemment.

Dans le premier mode de réalisation permettant un réassemblage partiel des M' éléments filaires métalliques, l'étape de séparation 110 et l'étape réassemblage 140 sont réalisées de sorte que M1'+M2'<M'. De façon analogue, les moyens de séparation 24 et les moyens de réassemblage 37 sont agencés de sorte que M1'+M2'<M'. En outre, on a M'>M1"+M2', M1"=M3+M3', M1'=M3, M'=M4'+M1" et M4'=M2'.

On notera enfin que M2'=4≤0,75×M'=5.25, et ici M2'=4≤0,70×M'=4.9 avec ici M'=7 ce qui permet une séparation aisée du noyau transitoire.

En outre, le procédé comprend des étapes d'entretien de la rotation de l'assemblage final A et de l'assemblage formé par l'ensemble complémentaire K autour de leurs directions de défilement respectives. On réalise ces étapes d'entretien en aval de l'étape de séparation de l'assemblage transitoire 22 grâce aux moyens 38 et 38'.

On réalise une étape d'équilibrage final grâce aux moyens 39 et 39'.

Enfin, on stocke l'assemblage final A et l'ensemble complémentaire K dans les bobines de stockage 64, 64'.

Concernant le noyau transitoire 16, le procédé comprend une étape de recyclage du noyau transitoire 16. Durant cette étape de recyclage, on récupère le noyau transitoire 16 en aval de l'étape de séparation 110, ici en aval de l'étape de séparation 124, et on introduit le noyau transitoire 16 récupéré précédemment en amont de l'étape d'assemblage. Cette étape de recyclage est continue.

On notera que le procédé ainsi décrit est dépourvu d'étapes de préformation individuelle de chacun des éléments filaires métalliques 14.

### INSTALLATION ET PROCEDE SELON UN DEUXIEME MODE DE REALISATION DE L'INVENTION

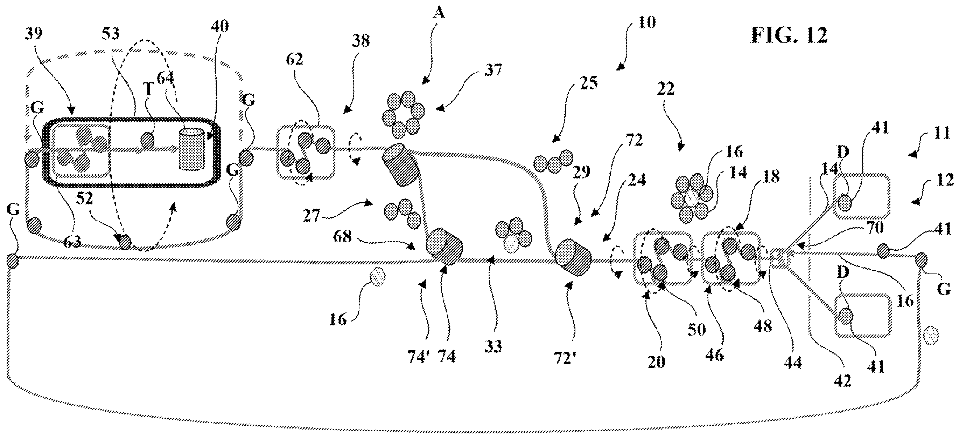

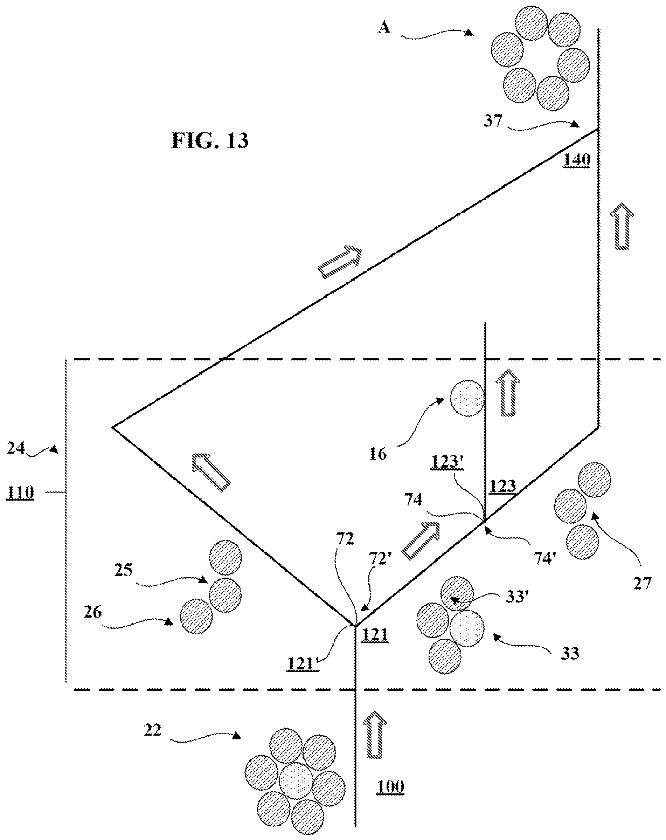

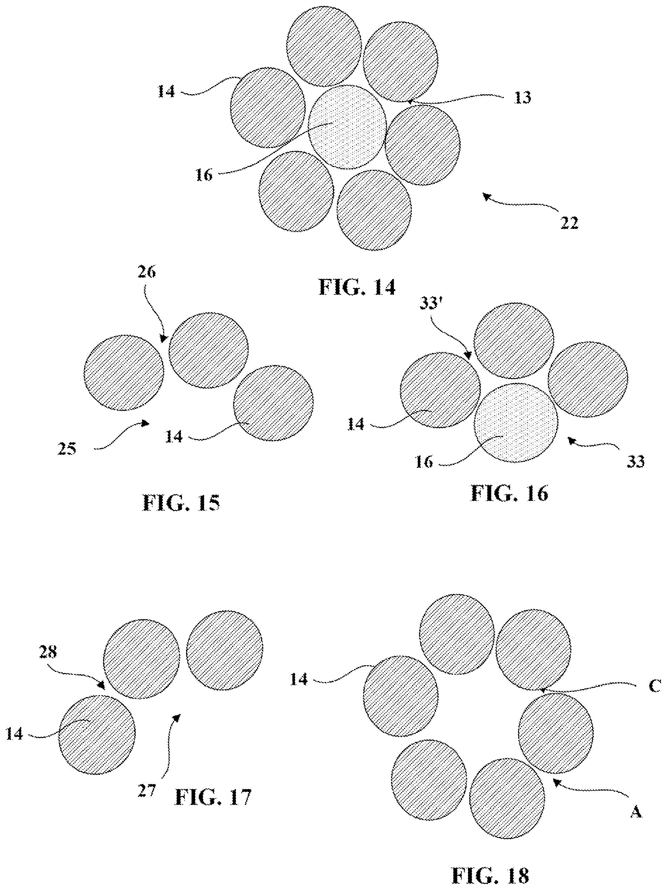

On va maintenant décrire une installation et un procédé selon le deuxième mode de réalisation de l'invention en référence aux figures 12 à 18. Les éléments analogues à ceux du premier mode de réalisation sont désignés par des références identiques.

A la différence du premier mode de réalisation, l'étape de séparation 110 et l'étape réassemblage 140 sont réalisées de sorte que M1'+M2'=M'. De façon analogue, les moyens de séparation 24 et les moyens de réassemblage 37 sont agencés de sorte que M1'+M2'=M'.

A la différence du premier mode de réalisation, les moyens de séparation 24 de l'assemblage transitoire 22 entre le premier assemblage fractionné 25, le deuxième assemblage fractionné 27 et le noyau transitoire 16 comprennent des moyens de séparation 72 de l'assemblage transitoire 22 entre le premier assemblage fractionné 25 et un ensemble fractionné 33 comprenant au moins une couche 33' constituée de M4'=3 éléments filaires métalliques 14 enroulés en hélice autour du noyau transitoire 16, les M4' éléments filaires métalliques 14 étant issus de la couche 13 constituée des M'>1 éléments filaires métalliques 14 de l'assemblage transitoire 22. L'ensemble fractionné 33 comprend ainsi la couche 33' et le noyau transitoire 16, les M4' éléments filaires métalliques 14 étant enroulés en hélice autour du noyau transitoire 16. Ici, l'ensemble fractionné 33 est constituée par la couche 33' et par le noyau transitoire 16, les M4' éléments filaires métalliques 14 étant enroulés en hélice autour du noyau transitoire 16. Ici, les moyens de séparation 72 comprennent de moyens de fractionnement 72' de l'assemblage transitoire 22 en le premier assemblage fractionné 25 et l'ensemble fractionné 33.

Ainsi, l'étape de séparation 110 de l'assemblage transitoire 22 entre le premier assemblage fractionné 25, le deuxième assemblage fractionné 27 et le noyau transitoire 16 comprend une étape 121 de séparation de l'assemblage transitoire 22 entre le premier assemblage fractionné 25 et l'ensemble fractionné 33. Ici, l'étape de séparation 121 comprend une étape 121' de fractionnement de l'assemblage transitoire 22 en le premier assemblage fractionné 25 et l'ensemble fractionné 33.

A la différence du premier mode de réalisation, les moyens de séparation 24 de l'assemblage transitoire 22 entre le premier assemblage fractionné 25, le deuxième assemblage fractionné 27 et le noyau transitoire 16 comprennent des moyens 74 de séparation de l'ensemble fractionné 33 entre le deuxième assemblage fractionné 27 et le noyau transitoire 16. Ici, les moyens de séparation 74 comprennent des moyens 74' de fractionnement de l'ensemble fractionné 33 en le deuxième assemblage fractionné 27 et le noyau transitoire 16

Ainsi, l'étape de séparation 110 de l'assemblage transitoire 22 entre le premier assemblage fractionné 25, le deuxième assemblage fractionné 27 et le noyau transitoire 16 comprend une étape 123 de séparation de l'ensemble fractionné 33 entre le deuxième assemblage fractionné 27 et le noyau transitoire 16. Ici, l'étape de séparation 123 comprend une étape 123' de fractionnement de l'ensemble fractionné 33 en le deuxième assemblage fractionné 27 et le noyau transitoire 16.

Dans ce deuxième mode de réalisation, les moyens de séparation 72 sont agencés en amont des moyens de séparation 74. De façon analogue, l'étape de séparation 121 a lieu en amont de l'étape de séparation 123.

On notera également qu'à la différence du premier mode de réalisation, M'=6, M'=M4'+M1', M4'=M2', N'=6, M1'=3, M2'=3 dans le deuxième mode de réalisation.

Les autres moyens et étapes se déduisent *mutatis mutandis* de ceux et celles du premier mode de réalisation.

### INSTALLATION ET PROCEDE SELON UN TROISIEME MODE DE REALISATION DE L'INVENTION

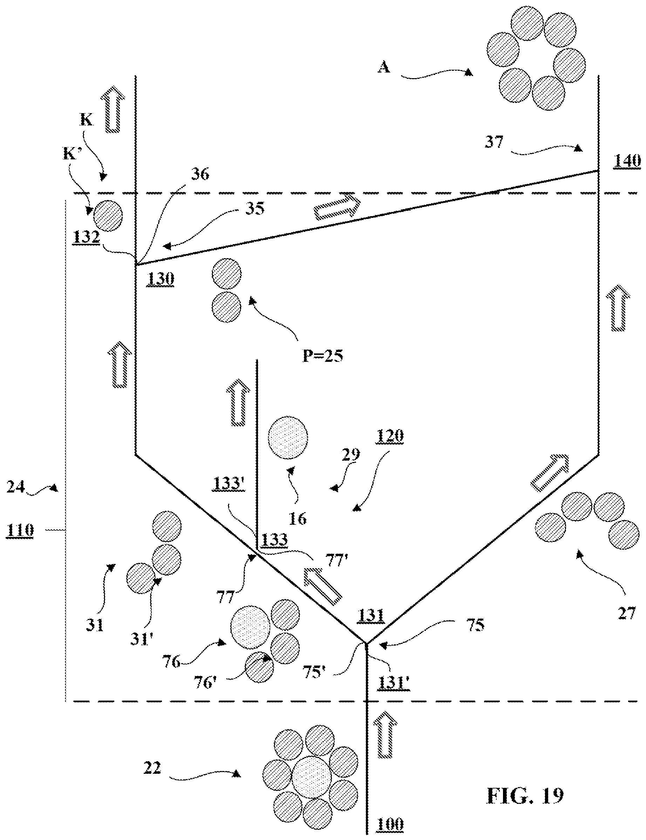

On va maintenant décrire une installation et un procédé selon le troisième mode de réalisation de l'invention en référence à la figure 19. Les éléments analogues à ceux des modes de réalisation précédents sont désignés par des références identiques.

A la différence du premier mode de réalisation, les moyens de séparation 29 de l'assemblage transitoire 16 entre l'ensemble précurseur 31, le deuxième assemblage fractionné 27 et le noyau transitoire 16 comprennent des moyens 75 de séparation de l'assemblage transitoire 16 entre un ensemble fractionné 76 comprenant au moins une couche 76' constituée par M4'=3 éléments filaires métalliques enroulés en hélice autour du noyau transitoire 16 et le deuxième assemblage fractionné 27. Les M4' éléments filaires métalliques 14 sont issus de la couche 13 constituée de M' éléments filaires métalliques 14 de l'assemblage transitoire 22. L'ensemble fractionné 76 comprend ainsi la couche 76' et le noyau transitoire 16, les M4' éléments filaires métalliques étant enroulés en hélice autour du noyau transitoire 16. Ici, l'ensemble fractionné 76 est constitué par la couche 76' et par le noyau transitoire 16, les M4' éléments filaires métalliques enroulés en hélice autour du noyau transitoire 16. Ici, les moyens de séparation 75 comprennent des moyens 75' de fractionnement de l'assemblage transitoire 16 entre l'ensemble fractionné 76 et le deuxième assemblage fractionné 27.

Ainsi, l'étape 120 de séparation de l'assemblage transitoire 22 entre l'ensemble précurseur 31, le deuxième assemblage fractionné 27 et le noyau transitoire 16 comprend une étape 131 de séparation de l'assemblage transitoire 22 entre l'ensemble fractionné 76 et le deuxième assemblage fractionné 27. Ici, l'étape de séparation 131 comprend une étape 131' de fractionnement de l'assemblage transitoire 22 en l'ensemble fractionné 76 et le deuxième assemblage fractionné 27.

A la différence du premier mode de réalisation, les moyens de séparation 29 de l'assemblage transitoire 16 entre l'ensemble précurseur 31, le deuxième assemblage fractionné 27 et le noyau transitoire 16 comprennent des moyens 77 de séparation de l'ensemble fractionné 76 entre l'ensemble précurseur 31 et le noyau transitoire 16. Ici, les moyens de séparation 77 comprennent des moyens 77' de fractionnement de l'ensemble fractionné 76 en l'ensemble précurseur 31 et le noyau transitoire 16.

Ainsi, l'étape de séparation 120 de l'assemblage transitoire 16 entre l'ensemble précurseur 31, le deuxième assemblage fractionné 27 et le noyau transitoire 16 comprend une étape 133 de séparation de l'ensemble fractionné 76 entre l'ensemble précurseur 31 et le noyau transitoire 16. Ici, l'étape de séparation 133 comprend une étape 133' de fractionnement de l'ensemble précurseur 31 et le noyau transitoire 16.

On notera que l'étape de séparation 133 a lieu en amont de l'étape de séparation 130. De façon analogue, les moyens de séparation 77 sont agencés en amont de moyens de séparation 35.

En outre, on notera ici que M'=M4'+M2' et M4'=M1". De plus, de façon analogue au premier mode de réalisation, on a M1'=3≤0,75×M'=5.25, et ici M1'=3≤0,70×M'=4.9 avec ici M'=7 ce qui permet une séparation aisée du noyau transitoire.

Les autres moyens et étapes se déduisent *mutatis mutandis* de ceux et celles des modes de réalisation précédents.

### INSTALLATION ET PROCEDE SELON UN QUATRIEME MODE DE REALISATION DE L'INVENTION

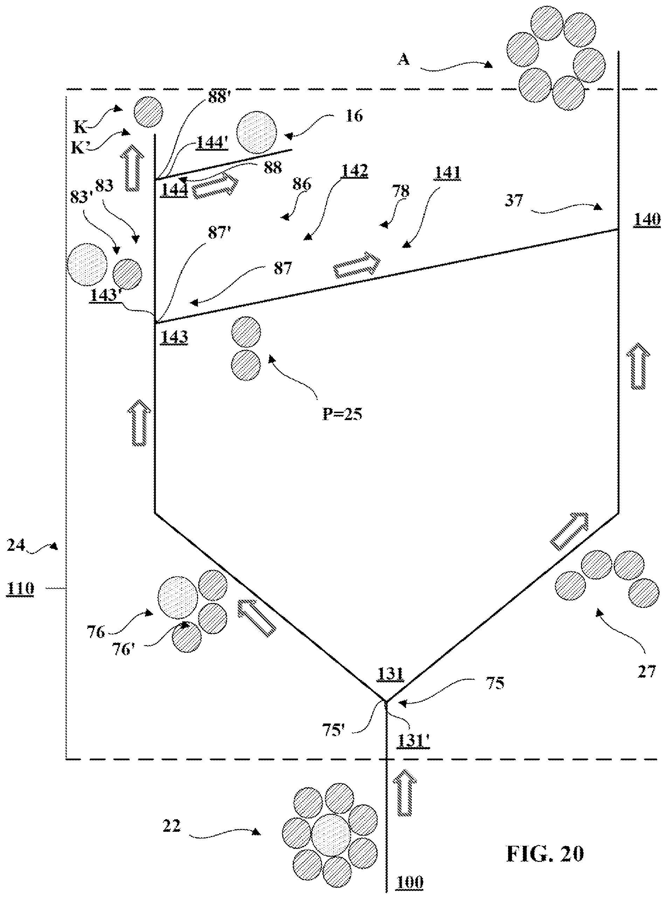

On va maintenant décrire une installation et un procédé selon le quatrième mode de réalisation de l'invention en référence à la figure 20. Les éléments analogues à ceux des modes de réalisation précédents sont désignés par des références identiques.

A la différence du troisième mode de réalisation, les moyens 24 de séparation de l'assemblage transitoire 22 entre le premier assemblage fractionné 25, le deuxième assemblage fractionné 27 et le noyau transitoire 16 comprennent, en plus des moyens de séparation 75, des moyens 78 de séparation de l'ensemble fractionné 76 entre le premier assemblage fractionné 25 et le noyau transitoire 16.

Ainsi, l'étape 110 de séparation de l'assemblage transitoire 22 entre le premier assemblage fractionné 25, le deuxième assemblage fractionné 27 et le noyau transitoire 16 comprend une étape 141 de séparation de l'ensemble fractionné 76 entre le premier assemblage fractionné 25 et le noyau transitoire 16.

Les moyens de séparation 78 comprennent des moyens 86 de séparation de l'ensemble fractionné 76 entre l'ensemble principal P formant le premier assemblage fractionné 25, l'ensemble complémentaire K et enfin le noyau transitoire 16.

Ainsi, l'étape de séparation 141 comprend une étape 142 de séparation de l'ensemble fractionné 76 entre l'ensemble principal P formant le premier assemblage fractionné 25, l'ensemble complémentaire K et le noyau transitoire 16.

Les moyens de séparation 86 comprennent des moyens 87 de séparation de l'ensemble fractionné 76 entre l'ensemble principal P formant le premier assemblage fractionné 25 et un ensemble dérivé 83 comprenant au moins une couche 83' constituée de M5'≥1 élément(s) filaire(s) métallique(s) enroulé(s) en hélice autour du noyau transitoire avec ici M5'=1. Le M5'=1 élément filaire métallique est issu de la couche 76' constituée des M4'=3 éléments filaires métalliques de l'ensemble fractionné 76. Ici, l'ensemble dérivé 83 est constituée de la couche 83' constituée du M5'=1 élément filaire métallique 14 et du noyau transitoire 16, le M5'=1 élément filaire métallique étant enroulé en hélice autour du noyau transitoire 16. Ici, les moyens de séparation 87 comprennent des moyens de fractionnement 87' de l'ensemble fractionné 76 en l'ensemble principal P formant le premier assemblage fractionné 25 et l'ensemble dérivé 83.

Ainsi, l'étape de séparation 142 comprend une étape 143 de séparation de l'ensemble fractionné 76 entre l'ensemble principal P formant le premier assemblage fractionné 25 et l'ensemble dérivé 83. Ici, l'étape de séparation 143 comprend une étape 143' de fractionnement de de l'ensemble fractionné 76 entre l'ensemble principal P formant le premier assemblage fractionné 25 et l'ensemble dérivé 83.

Les moyens de séparation 86 comprennent également des moyens 88 de séparation de l'ensemble dérivé 83 entre l'ensemble complémentaire K et le noyau transitoire 16. Ici, les moyens de séparation 88 comprennent des moyens 88' de fractionnement de l'ensemble dérivé 83 en l'ensemble complémentaire K et le noyau transitoire 16.

Ainsi, l'étape de séparation 142 comprend une étape 144 de séparation de l'ensemble dérivé 83 entre l'ensemble complémentaire K et le noyau transitoire 16. Ici, l'étape de séparation 144 comprend une étape 144' de fractionnement de l'ensemble dérivé 83 en l'ensemble complémentaire K et le noyau transitoire 16.

Les moyens de séparation 75 sont agencés en amont des moyens de séparation 78. Da façon analogue, l'étape de séparation 131 a lieu en amont de l'étape de séparation 141. Les moyens de séparation 87 sont agencés en amont des moyens de séparation 88. De façon analogue, l'étape de séparation 143 a lieu en amont de l'étape de séparation 144.

Dans ce quatrième mode de réalisation, on notera que M'=M4'+M2', M4'>M1', M4'=M3+M3' et M3=M1', M4'=M3+M5' et M5'=M3'. En outre, on notera ici que M'=M4'+M2' et M4'=M1".

Les autres moyens et étapes se déduisent *mutatis mutandis* de ceux et celles des modes de réalisation précédents.

### INSTALLATION ET PROCEDE SELON UN CINQUIEME MODE DE REALISATION DE L'INVENTION

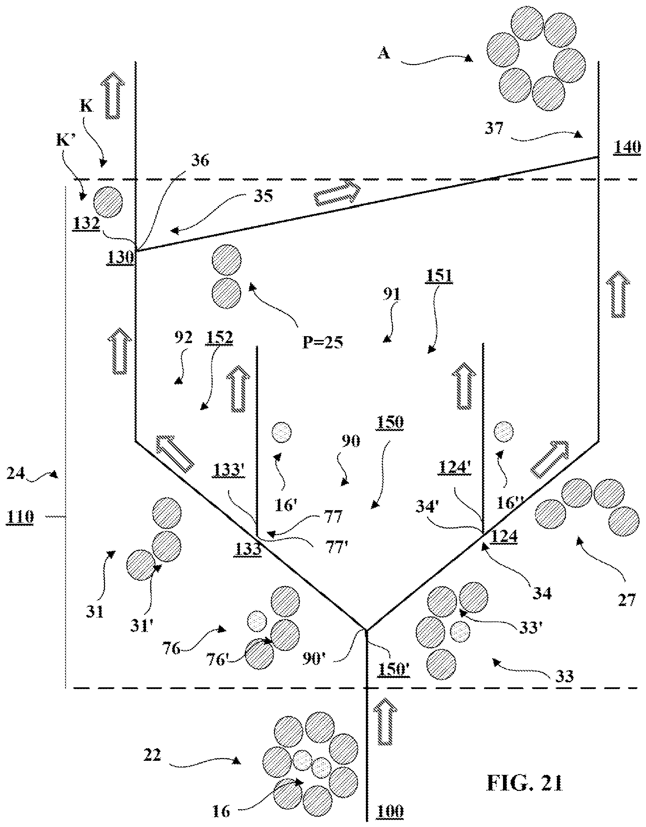

On va maintenant décrire une installation et un procédé selon le cinquième mode de réalisation de l'invention en référence à la figure 21. Les éléments analogues à ceux des modes de réalisation précédents sont désignés par des références identiques.

Dans le cinquième mode de réalisation, les moyens de séparation 24 de l'assemblage transitoire 22 entre le premier assemblage fractionné 25, le deuxième assemblage fractionné 27 et le noyau transitoire 16 comprennent des moyens 90 de séparation de l'assemblage transitoire 22 entre un premier ensemble fractionné 76 et une deuxième ensemble fractionné 33. Ici, les moyens de séparation 90 comprennent des moyens 90' de fractionnement de l'assemblage transitoire 22 en le premier ensemble fractionné 76 et le deuxième ensemble fractionné 33.

Ainsi, l'étape 110 de séparation de l'assemblage transitoire 22 entre le premier assemblage fractionné 25, le deuxième assemblage fractionné 27 et le noyau transitoire 16 comprend une étape 150 de séparation de l'assemblage transitoire 22 entre le premier ensemble fractionné 76 et le deuxième ensemble fractionné 33. Ici, l'étape de séparation 150 comprend une étape 150' de fractionnement de l'assemblage transitoire 22 en le premier ensemble fractionné 76 et le deuxième ensemble fractionné 33.

Le premier ensemble fractionné 76 comprend au moins une couche 76' constituée par M6'=3 éléments filaires métalliques 14 enroulés en hélice autour d'une première partie 16' du noyau transitoire, les M6' éléments filaires métalliques 14 étant issus de la couche 13 constituée des M' éléments filaires métalliques 14 de l'assemblage transitoire 22. Le premier ensemble fractionné 76 comprend la couche 76' et la première partie 16' du noyau transitoire, les M6' éléments filaires métalliques 14 étant enroulés en hélice autour de la première partie 16' du noyau transitoire. Ici, le premier ensemble fractionné 76 est constitué de la couche 76' constituée par les M6'=3 éléments filaires métalliques 14 et de la première partie 16' du noyau transitoire, les M6' éléments filaires métalliques 14 étant enroulés en hélice autour de la première partie 16' du noyau transitoire.

Le deuxième ensemble fractionné 33 comprend au moins une couche 33' constituée par M7'=4 éléments filaires métalliques 14 enroulés en hélice autour d'une deuxième partie 16" du noyau transitoire, les M7' éléments filaires métalliques 14 étant issus de la couche 13 constituée des M' éléments filaires métalliques 14 de l'assemblage transitoire 22. Le deuxième ensemble fractionné 33 comprend la couche 33' et la deuxième partie 16" du noyau transitoire, les M7' éléments filaires métalliques 14 étant enroulés en hélice autour de la deuxième partie 16" du noyau transitoire. Ici, le deuxième ensemble fractionné 33 est constitué de la couche 33' constituée par les M7'=4 éléments filaires métalliques 14 et de la deuxième partie 16" du noyau transitoire, les M7' éléments filaires métalliques 14 étant enroulés en hélice autour de la deuxième partie 16" du noyau transitoire.

La première partie 16' du noyau transitoire et la deuxième partie 16" du noyau transitoire constituent, en amont des moyens de séparation 24 de l'assemblage transitoire, et donc préalablement à l'étape 110 de séparation, le noyau transitoire 16 dans son intégralité.

Les moyens de séparation 24 de l'assemblage transitoire 22 entre le premier assemblage fractionné 25, le deuxième assemblage fractionné 27 et le noyau transitoire 16 comprennent également des moyens 91 de séparation du premier ensemble fractionné 76 entre le premier assemblage fractionné 25 et la première partie du noyau transitoire 16'. Ainsi, l'étape 110 de séparation de l'assemblage transitoire 22 entre le premier assemblage fractionné 25, le deuxième assemblage fractionné 27 et le noyau transitoire 16 comprend une étape 151 de séparation du premier ensemble fractionné 76 entre le premier assemblage fractionné 25 et la première partie du noyau transitoire 16'.

Les moyens de séparation 24 de l'assemblage transitoire 22 entre le premier assemblage fractionné 25, le deuxième assemblage fractionné 27 et le noyau transitoire 16 comprennent également des moyens 34 de séparation du deuxième ensemble fractionné 33 entre le deuxième assemblage fractionné 27 et la deuxième partie du noyau transitoire 16". Ici, les moyens de séparation 34 comprennent des moyens 34' de fractionnement du deuxième ensemble fractionné 33 en le deuxième assemblage fractionné 27 et la deuxième partie du noyau transitoire 16". Ainsi, l'étape 110 de séparation de l'assemblage transitoire 22 entre le premier assemblage fractionné 25, le deuxième assemblage fractionné 27 et le noyau transitoire 16 comprend une étape 124 de séparation du deuxième ensemble fractionné 33 entre le deuxième assemblage fractionné 27 et la deuxième partie du noyau transitoire 16". Ici, l'étape de séparation 124 comprend une étape 124' de fractionnement du deuxième ensemble fractionné 33 en le deuxième assemblage fractionné 27 et la deuxième partie du noyau transitoire 16".

Les moyens 91 de séparation du premier ensemble fractionné 76 entre le premier assemblage fractionné 25 et la première partie du noyau transitoire 16' comprennent des moyens 92 de séparation du premier ensemble fractionné 76 entre l'ensemble principal P formant le premier assemblage fractionné 25, l'ensemble complémentaire K et la première partie du noyau transitoire 16'. L'ensemble principal P comprend une couche P', ici est constituée de la couche P', constituée de M3=2 éléments filaires métalliques 14 enroulés en hélice, les M3 éléments filaires métalliques 14 étant issus de la couche 76' constituée des M6' éléments filaires métalliques 14 du premier ensemble fractionné 76. L'ensemble complémentaire K comprend une couche K', ici est constituée de la couche K', constituée de M3'=1 élément filaire métallique enroulé en hélice, le M3' élément filaire métallique étant issu de la couche 76' constituée des M6' éléments filaires métalliques 14 du premier ensemble fractionné 76. Ainsi, l'étape 151 de séparation du premier ensemble fractionné 76 entre le premier assemblage fractionné 25 et la première partie du noyau transitoire 16' comprend une étape 152 de séparation du premier ensemble fractionné 76 entre l'ensemble principal P formant le premier assemblage fractionné 25, l'ensemble complémentaire K et la première partie du noyau transitoire 16'.

Les moyens 92 de séparation du premier ensemble fractionné 76 entre l'ensemble principal P formant le premier assemblage fractionné 25, l'ensemble complémentaire K et la première partie du noyau transitoire 16' comprennent des moyens 77 de séparation du premier ensemble fractionné 76 entre l'ensemble précurseur 31 et la première partie du noyau transitoire 16'. Ici, les moyens de séparation 77 comprennent des moyens 77' de fractionnement du premier ensemble fractionné 76 entre l'ensemble précurseur 31 et la première partie du noyau transitoire 16'. Ainsi, l'étape 152 de séparation du premier ensemble fractionné 76 entre l'ensemble principal P formant le premier assemblage fractionné 25, l'ensemble complémentaire K et la première partie du noyau transitoire 16' comprend une étape 133 de séparation du premier ensemble fractionné 76 entre l'ensemble précurseur 31 et la première partie du noyau transitoire 16'. Ici, l'étape de séparation 133 comprend une étape 133' de fractionnement du premier ensemble fractionné 76 entre l'ensemble précurseur 31 et la première partie du noyau transitoire 16'.

Les moyens 92 de séparation de séparation du premier ensemble fractionné 76 entre l'ensemble principal P formant le premier assemblage fractionné 25, l'ensemble complémentaire K et la première partie du noyau transitoire 16' comprennent également des moyens 35 de séparation de l'ensemble précurseur 31 entre l'ensemble principal P formant le premier assemblage fractionné 25 et l'ensemble complémentaire K. Ici, les moyens de séparation 35 comprennent des moyens 36 de fractionnement de l'ensemble précurseur 31 entre l'ensemble principal P formant le premier assemblage fractionné 25 et l'ensemble complémentaire K. Ainsi, l'étape 152 de séparation du premier ensemble fractionné 76 entre l'ensemble principal P formant le premier assemblage fractionné 25, l'ensemble complémentaire K et la première partie du noyau transitoire 16' comprend également une étape 130 de séparation de l'ensemble précurseur 31 entre l'ensemble principal P formant le premier assemblage fractionné 25 et l'ensemble complémentaire K. Ici, l'étape de séparation 130 comprend une étape de fractionnement 132 de l'ensemble précurseur 31 entre l'ensemble principal P formant le premier assemblage fractionné 25 et l'ensemble complémentaire K.

Les moyens de séparation 90 sont agencés en amont des moyens de séparation 91. De façon analogue, l'étape de séparation 150 a lieu en amont de l'étape de séparation 151.

Les moyens de séparation 90 sont agencés en amont des moyens de séparation 34. De façon analogue, l'étape 150 de séparation a lieu en amont de l'étape de séparation 124.

Les moyens de séparation 77 sont agencés en amont des moyens de séparation 35. De façon analogue, l'étape de séparation 133 a lieu en amont de l'étape de séparation 130.

Dans ce cinquième mode de réalisation, on notera que M6'>M1', M7'=M2', M'= M 6'+ M 7', M6'=M3+M3', M3=M1'. M6'=M1", M1"=M3+M3', M6'=M1" et M1"=M3+M3'.

De plus, de façon analogue aux premier et troisième modes de réalisation, on a M1'=3≤0,75×M'=5.25, et ici M1'=3≤0,70×M'=4.9 avec M'=7 ce qui permet une séparation aisée de la première partie 16' du noyau transitoire et M2'=4≤0,75×M'=5.25, et ici M2'=4≤0,70×M'=4.9 ce qui permet une séparation aisée de la deuxième partie 16' du noyau transitoire.

Les autres moyens et étapes se déduisent *mutatis mutandis* de ceux et celles des modes de réalisation précédents.

### INSTALLATION ET PROCEDE SELON UN SIXIEME MODE DE REALISATION DE L'INVENTION

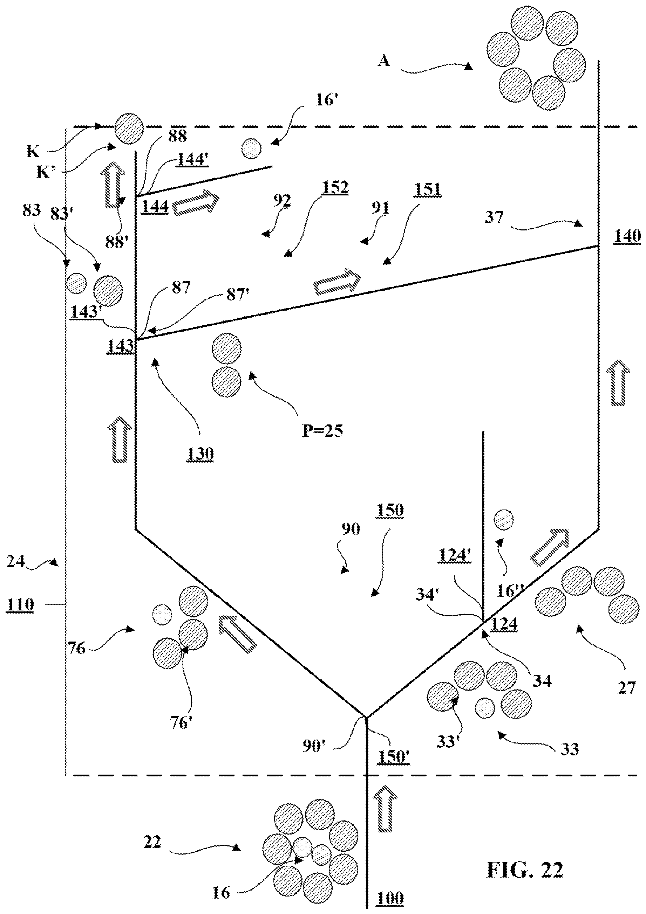

On va maintenant décrire une installation et un procédé selon le sixième mode de réalisation de l'invention en référence à la figure 22. Les éléments analogues à ceux des modes de réalisation précédents sont désignés par des références identiques.

A la différence du cinquième mode de réalisation, dans le sixième mode de réalisation, les moyens 92 de séparation du premier ensemble fractionné 76 entre l'ensemble principal P formant le premier assemblage fractionné 25, l'ensemble complémentaire K et la première partie du noyau transitoire 16' comprennent des moyens 87 de séparation du premier ensemble fractionné 76 entre l'ensemble principal P formant le premier assemblage fractionné 25 et l'ensemble dérivé 83. L'ensemble dérivé 83 comprend au moins une couche 83' constituée de M5'=1 élément filaire métallique enroulé en hélice autour de la première partie du noyau transitoire 16', le M5'=1 élément filaire métallique 14 étant issu de la couche 76' constituée des M6'=3 éléments filaires métalliques du premier ensemble fractionné 76. L'ensemble dérivé 83 est ici constitué de la couche 83' et de la première partie du noyau transitoire 16', le M5'=1 élément filaire métallique 14 de la couche 83' étant enroulé en hélice autour de la première partie du noyau transitoire 16'. Ici, les moyens de séparation 87 comprennent des moyens 87' de fractionnement du premier ensemble fractionné 76 en l'ensemble principal P formant le premier assemblage fractionné 25 et l'ensemble dérivé 83. Ainsi, l'étape 152 de séparation du premier ensemble fractionné 76 entre l'ensemble principal P formant le premier assemblage fractionné 25, l'ensemble complémentaire K et la première partie du noyau transitoire 16' comprend une étape 143 de séparation du premier ensemble fractionné 76 entre l'ensemble principal P formant le premier assemblage fractionné 25 et l'ensemble dérivé 83. Ici, l'étape de séparation 143 comprend une étape 143' de fractionnement du premier ensemble fractionné 76 en l'ensemble principal P formant le premier assemblage fractionné 25 et l'ensemble dérivé 83.

Les moyens 92 de séparation du premier ensemble fractionné 76 entre l'ensemble principal P formant le premier assemblage fractionné 25, l'ensemble complémentaire K et la première partie du noyau transitoire 16' comprennent également des moyens 88 de séparation de l'ensemble dérivé 83 entre l'ensemble complémentaire K et la première partie du noyau transitoire 16'. Ici, les moyens de séparation 88 comprennent des moyens 88' de fractionnement de l'ensemble dérivé 83 entre l'ensemble complémentaire K et la première partie du noyau transitoire 16'. Ainsi, l'étape 152 de séparation du premier ensemble fractionné 76 entre l'ensemble principal P formant le premier assemblage fractionné 25, l'ensemble complémentaire K et la première partie du noyau transitoire 16' comprend une étape 144 de séparation de l'ensemble dérivé 83 entre l'ensemble complémentaire K et la première partie du noyau transitoire 16'. Ici, l'étape de séparation 144 comprend une étape 144' de fractionnement de l'ensemble dérivé 83 en l'ensemble complémentaire K et la première partie du noyau transitoire 16'.

Les moyens de séparation 87 sont agencés en amont des moyens de séparation 88. De façon analogue, l'étape de séparation 143 a lieu en amont de l'étape de séparation 144.

Dans ce sixième mode de réalisation, on a M6'=M3+M5', M3=M1' et M5'=M3'.

Les autres moyens et étapes se déduisent *mutatis mutandis* de ceux et celles des modes de réalisation précédents.

### INSTALLATION ET PROCEDE SELON UN SEPTIEME MODE DE REALISATION DE L'INVENTION

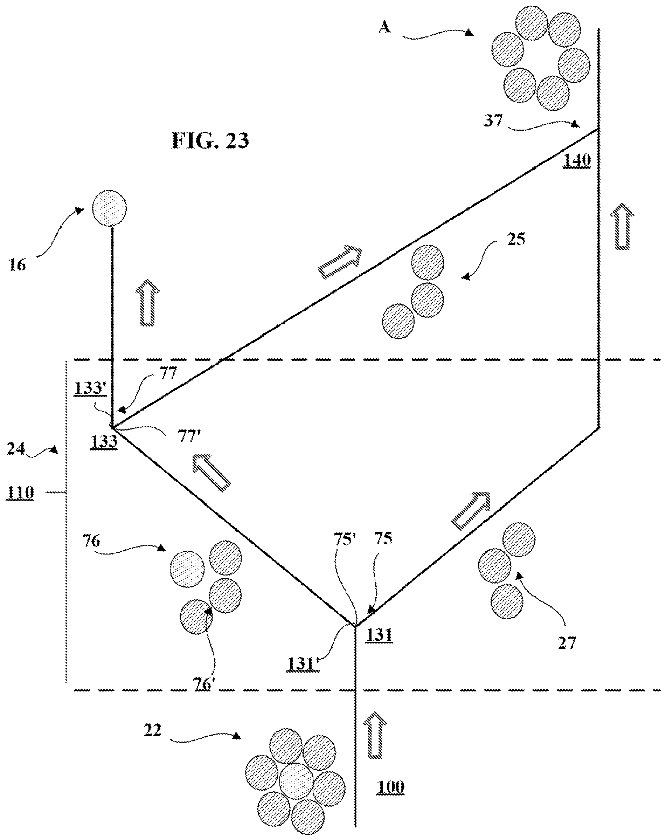

On va maintenant décrire une installation et un procédé selon le septième mode de réalisation de l'invention en référence à la figure 23. Les éléments analogues à ceux des modes de réalisation précédents sont désignés par des références identiques.

A la différence du deuxième mode de réalisation, les moyens de séparation 24 de l'assemblage transitoire 22 entre le premier assemblage fractionné 25, le deuxième assemblage fractionné 27 et le noyau transitoire 16 comprennent des moyens 75 de séparation de l'assemblage transitoire 22 entre l'ensemble fractionné 76 et le deuxième assemblage fractionné 27. Ici, les moyens de séparation 75 comprennent des moyens 75' de fractionnement de l'assemblage transitoire 22 en l'ensemble fractionné 76 et le deuxième assemblage fractionné 27. Ainsi, l'étape de séparation 110 de l'assemblage transitoire 22 entre le premier assemblage fractionné 25, le deuxième assemblage fractionné 27 et le noyau transitoire 16 comprend une étape 131 de séparation de l'assemblage transitoire 22 entre l'ensemble fractionné 76 et le deuxième assemblage fractionné 27. Ici, l'étape de séparation 131 comprend une étape 131' de fractionnement de l'assemblage transitoire 22 en l'ensemble fractionné 76 et le deuxième assemblage fractionné 27.

A la différence du deuxième mode de réalisation, les moyens de séparation 24 de l'assemblage transitoire 22 entre le premier assemblage fractionné 25, le deuxième assemblage fractionné 27 et le noyau transitoire 16 comprennent des moyens 77 de séparation de l'ensemble fractionné 76 entre le premier assemblage fractionné 25 et le noyau transitoire 16. Ici, les moyens de de séparation 77 comprennent des moyens 77' de fractionnement de l'ensemble fractionné 76 en le premier assemblage fractionné 25 et le noyau transitoire 16. Ainsi, l'étape de séparation 110 de l'assemblage transitoire 22 entre le premier assemblage fractionné 25, le deuxième assemblage fractionné 27 et le noyau transitoire 16 comprend une étape 133 de séparation de l'ensemble fractionné 76 entre le premier assemblage fractionné 25 et le noyau transitoire 16. Ici, l'étape de séparation 133 comprend une étape 133' de fractionnement de l'ensemble fractionné 76 en le premier assemblage fractionné 25 et le noyau transitoire 16.

Les moyens de séparation 75 sont agencés en amont des moyens de séparation 77. De façon analogue, l'étape de séparation 131 a lieu en amont de l'étape de séparation 133.

Dans ce septième mode de réalisation, on a M'=M4'+M2' et M4'=M1'.

Les autres moyens et étapes se déduisent *mutatis mutandis* de ceux et celles des modes de réalisation précédents.

### INSTALLATION ET PROCEDE SELON UN HUITIEME MODE DE REALISATION DE L'INVENTION

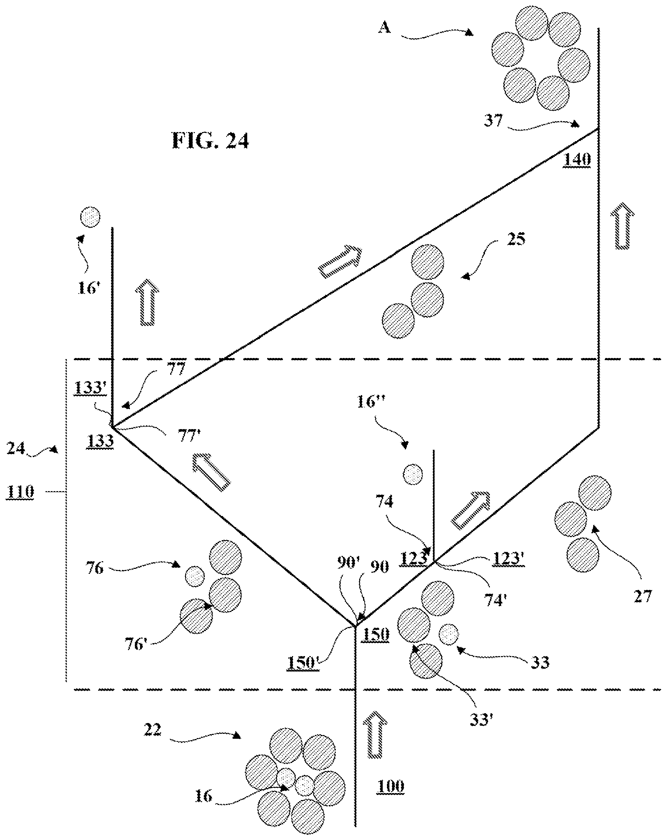

On va maintenant décrire une installation et un procédé selon le huitième mode de réalisation de l'invention en référence à la figure 24. Les éléments analogues à ceux des modes de réalisation précédents sont désignés par des références identiques.

Dans le huitième mode de réalisation, les moyens de séparation 24 de l'assemblage transitoire 22 entre le premier assemblage fractionné 25, le deuxième assemblage fractionné 27 et le noyau transitoire 16 comprennent des moyens 90 de séparation de l'assemblage transitoire 22 entre le premier ensemble fractionné 76 comprenant au moins une couche 76' constituée par M6'=3 éléments filaires métalliques 14 enroulés en hélice autour d'une première partie 16' du noyau transitoire, et le deuxième ensemble fractionné 33 comprenant au moins une couche 33' constituée par les M7'=3 éléments filaires métalliques 14 enroulés en hélice autour d'une deuxième partie 16" du noyau transitoire.

Le premier ensemble fractionné 76 est ici constitué de la couche 76' constituée des M6' éléments filaires métalliques 14 et de la première partie du noyau transitoire 16', les M6' éléments filaires métalliques étant enroulés en hélice autour de la première partie du noyau transitoire 16'. Le deuxième ensemble fractionné 33 est constitué de la couche 33' constituée des M7' éléments filaires métalliques 14 et de la deuxième partie du noyau transitoire 16", les M7' éléments filaires métalliques 14 étant enroulés en hélice autour de la deuxième partie du noyau transitoire 16".

Tout comme dans les modes de réalisation illustrés aux figures 21 et 22, la première partie du noyau transitoire 16' et la deuxième partie du noyau transitoire 16" constituent, en amont des moyens de séparation 24 de l'assemblage transitoire 22 et préalablement à l'étape 110 de séparation de l'assemblage transitoire 22, le noyau transitoire 16 dans son intégralité.

Ici, les moyens de séparation 90 comprennent des moyens 90' de fractionnement de l'assemblage transitoire 22 en le premier ensemble fractionné 76 et le deuxième ensemble fractionné 33. Ainsi, l'étape de séparation 110 de l'assemblage transitoire 22 entre le premier assemblage fractionné 25, le deuxième assemblage fractionné 27 et le noyau transitoire 16 comprend une étape 150 de séparation de l'assemblage transitoire 22 entre le premier ensemble fractionné 76 et le deuxième ensemble fractionné 33. Ici, l'étape de séparation 150 comprend une étape 150' de fractionnement de l'assemblage transitoire 22 en le premier ensemble fractionné 76 et le deuxième ensemble fractionné 33.

De façon analogue au septième mode de réalisation, les moyens de séparation 24 de l'assemblage transitoire 22 entre le premier assemblage fractionné 25, le deuxième assemblage fractionné 27 et le noyau transitoire 16 comprennent des moyens 77 de séparation du premier ensemble fractionné 76 entre le premier assemblage fractionné 25 et la première partie 16' du noyau transitoire. Ici, les moyens de séparation 77 comprennent des moyens 77' de fractionnement du premier ensemble fractionné 76 en le premier assemblage fractionné 25 et la première partie 16' du noyau transitoire. Ainsi, l'étape 110 de séparation de l'assemblage transitoire 22 entre le premier assemblage fractionné 25, le deuxième assemblage fractionné 27 et le noyau transitoire 16 comprend une étape 133 de séparation du premier ensemble fractionné 76 entre le premier assemblage fractionné 25 et la première partie 16' du noyau transitoire. Ici, l'étape de séparation 133 comprend une étape 133' de fractionnement du premier ensemble fractionné 76 entre le premier assemblage fractionné 25 et la première partie 16' du noyau transitoire.

De façon analogue au deuxième mode de réalisation, les moyens de séparation 24 de l'assemblage transitoire 22 entre le premier assemblage fractionné 25, le deuxième assemblage fractionné 27 et le noyau transitoire 16 comprennent des moyens 74 de séparation du deuxième ensemble fractionné 33 entre le deuxième assemblage fractionné 27 et la deuxième partie 16" du noyau transitoire. Ici, les moyens de séparation 74 comprennent des moyens 74' de fractionnement du deuxième ensemble fractionné 33 en le deuxième assemblage fractionné 27 et la deuxième partie 16" du noyau transitoire. Ainsi, l'étape 110 de séparation de l'assemblage transitoire 22 entre le premier assemblage fractionné 25, le deuxième assemblage fractionné 27 et le noyau transitoire 16 comprend une étape 123 de séparation du deuxième ensemble fractionné 33 entre le deuxième assemblage fractionné 27 et la deuxième partie 16" du noyau transitoire. Ici, l'étape de séparation 123 comprend une étape 123' de fractionnement du deuxième ensemble fractionné 33 entre le deuxième assemblage fractionné 27 et la deuxième partie 16" du noyau transitoire.

Les moyens de séparation 90 sont agencés en amont des moyens de séparation 77 et 74. De façon analogue, l'étape de séparation 150 a lieu en amont de chaque étape de séparation 133 et 123.

Dans ce huitième mode de réalisation, on a M'=M6'+M7', M6'=M1' et M7'=M2'.

Les autres moyens et étapes se déduisent *mutatis mutandis* de ceux et celles des modes de réalisation précédents.

### INSTALLATION ET PROCEDE SELON UN NEUVIEME MODE DE REALISATION DE L'INVENTION

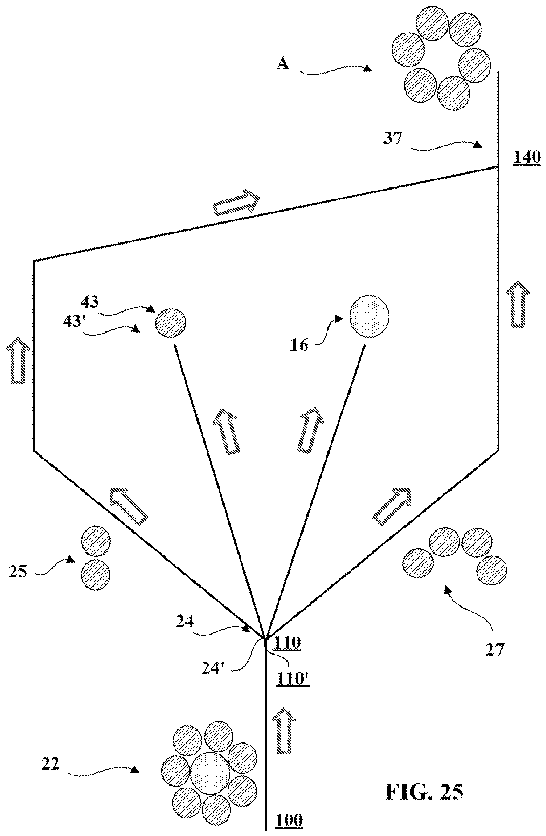

On va maintenant décrire une installation et un procédé selon le neuvième mode de réalisation de l'invention en référence à la figure 25. Les éléments analogues à ceux des modes de réalisation précédents sont désignés par des références identiques.

A la différence des premier, troisième et quatrième modes de réalisation, les moyens 24 de séparation de l'assemblage transitoire 22 entre le premier assemblage fractionné 25, le deuxième assemblage fractionné 27 et le noyau transitoire 16 ou un ou plusieurs ensembles comprenant le noyau transitoire 16 comprennent, en amont des moyens 37 de réassemblage, des moyens 24' de fractionnement de l'assemblage transitoire 22 entre le premier assemblage fractionné 25, le deuxième assemblage fractionné 27, le noyau transitoire 16 et enfin un ensemble fractionné 43 comprenant au moins une couche 43', ici constituée de la couche 43', constituée de M4'=1 élément filaire métallique enroulé en hélice, le M4'=1 élément filaire métallique étant issu de la couche 13 constituée des M' éléments filaires métalliques 14 de l'assemblage transitoire 22. De façon analogue, l'étape 110 de séparation de l'assemblage transitoire 22 entre le premier assemblage fractionné 25, le deuxième assemblage fractionné 27 et le noyau transitoire 22 ou un ou plusieurs ensembles comprenant le noyau transitoire 22 comprend, en amont de l'étape 140 de réassemblage, une étape 110' de fractionnement de l'assemblage transitoire 22 entre le premier assemblage fractionné 25, le deuxième assemblage fractionné 27, le noyau transitoire 16 et enfin l'ensemble fractionné 43.

### INSTALLATION ET PROCEDE SELON UN DIXIEME MODE DE REALISATION DE L'INVENTION

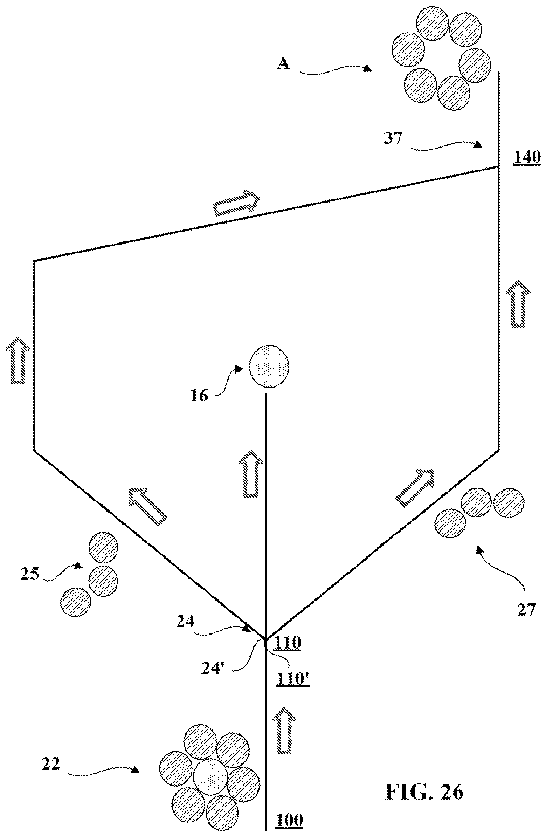

On va maintenant décrire une installation et un procédé selon le dixième mode de réalisation de l'invention en référence à la figure 26. Les éléments analogues à ceux des modes de réalisation précédents sont désignés par des références identiques.

A la différence du deuxième mode de réalisation, les moyens 24 de séparation de l'assemblage transitoire 22 entre le premier assemblage fractionné 25, le deuxième assemblage fractionné 27 et le noyau transitoire 22 ou un ou plusieurs ensembles comprenant le noyau transitoire 22 comprennent, en amont des moyens 37 réassemblage, des moyens 24' de fractionnement de l'assemblage transitoire 22 entre le premier assemblage fractionné 25, le deuxième assemblage fractionné 27 et le noyau transitoire 22. De façon analogue, l'étape 110 de séparation de l'assemblage transitoire 22 entre le premier assemblage fractionné 25, le deuxième assemblage fractionné 27 et le noyau transitoire 22 ou un ou plusieurs ensembles comprenant le noyau transitoire 22 comprend, en amont de l'étape 140 de réassemblage, une étape 110' de fractionnement de l'assemblage transitoire 22 entre le premier assemblage fractionné 25, le deuxième assemblage fractionné 27 et le noyau transitoire 22.

### INSTALLATION ET PROCEDE SELON UN ONZIEME MODE DE REALISATION DE L'INVENTION

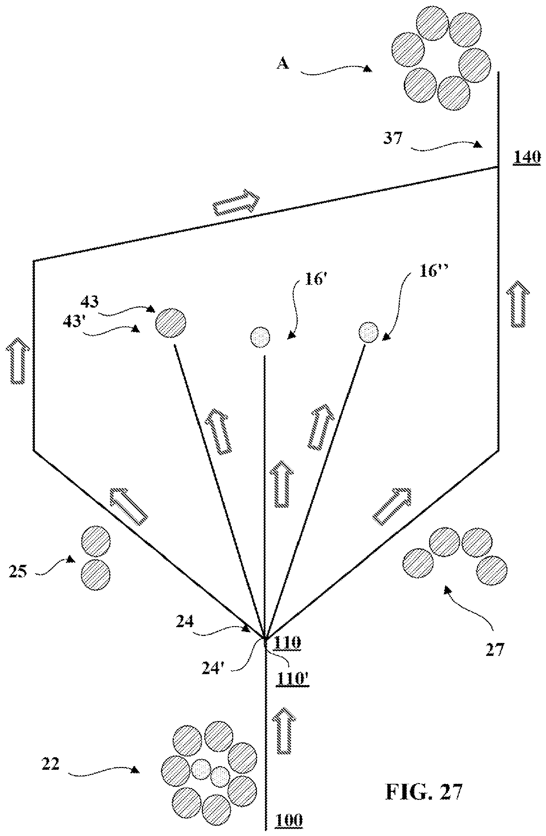

On va maintenant décrire une installation et un procédé selon le onzième mode de réalisation de l'invention en référence à la figure 27. Les éléments analogues à ceux des modes de réalisation précédents sont désignés par des références identiques.

A la différence des cinquième et sixièmes modes de réalisation, les moyens 24 de séparation de l'assemblage transitoire 22 entre le premier assemblage fractionné 25, le deuxième assemblage fractionné 27 et le noyau transitoire 22 ou un ou plusieurs ensembles comprenant le noyau transitoire 22 comprennent, en amont des moyens 37 de réassemblage, des moyens 24' de fractionnement de l'assemblage transitoire 22 entre le premier assemblage fractionné 25, le deuxième assemblage fractionné 27, une première partie 16' du noyau transitoire, une deuxième partie 16" du noyau transitoire et un ensemble fractionné 43 analogue à celui du neuvième mode de réalisation. La première partie 16' du noyau transitoire et la deuxième partie 16" du noyau transitoire constituent, en amont des moyens 24 de séparation de l'assemblage transitoire 22, le noyau transitoire 16. De façon analogue, l'étape 110 de séparation de l'assemblage transitoire 22 entre le premier assemblage fractionné 25, le deuxième assemblage fractionné 27 et le noyau transitoire 22 ou un ou plusieurs ensembles comprenant le noyau transitoire 22 comprend, en amont de l'étape 140 de réassemblage, une étape 110' de fractionnement de l'assemblage transitoire 22 entre le premier assemblage fractionné 25, le deuxième assemblage fractionné 27, la première partie 16' du noyau transitoire, la deuxième partie 16" du noyau transitoire et l'ensemble fractionné 43.

### INSTALLATION ET PROCEDE SELON UN DOUZIEME MODE DE REALISATION DE L'INVENTION

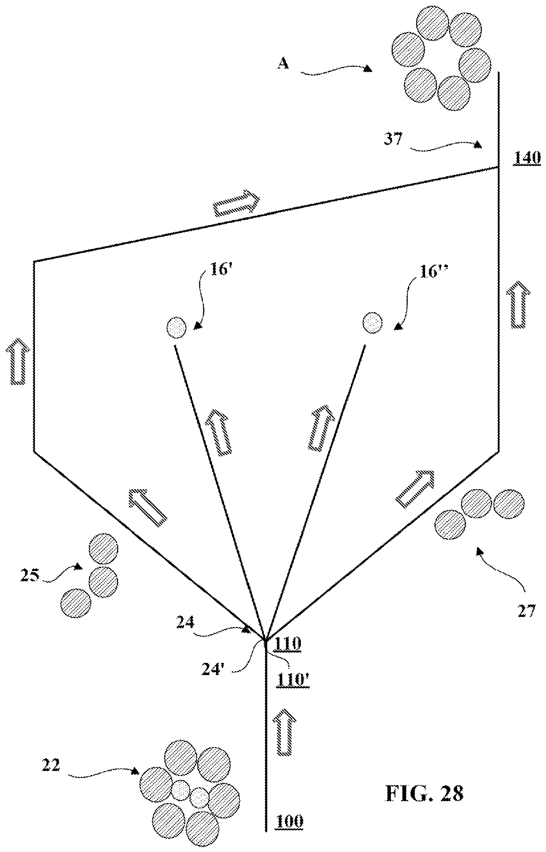

On va maintenant décrire une installation et un procédé selon le douzième mode de réalisation de l'invention en référence à la figure 28. Les éléments analogues à ceux des modes de réalisation précédents sont désignés par des références identiques.

A la différence du huitième mode de réalisation, les moyens 24 de séparation de l'assemblage transitoire 22 entre le premier assemblage fractionné 25, le deuxième assemblage fractionné 27 et le noyau transitoire 22 comprennent, en amont des moyens 37 de réassemblage, des moyens 24' de fractionnement de l'assemblage transitoire 22 entre le premier assemblage fractionné 25, le deuxième assemblage fractionné 27, une première partie 16' du noyau transitoire et une deuxième partie 16" du noyau transitoire. La première partie 16' du noyau transitoire et la deuxième partie 16" du noyau transitoire constituent, en amont des moyens 24 de séparation de l'assemblage transitoire 22, le noyau transitoire 16. De façon analogue, l'étape 110 de séparation de l'assemblage transitoire 22 entre le premier assemblage fractionné 25, le deuxième assemblage fractionné 27 et le noyau transitoire 22 comprend, en amont de l'étape 140 de réassemblage, une étape 110' de fractionnement de l'assemblage transitoire 22 entre le premier assemblage fractionné 25, le deuxième assemblage fractionné 27, la première partie 16' du noyau transitoire et la deuxième partie 16" du noyau transitoire.

L'invention ne se limite pas aux modes de réalisation décrits ci-dessus. En effet, on pourra tout à fait envisager d'exploiter, sans sortir du cadre de l'invention, un procédé et une installation dans lesquels l'étape et les moyens de séparation de l'assemblage transitoire entre au moins le premier assemblage fractionné, le deuxième assemblage fractionné et le noyau transitoire ou un ou plusieurs ensembles comprenant le noyau transitoire est une étape ou sont des moyens de séparation de l'assemblage transitoire entre le premier assemblage fractionné, le deuxième assemblage fractionné et un ensemble comprenant le noyau transitoire et des éléments filaires issus de l'assemblage transitoire. Dans de tels modes de réalisation, par exemple, l'étape de séparation 144 et les moyens de séparation 88 des figures 20 et 22 sont omises.

On pourra également envisager une étape de séparation, respectivement des moyens de séparation de l'assemblage transitoire en plus que les premier et deuxième assemblages fractionnés AF1, AF2 par exemple trois voire quatre assemblages fractionnés. Dans ces modes de réalisation, l'étape de réassemblage, respectivement les moyens de réassemblage pourront permettre le réassemblage de plus que les premier et deuxième assemblages fractionnés AF1, AF2, par exemple le réassemblage de trois voire quatre assemblages fractionnés.

## Revendications

1. Procédé de fabrication d'un assemblage final (A) comprenant au moins une couche (C) constituée de N'>1 éléments filaires métalliques (14) enroulés en hélice, le procédé comprenant :
- une étape (100) de fourniture d'un assemblage transitoire (22) comprenant au moins une couche (13) constituée de M'>1 éléments filaires métalliques (14) enroulés en hélice autour d'un noyau transitoire (16),
- une étape (110) de séparation de l'assemblage transitoire (22) entre au moins:
- un premier assemblage fractionné (25) comprenant au moins une couche (26) constituée de M1'≥1 élément(s) filaire(s) métallique(s) (14) enroulé(s) en hélice, le ou les M1' élément(s) filaire(s) métallique(s) (14) étant issu(s) de la couche (13) constituée de M'>1 éléments filaires métalliques (14) de l'assemblage transitoire (22),
- un deuxième assemblage fractionné (27) comprenant au moins une couche (28) constituée de M2'>1 éléments filaires métalliques (14) enroulés en hélice, les M2' éléments filaires métalliques (14) étant issus de la couche (13) constituée de M'>1 éléments filaires métalliques (14) de l'assemblage transitoire (22),
- le noyau transitoire (16) ou un ou plusieurs ensembles (83) comprenant le noyau transitoire (16),
**caractérisé en ce que** le procédé comprend une étape (140) de réassemblage d'au moins le premier assemblage fractionné (25) avec le deuxième assemblage fractionné (27) pour former la couche (C) constituée de N' éléments filaires métalliques (14) enroulés en hélice et dans lequel M'> 2.

2. Procédé selon la revendication 1, dans lequel l'étape (110) de séparation et l'étape (140) de réassemblage sont réalisées de sorte que M1'+M2'<M'.

3. Procédé selon la revendication 1 ou 2, dans lequel l'étape (110) de séparation de l'assemblage transitoire (22) entre au moins le premier assemblage fractionné (25), le deuxième assemblage fractionné (27) et le noyau transitoire (16) ou un ou plusieurs ensembles (83) comprenant le noyau transitoire (16) comprend, en amont de l'étape de réassemblage (140):
- une étape (120) de séparation de l'assemblage transitoire (22) entre :
- un ensemble précurseur (31) comprenant au moins une couche (31') constituée de M1">1 éléments filaires métalliques (14) enroulés en hélice, les M1" éléments filaires métalliques (14) étant issus de la couche (13) constituée de M'>1 éléments filaires métalliques (14) de l'assemblage transitoire (22),
- le deuxième assemblage fractionné (27), et
- le noyau transitoire (16) ou un ou plusieurs ensembles comprenant le noyau transitoire (16), de préférence le noyau transitoire (16)
- une étape (130) de séparation de l'ensemble précurseur (31) entre:
- un ensemble principal (P) comprenant au moins une couche (P') constituée de M3≥1 élément(s) filaire(s) métallique(s) (14) enroulé(s) en hélice, le ou les M3≥1 élément(s) filaire(s) métallique(s) (14) étant issu(s) de la couche (31') constituée des M1">1 éléments filaires métalliques (14) de l'ensemble précurseur (31), l'ensemble principal (P) formant le premier assemblage fractionné (25) et
- un ensemble complémentaire (K) comprenant au moins une couche (K') constituée de M3'≥1 élément(s) filaire(s) métallique(s) (14) enroulé(s) en hélice, le ou les M3'≥1 élément(s) filaire(s) métallique(s) (14) étant issu(s) de la couche (31') constituée des M1">1 éléments filaires métalliques (14) de l'ensemble précurseur (31).

4. Procédé selon la revendication 3, dans lequel l'étape (120) de séparation de l'assemblage transitoire (22) entre l'ensemble précurseur (31), le deuxième assemblage fractionné (27) et le noyau transitoire (16) ou un ou plusieurs ensembles comprenant le noyau transitoire (16), de préférence le noyau transitoire (16), comprend :
- une étape (131) de séparation de l'assemblage transitoire (22) entre:
- un ensemble fractionné (76) comprenant au moins une couche (76') constituée de M4'>1 éléments filaires métalliques (14) enroulés en hélice autour du noyau transitoire (16), les M4' éléments filaires métalliques (14) étant issus de la couche (13) constituée de M' éléments filaires métalliques (14) de l'assemblage transitoire (22), et
- le deuxième assemblage fractionné (27),
- une étape (133) de séparation de l'ensemble fractionné (76) entre:
- l'ensemble précurseur (31), et
- le noyau transitoire (16) ou un ou plusieurs ensembles comprenant le noyau transitoire (16), de préférence le noyau transitoire (16).

5. Procédé selon la revendication 3, dans lequel l'étape (120) de séparation de l'assemblage transitoire entre l'ensemble précurseur (31), le deuxième assemblage fractionné (27) et le noyau transitoire (16) ou un ou plusieurs ensembles comprenant le noyau transitoire (16), de préférence le noyau transitoire (16), comprend :
- une étape (122) de séparation de l'assemblage transitoire entre:
- un ensemble fractionné (33) comprenant au moins une couche (33') constituée de M4'>1 éléments filaires métalliques (14) enroulés en hélice autour du noyau transitoire (16), les M4' éléments filaires métalliques (14) étant issus de la couche (13) constituée de M'>1 éléments filaires métalliques (14) de l'assemblage transitoire (16), et
- l'ensemble précurseur (31), et
- une étape (124) de séparation de l'ensemble fractionné (33) entre:
- le deuxième assemblage fractionné (27), et
- le noyau transitoire (16) ou un ou plusieurs ensembles comprenant le noyau transitoire (16), de préférence le noyau transitoire (16).

6. Procédé selon la revendication 1 ou 2, dans lequel l'étape (110) de séparation de l'assemblage transitoire (22) entre au moins le premier assemblage fractionné (25), le deuxième assemblage fractionné (27) et le noyau transitoire (16) ou un ou plusieurs ensembles comprenant le noyau transitoire (16) comprend, en amont de l'étape de réassemblage (140):
- une étape (131) de séparation de l'assemblage transitoire (22) entre:
- un ensemble fractionné (76) comprenant au moins une couche (76') constituée de M4'>1 éléments filaires métalliques (14) enroulés en hélice autour du noyau transitoire (16), les M4' éléments filaires métalliques (14) étant issus de la couche (13) constituée de M' éléments filaires métalliques (14) de l'assemblage transitoire (16), et
- le deuxième assemblage fractionné (27),
- une étape (141) de séparation de l'ensemble fractionné (76) entre:
- le premier assemblage fractionné (25), et
- le noyau transitoire (16) ou un ou plusieurs ensembles comprenant le noyau transitoire (16), de préférence le noyau transitoire (16).

7. Procédé selon la revendication 1 ou 2, dans lequel l'étape (110) de séparation de l'assemblage transitoire (22) entre au moins le premier assemblage fractionné (25), le deuxième assemblage fractionné (27) et le noyau transitoire (16) ou un ou plusieurs ensembles comprenant le noyau transitoire (16) comprend, en amont de l'étape (140) de réassemblage, une étape (110') de fractionnement de l'assemblage transitoire (22) entre :
- le premier assemblage fractionné (25),
- le deuxième assemblage fractionné (27),
- le noyau transitoire (16) ou un ou plusieurs ensembles comprenant le noyau transitoire (16), de préférence le noyau transitoire (16) et
- un ensemble fractionné (43) comprenant au moins une couche (43') constituée de M4'≥1 élément(s) filaire(s) métallique(s) (14) enroulé(s) en hélice, le ou les M4' élément(s) filaire(s) métallique(s) (14) étant issu(s) de la couche (43') constituée de M' éléments filaires métalliques (14) de l'assemblage transitoire (22) ; avec l'étape de fractionnement d'un objet initial en plusieurs objets finaux signifiant que, durant cette étape de fractionnement, l'objet initial est divisé en les objets finaux et seulement ces objets finaux de sorte que l'objet initial se retrouve intégralement dans les objets finaux et ;
avec l'étape de séparation d'un objet initial entre plusieurs objets finaux signifiant que, pour obtenir ces objets finaux, au moins une étape de fractionnement est nécessaire .

8. Procédé selon la revendication 1, dans lequel l'étape (110) de séparation et l'étape (140) de réassemblage sont réalisées de sorte que M1'+M2'=M'.

9. Procédé selon la revendication 8, dans lequel l'étape (110) de séparation de l'assemblage transitoire (22) entre au moins le premier assemblage fractionné (25), le deuxième assemblage fractionné (27) et le noyau transitoire (16) ou un ou plusieurs ensembles comprenant le noyau transitoire (16) comprend, en amont de l'étape de réassemblage (140):
- une étape (131) de séparation de l'assemblage transitoire (21) entre:
- un ensemble fractionné (76) comprenant au moins une couche (76') constituée par M4'≥1 élément(s) filaire(s) métallique(s) (14) enroulé(s) en hélice autour du noyau transitoire (16), le ou les M4'≥1 élément(s) filaire(s) métallique(s) (14) étant issu(s) de la couche (13) constituée des M'>1 éléments filaires métalliques (14) de l'assemblage transitoire (22) et
- le deuxième assemblage fractionné (27),
- une étape (133) de séparation de l'ensemble fractionné (76) entre:
- le premier assemblage fractionné (25), et
- le noyau transitoire (16).

10. Procédé selon la revendication 8, dans lequel l'étape (110) de séparation de l'assemblage transitoire (22) entre au moins le premier assemblage fractionné (25), le deuxième assemblage fractionné (27) et le noyau transitoire (16) comprend :
- une étape (121) de séparation de l'assemblage transitoire (22) entre:
- un ensemble fractionné (33) comprenant au moins une couche (33') constituée de M4'>1 éléments filaires métalliques (14) enroulés en hélice autour du noyau transitoire (16), les M4'>1 éléments filaires métalliques (14) étant issus de la couche (13) constituée des M'>1 éléments filaires métalliques (14) de l'assemblage transitoire (22) et
- le premier assemblage fractionné (25)
- une étape (123) de séparation de l'ensemble fractionné (33) entre:
- le deuxième assemblage fractionné (27), et
- le noyau transitoire (16).

11. Procédé selon la revendication 8, dans lequel l'étape (110) de séparation de l'assemblage transitoire (22) entre au moins le premier assemblage fractionné (25), le deuxième assemblage fractionné (27) et le noyau transitoire (16) comprend, en amont de l'étape (140) de réassemblage, une étape (110') de fractionnement de l'assemblage transitoire (22) entre le premier assemblage fractionné (25), le deuxième assemblage fractionné (27) et le noyau transitoire (16).

12. Procédé selon l'une quelconque des revendications précédentes, dans lequel M' va de 4 à 18 et de préférence de 6 à 9.

13. Installation (10) de fabrication d'un assemblage final (A) comprenant au moins une couche (C) constituée de N'>1 éléments filaires métalliques (14) enroulés en hélice, l'installation (10) comprenant :
- des moyens (11) de fourniture d'un assemblage transitoire (22) comprenant au moins une couche (13) constituée de M'>1 éléments filaires métalliques (14) enroulés en hélice autour d'un noyau transitoire (16),
- des moyens (24) de séparation de l'assemblage transitoire (22) entre au moins:
- un premier assemblage fractionné (25) comprenant au moins une couche (26) constituée de M1'≥1 élément(s) filaire(s) métallique(s) (14) enroulé(s) en hélice, le ou les M1' élément(s) filaire(s) métallique(s) (14) étant issu(s) de la couche (13) constituée de M'>1 éléments filaires métalliques (14) de l'assemblage transitoire (22),
- un deuxième assemblage fractionné (27) comprenant au moins une couche (28) constituée de M2'>1 éléments filaires métalliques (14) enroulés en hélice, les M2' éléments filaires métalliques (14) étant issus de la couche (13) constituée de M'>1 éléments filaires métalliques (14) de l'assemblage transitoire (22),
- le noyau transitoire (16) ou un ou plusieurs ensembles comprenant le noyau transitoire (16),
**caractérisé en ce que** l'installation (10) comprend des moyens (37) de réassemblage d'au moins le premier assemblage fractionné (25) avec le deuxième assemblage fractionné (27) pour former la couche (C) constituée de N' éléments filaires métalliques (14) enroulés en hélice et dans lequel M'> 2.

## Patentansprüche

1. Verfahren zur Herstellung eines endgültigen Verbands (A), umfassend mindestens eine Lage (C), die aus N'>1 spiralförmig gewickelten Metalldrahtelementen (14) besteht, wobei das Verfahren umfasst:
- einen Schritt (100) des Bereitstellens eines Übergangsverbands (22), umfassend mindestens eine Lage (13), die aus M'>1 spiralförmig um einen Übergangskern (16) gewickelten Metalldrahtelementen (14) besteht,
- einen Schritt (110) des Trennens des Übergangsverbands (22) in mindestens:
- einen ersten fraktionierten Verband (25), umfassend mindestens eine Lage (26), die aus M1'≥1 Metalldrahtelement(en) (14) besteht, das(die) spiralförmig gewickelt ist(sind), wobei das oder die M1' Metalldrahtelement(e) (14) aus der aus M'>1 Metalldrahtelementen (14) bestehenden Lage (13) des Übergangsverbands (22) stammt(stammen),
- einen zweiten fraktionierten Verband (27), umfassend mindestens eine Lage (28), die aus M2'>1 spiralförmig gewickelten Metalldrahtelementen (14) besteht, wobei die M2' Metalldrahtelemente (14) aus der aus M'>1 Metalldrahtelementen (14) bestehenden Lage (13) des Übergangsverbands (22) stammen,
- den Übergangskern (16) oder eine oder mehrere Anordnungen (83), die den Übergangskern (16) umfassen, **dadurch gekennzeichnet, dass** das Verfahren einen Schritt (140) des Wiederzusammensetzens mindestens des ersten fraktionierten Verbands (25) mit dem zweiten fraktionierten Verband (27) umfasst, um die Lage (C) zu bilden, die aus N' spiralförmig gewickelten Metalldrahtelementen (14) besteht, und bei dem M'>2.

2. Verfahren nach Anspruch 1, bei dem der Schritt (110) des Trennens und der Schritt (140) des Wiederzusammensetzens so ausgeführt werden, dass M1'+M2'<M' .

3. Verfahren nach Anspruch 1 oder 2, bei dem der Schritt (110) des Trennens des Übergangsverbands (22) in mindestens den ersten fraktionierten Verband (25), den zweiten fraktionierten Verband (27) und den Übergangskern (16) oder eine oder mehrere Anordnungen (83), die den Übergangskern (16) umfassen, vor dem Schritt des Wiederzusammensetzens (140) umfasst:
- einen Schritt (120) des Trennens des Übergangsverbands (22) in:
- eine Vorläuferanordnung (31), umfassend mindestens eine Lage (31'), die aus M1">1 spiralförmig gewickelten Metalldrahtelementen (14) besteht, wobei die M1" Metalldrahtelemente (14) aus der aus M'>1 Metalldrahtelementen (14) bestehenden Lage (13) des Übergangsverbands (22) stammen,
- den zweiten fraktionierten Verband (27) und
- den Übergangskern (16) oder eine oder mehrere Anordnungen, die den Übergangskern (16) umfassen, bevorzugt den Übergangskern (16)
- einen Schritt (130) des Trennens der Vorläuferanordnung (31) in:
- eine Hauptanordnung (P), umfassend mindestens eine Lage (P'), die aus M3≥1 Metalldrahtelement(en) (14) besteht, das(die) spiralförmig gewickelt ist(sind), wobei das oder die M3≥1 Metalldrahtelement (e) (14) aus der aus M">1 Metalldrahtelementen (14) bestehenden Lage (31') der Vorläuferanordnung (31) stammt(stammen), wobei die Hauptanordnung (P) den ersten fraktionierten Verband (25) bildet, und
- eine komplementäre Anordnung (K), umfassend mindestens eine Lage (K'), die aus M3'≥1 Metalldrahtelement(en) (14) besteht, das(die) spiralförmig gewickelt ist(sind), wobei das oder die M3'≥1 Metalldrahtelement(e) (14) aus der aus M">1 Metalldrahtelementen (14) bestehenden Lage (31') der Vorläuferanordnung (31) stammt(stammen).

4. Verfahren nach Anspruch 3, bei dem der Schritt (120) des Trennens des Übergangsverbands (22) in die Vorläuferanordnung (31), den zweiten fraktionierten Verband (27) und den Übergangskern (16) oder eine oder mehrere Anordnungen, die den Übergangskern (16) umfassen, bevorzugt den Übergangskern (16), umfasst:
- einen Schritt (131) des Trennens des Übergangsverbands (22) in:
- eine fraktionierte Anordnung (76), umfassend mindestens eine Lage (76'), die aus M4'>1 spiralförmig um den Übergangskern (16) gewickelten Metalldrahtelementen (14) besteht, wobei die M4' Metalldrahtelemente (14) aus der aus M' Metalldrahtelementen (14) bestehenden Lage (13) des Übergangsverbands (22) stammen, und
- den zweiten fraktionierten Verband (27),
- einen Schritt (133) des Trennens der fraktionierten Anordnung (76) in:
- die Vorläuferanordnung (31) und
- den Übergangskern (16) oder eine oder mehrere Anordnungen, die den Übergangskern (16) umfassen, bevorzugt den Übergangskern (16).

5. Verfahren nach Anspruch 3, bei dem der Schritt (120) des Trennens des Übergangsverbands in die Vorläuferanordnung (31), den zweiten fraktionierten Verband (27) und den Übergangskern (16) oder eine oder mehrere Anordnungen, die den Übergangskern (16) umfassen, bevorzugt den Übergangskern (16), umfasst:
- einen Schritt (122) des Trennens des Übergangsverbands in:
- eine fraktionierte Anordnung (33), umfassend mindestens eine Lage (33'), die aus M4'>1 spiralförmig um den Übergangskern (16) gewickelten Metalldrahtelementen (14) besteht, wobei die M4' Metalldrahtelemente (14) aus der aus M'>1 Metalldrahtelementen (14) bestehenden Lage (13) des Übergangsverbands (16) stammen, und
- die Vorläuferanordnung (31) und
- einen Schritt (124) des Trennens der fraktionierten Anordnung (33) in:
- den zweiten fraktionierten Verband (27) und
- den Übergangskern (16) oder eine oder mehrere Anordnungen, die den Übergangskern (16) umfassen, bevorzugt den Übergangskern (16).

6. Verfahren nach Anspruch 1 oder 2, bei dem der Schritt (110) des Trennens des Übergangsverbands (22) in mindestens den ersten fraktionierten Verband (25), den zweiten fraktionierten Verband (27) und den Übergangskern (16) oder eine oder mehrere Anordnungen, die den Übergangskern (16) umfassen, vor dem Schritt des Wiederzusammensetzens (140) umfasst:
- einen Schritt (131) des Trennens des Übergangsverbands (22) in:
- eine fraktionierte Anordnung (76), umfassend mindestens eine Lage (76'), die aus M4'>1 spiralförmig um den Übergangskern (16) gewickelten Metalldrahtelementen (14) besteht, wobei die M4' Metalldrahtelemente (14) aus der aus M' Metalldrahtelementen (14) bestehenden Lage (13) des Übergangsverbands (16) stammen, und
- den zweiten fraktionierten Verband (27),
- einen Schritt (141) des Trennens der fraktionierten Anordnung (76) in:
- den ersten fraktionierten Verband (25) und
- den Übergangskern (16) oder eine oder mehrere Anordnungen, die den Übergangskern (16) umfassen, bevorzugt den Übergangskern (16).

7. Verfahren nach Anspruch 1 oder 2, bei dem der Schritt (110) des Trennens des Übergangsverbands (22) in mindestens den ersten fraktionierten Verband (25), den zweiten fraktionierten Verband (27) und den Übergangskern (16) oder eine oder mehrere Anordnungen, die den Übergangskern (16) umfassen, vor dem Schritt (140) des Wiederzusammensetzens einen Schritt (110') des Fraktionierens des Übergangsverbands (22) umfasst in:
- den ersten fraktionierten Verband (25),
- den zweiten fraktionierten Verband (27),
- den Übergangskern (16) oder eine oder mehrere Anordnungen, die den Übergangskern (16) umfassen, bevorzugt den Übergangskern (16), und
- eine fraktionierte Anordnung (43), umfassend mindestens eine Lage (43'), die aus M4'≥1 Metalldrahtelement(en) (14) besteht, das(die) spiralförmig gewickelt ist(sind), wobei das oder die M4' Metalldrahtelement(e) (14) aus der aus M' Metalldrahtelementen (14) bestehenden Lage (43') des Übergangsverbands (22) stammen; wobei der Schritt des Fraktionierens eines ursprünglichen Gegenstands in mehrere endgültige Gegenstände bedeutet, dass während dieses Schritts des Fraktionierens der ursprüngliche Gegenstand in die endgültigen Gegenstände und nur diese endgültigen Gegenstände geteilt wird, so dass sich der ursprüngliche Gegenstand vollständig in den endgültigen Gegenständen wiederfindet, und;
wobei der Schritt des Trennens eines ursprünglichen Gegenstands in mehrere endgültige Gegenstände bedeutet, dass zum Erhalten dieser endgültigen Gegenstände mindestens ein Schritt des Fraktionierens erforderlich ist.

8. Verfahren nach Anspruch 1, bei dem der Schritt (110) des Trennens und der Schritt (140) des Wiederzusammensetzens so ausgeführt werden, dass M1'+M2'=M'.

9. Verfahren nach Anspruch 8, bei dem der Schritt (110) des Trennens des Übergangsverbands (22) in mindestens den ersten fraktionierten Verband (25), den zweiten fraktionierten Verband (27) und den Übergangskern (16) oder eine oder mehrere Anordnungen, die den Übergangskern (16) umfassen, vor dem Schritt des Wiederzusammensetzens (140) umfasst:
- einen Schritt (131) des Trennens des Übergangsverbands (21) in:
- eine fraktionierte Anordnung (76), umfassend mindestens eine Lage (76'), die aus M4'≥1 Metalldrahtelement(en) (14) besteht, das(die) spiralförmig um den Übergangskern (16) gewickelt ist (sind), wobei das oder die M4'≥1 Metalldrahtelement (e) (14) aus der aus M'>1 Metalldrahtelementen (14) bestehenden Lage (13) des Übergangsverbands (22) stammt(stammen),
- den zweiten fraktionierten Verband (27),
- einen Schritt (133) des Trennens der fraktionierten Anordnung (76) in:
- den ersten fraktionierten Verband (25) und
- den Übergangskern (16).

10. Verfahren nach Anspruch 8, bei dem der Schritt (110) des Trennens des Übergangsverbands (22) in mindestens den ersten fraktionierten Verband (25), den zweiten fraktionierten Verband (27) und den Übergangskern (16) umfasst:
- einen Schritt (121) des Trennens des Übergangsverbands (22) in:
- eine fraktionierte Anordnung (33), umfassend mindestens eine Lage (33'), die aus M4'>1 spiralförmig um den Übergangskern (16) gewickelten Metalldrahtelementen (14) besteht, wobei die M4'>1 Metalldrahtelemente (14) aus der aus M'>1 Metalldrahtelementen (14) bestehenden Lage (13) des Übergangsverbands (22) stammen, und
- den ersten fraktionierten Verband (25),
- einen Schritt (123) des Trennens der fraktionierten Anordnung (33) in:
- den zweiten fraktionierten Verband (27) und
- den Übergangskern (16).

11. Verfahren nach Anspruch 8, bei dem der Schritt (110) des Trennens des Übergangsverbands (22) in mindestens den ersten fraktionierten Verband (25), den zweiten fraktionierten Verband (27) und den Übergangskern (16) vor dem Schritt (140) des Wiederzusammensetzens einen Schritt (110') des Fraktionierens des Übergangsverbands (22) in den ersten fraktionierten Verband (25), den zweiten fraktionierten Verband (27) und den Übergangskern (16) umfasst.

12. Verfahren nach einem der vorhergehenden Ansprüche, bei dem M' von 4 bis 18 und bevorzugt von 6 bis 9 reicht.

13. Anlage (10) zur Herstellung eines endgültigen Verbands (A), umfassend mindestens eine Lage (C), die aus N'>1 spiralförmig gewickelten Metalldrahtelementen (14) besteht, wobei die Anlage (10) umfasst:
- Mittel (11) zum Bereitstellen eines Übergangsverbands (22), umfassend mindestens eine Lage (13), die aus M'>1 spiralförmig um einen Übergangskern (16) gewickelten Metalldrahtelementen (14) besteht,
- Mittel (24) zum Trennen des Übergangsverbands (22) in mindestens:
- einen ersten fraktionierten Verband (25), umfassend mindestens eine Lage (26), die aus M1'≥1 Metalldrahtelement(en) (14) besteht, das(die) spiralförmig gewickelt ist(sind), wobei das oder die M1' Metalldrahtelement(e) (14) aus der aus M'>1 Metalldrahtelementen (14) bestehenden Lage (13) des Übergangsverbands (22) stammt(stammen),
- einen zweiten fraktionierten Verband (27), umfassend mindestens eine Lage (28), die aus M2'>1 spiralförmig gewickelten Metalldrahtelementen (14) besteht, wobei die M2' Metalldrahtelemente (14) aus der aus M'>1 Metalldrahtelementen (14) bestehenden Lage (13) des Übergangsverbands (22) stammen,
- den Übergangskern (16) oder eine oder mehrere Anordnungen, die den Übergangskern (16) umfassen, **dadurch gekennzeichnet, dass** die Anlage (10) Mittel (37) zum Wiederzusammensetzen mindestens des ersten fraktionierten Verbands (25) mit dem zweiten fraktionierten Verband (27) umfasst, um die Lage (C) zu bilden, die aus N' spiralförmig gewickelten Metalldrahtelementen (14) besteht, und bei dem M'>2.

## Claims

1. Method of manufacturing a final assembly (A) comprising at least one layer (C) made up of N'>1 helically wound metal filamentary elements (14), the method comprising:
- a step (100) of supplying a transitory assembly (22) comprising at least one layer (13) made up of M'>1 metal filamentary elements (14) helically wound around a transitory core (16),
- a step (110) of separating the transitory assembly (22) into at least:
- a first split assembly (25) comprising at least one layer (26) made up of M1'≥1 helically wound metal filamentary element(s) (14), the M1' metal filamentary element(s) (14) originating from the layer (13) made up of M'>1 metal filamentary elements (14) of the transitory assembly (22),
- a second split assembly (27) comprising at least one layer (28) made up of M2'>1 helically wound metal filamentary elements (14), the M2' metal filamentary elements (14) originating from the layer (13) made up of M'>1 metal filamentary elements (14) of the transitory assembly (22),
- the transitory core (16) or one or more ensembles (83) comprising the transitory core (16),
**characterized in that** the method comprises a step (140) of reassembling at least the first split assembly (25) with the second split assembly (27) to form the layer (C) made up of N' helically wound metal filamentary elements (14) and wherein M'>2.

2. Method according to Claim 1, wherein the separation step (110) and the reassembly step (140) are performed such that M1'+M2'<M'.

3. Method according to Claim 1 or 2, wherein the step (110) of separating the transitory assembly (22) into at least the first split assembly (25), the second split assembly (27) and the transitory core (16) or one or more ensembles (83) comprising the transitory core (16) comprises, upstream of the reassembly step (140):
- a step (120) of separating the transitory assembly (22) into:
- a precursor ensemble (31) comprising at least one layer (31') consisting of M1">1 helically wound metal filamentary elements (14), the M1" metal filamentary elements (14) originating from the layer (13) made up of M'>1 metal filamentary elements (14) of the transitory assembly (22),
- the second split assembly (27), and
- the transitory core (16) or one or more ensembles comprising the transitory core (16), preferably the transitory core (16),
- a step (130) of separating the precursor ensemble (31) into:
- a main ensemble (P) comprising at least one layer (P') made up of M3≥1 helically wound metal filamentary element(s) (14), the M3≥1 metal filamentary element(s) (14) originating from the layer (31') made up of the M1">1 metal filamentary elements (14) of the precursor ensemble (31), the main ensemble (P) forming the first split assembly (25) and
- an additional ensemble (K) comprising at least one layer (K') made up of M3'≥1 helically wound metal filamentary element(s) (14), the M3'≥1 metal filamentary element(s) (14) originating from the layer (31') made up of the M1">1 metal filamentary elements (14) of the precursor ensemble (31).

4. Method according to Claim 3, wherein the step (120) of separating the transitory assembly (22) into the precursor ensemble (31), the second split assembly (27) and the transitory core (16) or one or more ensembles comprising the transitory core (16), preferably the transitory core (16), comprises:
- a step (131) of separating the transitory assembly (22) into:
- a split ensemble (76) comprising at least one layer (76') made up of M4'>1 metal filamentary elements (14) helically wound around the transitory core (16), the M4' metal filamentary elements (14) originating from the layer (13) made up of M' metal filamentary elements (14) of the transitory assembly (22), and
- the second split assembly (27),
- a step (133) of separating the split ensemble (76) into:
- the precursor ensemble (31), and
- the transitory core (16) or one or more ensembles comprising the transitory core (16), preferably the transitory core (16).

5. Method according to Claim 3, wherein the step (120) of separating the transitory assembly into the precursor ensemble (31), the second split assembly (27) and the transitory core (16) or one or more ensembles comprising the transitory core (16), preferably the transitory core (16), comprises:
- a step (122) of separating the transitory assembly into:
- a split ensemble (33) comprising at least one layer (33') made up of M4'>1 metal filamentary elements (14) helically wound around the transitory core (16), the M4' metal filamentary elements (14) originating from the layer (13) made up of M'>1 metal filamentary elements (14) of the transitory assembly (16), and
- the precursor ensemble (31), and
- a step (124) of separating the split ensemble (33) into:
- the second split assembly (27), and
- the transitory core (16) or one or more ensembles comprising the transitory core (16), preferably the transitory core (16).

6. Method according to Claim 1 or 2, wherein the step (110) of separating the transitory assembly (22) into at least the first split assembly (25), the second split assembly (27) and the transitory core (16) or one or more ensembles comprising the transitory core (16) comprises, upstream of the reassembly step (140):
- a step (131) of separating the transitory assembly (22) into:
- a split ensemble (76) comprising at least one layer (76') made up of M4'>1 metal filamentary elements (14) helically wound around the transitory core (16), the M4' metal filamentary elements (14) originating from the layer (13) made up of M' metal filamentary elements (14) of the transitory assembly (16), and
- the second split assembly (27),
- a step (141) of separating the split ensemble (76) into:
- the first split assembly (25), and
- the transitory core (16) or one or more ensembles comprising the transitory core (16), preferably the transitory core (16).

7. Method according to Claim 1 or 2, wherein the step (110) of separating the transitory assembly (22) into at least the first split assembly (25), the second split assembly (27) and the transitory core (16) or one or more ensembles comprising the transitory core (16) comprises, upstream of the reassembly step (140), a step (110') of splitting the transitory assembly (22) into:
- the first split assembly (25),
- the second split assembly (27),
- the transitory core (16) or one or more ensembles comprising the transitory core (16), preferably the transitory core (16), and
- a split ensemble (43) comprising at least one layer (43') made up of M4' ≥1 helically wound metal filamentary element (s) (14), the M4' metal filamentary element(s) (14) originating from the layer (43') made up of M' metal filamentary elements (14) of the transitory assembly (22).

8. Method according to Claim 1, wherein the separation step (110) and the reassembly step (140) are performed such that M1'+M2'=M'.

9. Method according to Claim 8, wherein the step (110) of separating the transitory assembly (22) into at least the first split assembly (25), the second split assembly (27) and the transitory core (16) or one or more ensembles comprising the transitory core (16) comprises, upstream of the reassembly step (140):
- a step (131) of separating the transitory assembly (21) into:
- a split ensemble (76) comprising at least one layer (76') made up of M4'≥1 metal filamentary element(s) (14) helically wound around the transitory core (16), the M4'≥1 metal filamentary element(s) (14) originating from the layer (13) made up of the M'>1 metal filamentary elements (14) of the transitory assembly (22) and
- the second split assembly (27),
- a step (133) of separating the split ensemble (76) into:
- the first split assembly (25), and
- the transitory core (16).

10. Method according to Claim 8, wherein the step (110) of separating the transitory assembly (22) into at least the first split assembly (25), the second split assembly (27) and the transitory core (16) comprises:
- a step (121) of separating the transitory assembly (22) into:
- a split ensemble (33) comprising at least one layer (33') made up of M4'>1 metal filamentary elements (14) helically wound around the transitory core (16), the M4'>1 metal filamentary elements (14) originating from the layer (13) made up of the M'>1 metal filamentary elements (14) of the transitory assembly (22) and
- the first split assembly (25),
- a step (123) of separating the split ensemble (33) into:
- the second split assembly (27), and
- the transitory core (16).

11. Method according to Claim 8, wherein the step (110) of separating the transitory assembly (22) into at least the first split assembly (25), the second split assembly (27) and the transitory core (16) comprises, upstream of the reassembly step (140), a step (110') of splitting of the transitory assembly (22) into the first split assembly (25), the second split assembly (27) and the transitory core (16).

12. Method according to any one of the preceding claims, wherein M' ranges from 4 to 18 and preferably from 6 to 9.

13. Installation (10) for manufacturing a final assembly (A) comprising at least one layer (C) made up of N'>1 helically wound metal filamentary elements (14), the installation (10) comprising:
- means (11) for supplying a transitory assembly (22) comprising at least one layer (13) made up of M'>1 metal filamentary elements (14) helically wound around a transitory core (16),
- means (24) for separating the transitory assembly (22) into at least:
- a first split assembly (25) comprising at least one layer (26) made up of M1'≥1 helically wound metal filamentary element(s) (14), the M1' metal filamentary element(s) (14) originating from the layer (13) made up of M'>1 metal filamentary elements (14) of the transitory assembly (22),
- a second split assembly (27) comprising at least one layer (28) made up of M2'>1 helically wound metal filamentary elements (14), the M2' metal filamentary elements (14) originating from the layer (13) made up of M'>1 metal filamentary elements (14) of the transitory assembly (22),
- the transitory core (16) or one or more ensembles comprising the transitory core (16),
**characterized in that** the installation (10) comprises means (37) for reassembling at least the first split assembly (25) with the second split assembly (27) to form the layer (C) made up of N' helically wound metal filamentary elements (14) and wherein M'>2.
